# EUROPEAN PATENT APPLICATION

(11) **EP 4 132 141 A1**
(43) Date of publication of application: **08.02.2023**
(21) Application number: 20932720.4
(22) Date of filing: 24.04.2020
(51) Int. Cl.: H04W 72/02

(54) **DEVICE-TO-DEVICE BASED RESOURCE DETERMINATION METHOD, AND DEVICE**

(71) Applicant: Huawei Technologies Co., Ltd., Shenzhen, Guangdong 518129 (CN)
(72) Inventor: LIU, Rongkuan, Shenzhen, Guangdong 518129 (CN); DONG, Lei, Shenzhen, Guangdong 518129 (CN); LU, Lei, Shenzhen, Guangdong 518129 (CN)
(74) Representative: Maiwald GmbH
(86) International application number: PCT/CN2020/086836
(87) International publication number: WO 2021/212514

(57) **Abstract**

Embodiments of this application provide a device-to-device based resource determining method and device, which may be applied to a D2D system (for example, a system such as an internet of vehicles, V2X, or V2V). The method includes: receiving first information sent by a first terminal device, where the first information indicates a second terminal device to send assistance information; and sending the assistance information to the first terminal device, where the assistance information is used to assist the first terminal device in selecting a resource for data transmission. The second terminal device assists the first terminal device in determining the resource for data transmission, instead of completely determining, by a terminal device that sends data, the resource for data transmission. This may avoid a case in which different terminal devices send data by using a same resource, avoid signal collision and mutual interference in a data transmission process, and ensure successful data transmission of the different terminal devices. From a perspective of resource multiplexing, the resource may be appropriately used, and resource utilization efficiency may be improved.

## Description

### TECHNICAL FIELD

This application relates to the field of communication technologies, and in particular, to a device-to-device based resource determining method and device.

### BACKGROUND

With development of communication technologies, a device-to-device (device-to-device, D2D) technology has been applied and developed. The D2D technology may reduce load of a cellular network, reduce battery power consumption of user equipment, and improve a data rate.

In the conventional technology, in the D2D technology, a terminal device may obtain a resource in a sensing (sensing) manner, and further send data to another terminal device by using the obtained resource.

However, in the conventional technology, different terminal devices each determine a resource, and transmit data by using the resource. To be specific, a terminal device determines a resource, and then transmits data to another terminal device by using the resource determined by the terminal device. Therefore, the terminal device cannot determine whether the resource is used by another terminal device. Consequently, the used resource may be occupied, or the resource may not be appropriately used.

### SUMMARY

Embodiments of this application provide a device-to-device based resource determining method and device, which may be applied to a D2D technology, for example, applied to communication between terminal devices, and applied to an internet of vehicles, for example, vehicle-to-everything (vehicle-to-everything, V2X) communication, a long term evolution-vehicle (long term evolution-vehicle, LTE-V), or vehicle-to-vehicle (vehicle-to-vehicle, V2V) communication, or may be used in fields such as intelligent driving and intelligent connected vehicles.

It should be understood that the method in embodiments of this application may be performed by a communication apparatus. The communication apparatus may be an entire computing device, or may be some components in the computing device, for example, a chip related to a wireless communication function, for example, a system chip or a communication chip. The system chip is also referred to as a system-on-a-chip, or is referred to as a SoC (System-on-a-Chip) chip. Specifically, the communication apparatus may be a terminal such as a smartphone, or may be a system chip or a communication chip that can be disposed in the terminal. The communication chip may include one or more of a radio frequency processing chip and a baseband processing chip. The baseband processing chip is also sometimes referred to as a modem (modem) or a baseband processor. In a physical implementation, the communication chip may be integrated into the SoC chip, or may not be integrated into the SoC chip. For example, the baseband processing chip is integrated into the SoC chip, but the radio frequency processing chip is not integrated into the SoC chip.

According to a first aspect, this application provides a device-to-device based resource determining method. The method includes:
receiving first information sent by a first terminal device, where the first information indicates a second terminal device to send assistance information; and
sending the assistance information to the first terminal device, where the assistance information is used to assist the first terminal device in selecting a resource for data transmission.

In the foregoing process, when the first terminal device needs to send data, the second terminal device assists the first terminal device in determining the resource for data transmission. To be specific, another terminal device (a terminal device that receives data or a terminal device that is not the terminal device that receives data) assists the first terminal device in determining the resource for data transmission, instead of completely determining, by a terminal device that sends data, the resource for data transmission. This may avoid a case in which different terminal devices send data by using a same resource, avoid signal collision and mutual interference in a data transmission process, and ensure successful data transmission of the different terminal devices. In addition, from a perspective of resource multiplexing, the resource may be appropriately used, and resource utilization efficiency may be improved.

According to a second aspect, this application provides a device-to-device based resource determining method. The method includes:
sending first information to a second terminal device, where the first information indicates the second terminal device to send assistance information;
receiving the assistance information sent by the second terminal device, where the assistance information is used to assist a first terminal device in selecting a resource for data transmission; and
determining the resource for data transmission based on the assistance information.

In the foregoing process, when the first terminal device needs to send data, the second terminal device assists the first terminal device in determining the resource for data transmission. To be specific, another terminal device (a terminal device that receives data or a terminal device that is not the terminal device that receives data) assists the first terminal device in determining the resource for data transmission, instead of completely determining, by a terminal device that sends data, the resource for data transmission. This may avoid a case in which different terminal devices send data by using a same resource, avoid signal collision and mutual interference in a data transmission process, and ensure successful data transmission of the different terminal devices. In addition, from a perspective of resource multiplexing, the resource may be appropriately used, and resource utilization efficiency may be improved.

According to a third aspect, this application provides a device-to-device based resource determining method. The method includes:
determining a resource for data transmission; and
sending scheduling information to a first terminal device, where the scheduling information indicates the resource used by the first terminal device to perform data transmission.

In the foregoing process, when the first terminal device needs to send data, a second terminal device schedules the resource for the first terminal device. To be specific, another terminal device (a terminal device that receives data or a terminal device that is not the terminal device that receives data) schedules, for the first terminal device, the resource for data transmission, instead of completely determining, by a terminal device that sends data, the resource for data transmission, and the resource indicated by the second terminal device may directly exclude a resource occupied by another hidden terminal. This may avoid a case in which different terminal devices send data by using a same resource, avoid signal collision and mutual interference in a data transmission process, and ensure successful data transmission of the different terminal devices. In addition, from a perspective of resource multiplexing, the resource may be appropriately used, and resource utilization efficiency may be improved.

According to a fourth aspect, this application provides a device-to-device based resource determining method. The method includes:
receiving scheduling information sent by a second terminal device, where the scheduling information indicates a resource used by a first terminal device to perform data transmission; and
sending data based on the resource for data transmission.

In the foregoing process, when the first terminal device needs to send data, the second terminal device schedules the resource for the first terminal device. To be specific, another terminal device (a terminal device that receives data or a terminal device that is not the terminal device that receives data) schedules, for the first terminal device, the resource for data transmission, instead of completely determining, by a terminal device that sends data, the resource for data transmission, and the resource indicated by the second terminal device may directly exclude a resource occupied by another hidden terminal. This may avoid a case in which different terminal devices send data by using a same resource, avoid signal collision and mutual interference in a data transmission process, and ensure successful data transmission of the different terminal devices. In addition, from a perspective of resource multiplexing, the resource may be appropriately used, and resource utilization efficiency may be improved.

According to a fifth aspect, this application provides a communication apparatus. The communication apparatus includes:
a receiving unit, configured to receive first information sent by a first terminal device, where the first information indicates a second terminal device to send assistance information; and
a sending unit, configured to send the assistance information to the first terminal device, where the assistance information is used to assist the first terminal device in selecting a resource for data transmission.

According to a sixth aspect, this application provides a communication apparatus. The communication apparatus includes:
a sending unit, configured to send first information to a second terminal device, where the first information indicates the second terminal device to send assistance information;
a receiving unit, configured to receive the assistance information sent by the second terminal device, where the assistance information is used to assist a first terminal device in selecting a resource for data transmission; and
a processing unit, configured to determine the resource for data transmission based on the assistance information.

According to a seventh aspect, this application provides a communication apparatus. The communication apparatus includes:
a processing unit, configured to determine a resource for data transmission; and
a sending unit, configured to send scheduling information to a first terminal device, where the scheduling information indicates the resource used by the first terminal device to perform data transmission.

According to an eighth aspect, this application provides a communication apparatus. The communication apparatus includes:
a receiving unit, configured to receive scheduling information sent by a second terminal device, where the scheduling information indicates a resource used by a first terminal device to perform data transmission; and
a sending unit, configured to send data based on the resource for data transmission.

According to a ninth aspect, this application provides a communication apparatus. The apparatus includes a processor and a memory, the memory stores a computer program, and the processor executes the computer program stored in the memory, to enable the apparatus to perform the method according to any one of the first aspect and the possible implementations of the first aspect, perform the method according to any one of the second aspect and the possible implementations of the second aspect, perform the method according to any one of the third aspect and the possible implementations of the third aspect, or perform the method according to any one of the fourth aspect and the possible implementations of the fourth aspect.

According to a tenth aspect, this application provides a communication apparatus, including a processor and an interface circuit.

The interface circuit is configured to: receive code instructions and transmit the code instructions to the processor.

The processor is configured to run the code instructions to perform the method according to any one of the first aspect and the possible implementations of the first aspect, perform the method according to any one of the second aspect and the possible implementations of the second aspect, perform the method according to any one of the third aspect and the possible implementations of the third aspect, or perform the method according to any one of the fourth aspect and the possible implementations of the fourth aspect.

According to an eleventh aspect, this application provides a readable storage medium, configured to store instructions. When the instructions are executed, the method according to any one of the first aspect and the possible implementations of the first aspect, the method according to any one of the second aspect and the possible implementations of the second aspect, the method according to any one of the third aspect and the possible implementations of the third aspect, or the method according to any one of the fourth aspect and the possible implementations of the fourth aspect is implemented.

According to a twelfth aspect, this application provides a computer program product. When program code included in the computer program product is executed by a processor in a terminal, the method according to any one of the first aspect and the possible implementations of the first aspect, the method according to any one of the second aspect and the possible implementations of the second aspect, the method according to any one of the third aspect and the possible implementations of the third aspect, or the method according to any one of the fourth aspect and the possible implementations of the fourth aspect is implemented.

According to a thirteenth aspect, this application provides a processor. The processor is configured to perform the method according to any one of the first aspect and the possible implementations of the first aspect, the method according to any one of the second aspect and the possible implementations of the second aspect, perform the method according to any one of the third aspect and the possible implementations of the third aspect, or perform the method according to any one of the fourth aspect and the possible implementations of the fourth aspect.

According to a fourteenth aspect, this application provides a chip used in a terminal device. The chip is configured to perform the method according to any one of the first aspect and the possible implementations of the first aspect, perform the method according to any one of the second aspect and the possible implementations of the second aspect, perform the method according to any one of the third aspect and the possible implementations of the third aspect, or perform the method according to any one of the fourth aspect and the possible implementations of the fourth aspect.

According to a fifteenth aspect, this application provides a communication system. The communication system includes the communication apparatus according to any one of the fifth aspect and the possible implementations of the fifth aspect, the communication apparatus according to any one of the sixth aspect and the possible implementations of the sixth aspect, the communication apparatus according to any one of the seventh aspect and the possible implementations of the seventh aspect, and the communication apparatus according to any one of the eighth aspect and the possible implementations of the eighth aspect.

It should be understood that, for details and technical effects of the technical solutions in any one of the fifth aspect to the fifteenth aspect or the possible implementations thereof, refer to the details and technical effects of the technical solutions in any one of the first aspect or the possible implementations of the first aspect, refer to details and technical effects of the technical solutions in any one of the second aspect or the possible implementations of the second aspect, refer to details and technical effects of the technical solutions in any one of the third aspect or the possible implementations of the third aspect, or refer to details and technical effects of the technical solutions in any one of the fourth aspect or the possible implementations of the fourth aspect. Details are not described again.

### BRIEF DESCRIPTION OF DRAWINGS

FIG. 1 is a schematic diagram of a structure of a communication system according to an embodiment of this application;
FIG. 2 is a schematic diagram of a structure of another communication system according to an embodiment of this application;
FIG. 3 is a schematic diagram of an application scenario according to an embodiment of this application;
FIG. 4 is a schematic diagram of another application scenario according to an embodiment of this application;
FIG. 5 is a schematic diagram of another application scenario according to an embodiment of this application;
FIG. 6 is a schematic diagram of another application scenario according to an embodiment of this application;
FIG. 7 is a schematic diagram of a structure of another communication system according to an embodiment of this application;
FIG. 8 is a schematic diagram of a structure of another communication system according to an embodiment of this application;
FIG. 9 is a schematic flowchart of a device-to-device based resource determining method according to an embodiment of this application;
FIG. 10 is a schematic diagram of candidate resource sets according to an embodiment of this application;
FIG. 11 is a schematic flowchart of selecting a resource through sensing according to an embodiment of this application;
FIG. 12 is a signaling diagram of a device-to-device based resource determining method according to an embodiment of this application;
FIG. 13 a signaling diagram of another device-to-device based resource determining method according to an embodiment of this application;
FIG. 14 a signaling diagram of another device-to-device based resource determining method according to an embodiment of this application;
FIG. 15 a signaling diagram of another device-to-device based resource determining method according to an embodiment of this application;
FIG. 16 a signaling diagram of another device-to-device based resource determining method according to an embodiment of this application;
FIG. 17 is a signaling diagram of another device-to-device based resource determining method according to an embodiment of this application;
FIG. 18 is a signaling diagram of another device-to-device based resource determining method according to an embodiment of this application;
FIG. 19 is a signaling diagram of another device-to-device based resource determining method according to an embodiment of this application;
FIG. 20 is a signaling diagram of another device-to-device based resource determining method according to an embodiment of this application;
FIG. 21 is a schematic flowchart of another device-to-device based resource determining method according to an embodiment of this application;
FIG. 22 is a schematic flowchart of another device-to-device based resource determining method according to an embodiment of this application;
FIG. 23 is a signaling diagram of another device-to-device based resource determining method according to an embodiment of this application;
FIG. 24 is a signaling diagram of another device-to-device based resource determining method according to an embodiment of this application;
FIG. 25 is a signaling diagram of another device-to-device based resource determining method according to an embodiment of this application;
FIG. 26 is a signaling diagram of another device-to-device based resource determining method according to an embodiment of this application;
FIG. 27 is a signaling diagram of another device-to-device based resource determining method according to an embodiment of this application;
FIG. 28 is a signaling diagram of another device-to-device based resource determining method according to an embodiment of this application;
FIG. 29 is a signaling diagram of another device-to-device based resource determining method according to an embodiment of this application;
FIG. 30 is a schematic flowchart of another device-to-device based resource determining method according to an embodiment of this application;
FIG. 31 is a schematic diagram of a structure of a communication apparatus according to an embodiment of this application;
FIG. 32 is a schematic diagram of a structure of another communication apparatus according to an embodiment of this application;
FIG. 33 is a schematic diagram of a structure of another communication apparatus according to an embodiment of this application;
FIG. 34 is a schematic diagram of a structure of another communication apparatus according to an embodiment of this application;
FIG. 35 is a schematic diagram of a structure of another communication apparatus according to an embodiment of this application;
FIG. 36 is a schematic diagram of a structure of another communication apparatus according to an embodiment of this application;
FIG. 37 is a schematic diagram of a structure of another communication apparatus according to an embodiment of this application; and
FIG. 38 is a schematic diagram of a structure of another communication apparatus according to an embodiment of this application.

### DESCRIPTION OF EMBODIMENTS

The following further describes the technical solutions provided in this application with reference to the accompanying drawings and embodiments. It should be understood that a system structure and an application scenario that are provided in embodiments of this application are mainly used to describe possible implementations of the technical solutions of this application, and should not be construed as a unique limitation on the technical solutions of this application. A person of ordinary skill in the art may learn that the technical solutions provided in this application are also applicable to a similar technical problem as a system structure evolves and a new service scenario emerges.

It should be understood that embodiments of this application provide a device-to-device based resource determining method and device, to enable a terminal device to determine whether a resource is used by another terminal device, to ensure appropriate resource utilization.

Because problem-resolving principles of the technical solutions are the same or similar, in the following descriptions of specific embodiments, some repeated parts may not be described herein, but it should be considered that the specific embodiments are mutually referenced and may be combined with each other.

Embodiments of this application are applied to a 5^{th} generation (5^{th} generation, 5G) mobile communication network communication system or another system that may appear in the future, or may be applied to another communication system, for example, a wireless local area network (wireless local area network, WLAN) communication system, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS), a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), or a worldwide interoperability for microwave access (worldwide interoperability for microwave access, WiMAX) communication system.

The following describes some terms in this application, to facilitate understanding of a person skilled in the art. It should be noted that, when solutions in embodiments of this application are applied to the 5G system, an existing system, or another system that may appear in the future, names of a network device and the terminal device may change, but this does not affect implementation of the solutions in embodiments of this application.
(1) The terminal device is a device that has a wireless transceiver function. The terminal device may be deployed on land, including being deployed indoor, outdoor, handheld, wearable, or in-vehicle; or may be deployed on a water surface (for example, on a ship); or may be deployed in the air (for example, on an airplane, a balloon, or a satellite).

The terminal device may be specifically but is not limited to a mobile, a mobile phone (mobile phone), a tablet computer (tablet computer), a laptop computer (laptop computer), a computer with the wireless transceiver function, a virtual reality (virtual reality, VR) terminal device, an augmented reality (augmented reality, AR) terminal device, a wireless terminal in industrial control (industrial control), a vehicle-mounted terminal device, a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a wearable terminal device (a smart watch, a smart band, a smart helmet, smart glasses, or the like), and other communication devices with wireless access capabilities, such as various internet of things devices, including a smart home device (a smart electric meter, a smart home appliance, or the like), a smart vehicle, and the like. An application scenario is not limited in embodiments of this application.

The terminal device may also be referred to as a terminal, user equipment (user equipment, UE), a mobile station (mobile station, MS) or subscriber unit (subscriber unit, SU), an access terminal device, a vehicle-mounted terminal, an industrial control terminal, a UE unit, a UE station, a mobile station, a remote station, a remote terminal device, a mobile device, a UE terminal device, a terminal, a wireless communication device, a UE agent, a UE apparatus, or the like. In descriptions of embodiments of this application, the terminal device and the UE are not distinguished. The terminal device may be fixed or mobile.

(2) The network device may be any device that has the wireless transceiver function.

The network device may be specifically but is not limited to an evolved NodeB (NodeB, eNB, or e-NodeB, evolved NodeB) in LTE, a base station (gNodeB or gNB) or a transmission reception point (transmission receiving point/transmission reception point, TRP) in NR, a radio access network (radio access network, RAN) device, a base station that subsequently evolves in 3GPP, an access node in a Wi-Fi system, a wireless relay node, a wireless backhaul node, or the like. The network device may alternatively be a radio controller, a centralized unit (centralized unit, CU), and/or a distributed unit (distributed unit, DU) in a cloud radio access network (cloud radio access network, CRAN) scenario. The network device may alternatively be a server, a wearable device, a vehicle-mounted device, or the like.

The base station may be a macro base station, a micro base station, a pico base station, a small cell, a relay station, a balloon station, or the like. A plurality of base stations may support networks using a same technology mentioned above, or may support networks using different technologies mentioned above. The base station may include one or more co-site or non-co-site TRPs.

When there are a plurality of network devices, the plurality of network devices may be network devices of a same type, or may be network devices of different types. The network device may communicate with the terminal device, or may communicate with the terminal device by using a relay station. The terminal device may communicate with a plurality of network devices using different technologies. For example, the terminal device may communicate with a network device supporting an LTE network, or may communicate with a network device supporting a 5G network, or may support dual connections to the network device supporting the LTE network and the network device supporting the 5G network.

(3) "A plurality of" indicates two or more, and another quantifier is similar to this. The term "and/or" describes an association relationship for describing associated objects and represents that three relationships may exist. For example, A and/or B may represent the following three cases: Only A exists, both A and B exist, and only B exists. The character "/" usually indicates an "or" relationship between the associated objects.

(4) "Correspondence" may refer to an association relationship or a binding relationship, and that A corresponds B refers to an association relationship or a binding relationship between A and B.

It should be noted that the nouns or terms used in embodiments of this application may be mutually referenced, and details are not described again.

With development of communication technologies, a user has an increasingly high requirement on high data rate, and the user has a requirement for communicating with a neighboring device. Therefore, a D2D technology emerges due to application, and the D2D technology has been applied and developed. The D2D technology may reduce load of a cellular network, reduce battery power consumption of the user equipment, and improve a data rate. The D2D technology allows a plurality of terminal devices that support a D2D function to perform direct discovery and direct communication regardless of whether there is a network infrastructure.

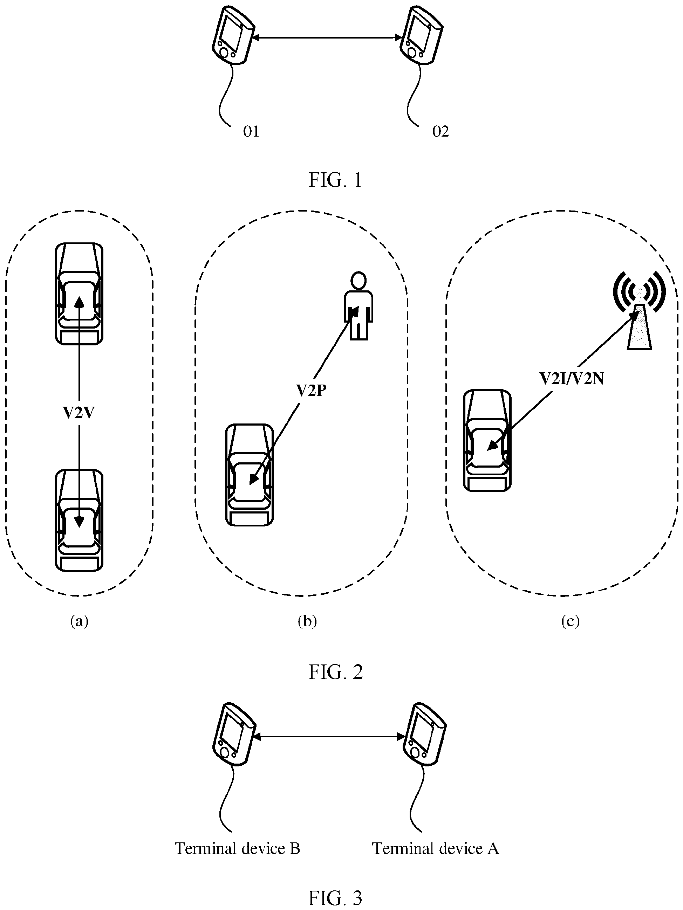

FIG. 1 is a schematic diagram of a structure of a communication system according to an embodiment of this application. As shown in FIG. 1, in a D2D technology, a terminal device 01 communicates with a terminal device 02. The terminal device 01 may provide the terminal device 02 with a resource for data transmission; or the terminal device 02 may provide the terminal device 0 1 with a resource for data transmission.

5G NR D2D further develops with promotion of the D2D technology and a 5G new radio (new radio, NR) technology, to support a lower transmission latency, more reliable communication transmission, a higher throughput, and better user experience, to meet requirements of a wider range of application scenarios.

For example, FIG. 2 is a schematic diagram of a structure of another communication system according to an embodiment of this application. A D2D technology may be applied to an internet of vehicles. Based on the D2D technology, in a network of a long term evolution (long term evolution, LTE) technology proposed in the 3^{rd} generation partnership project (the 3^{rd} generation partnership project, 3GPP), a vehicle-to-everything (vehicle-to-everything, V2X) communication technology is proposed. The V2X communication technology refers to communication between a vehicle and anything outside the vehicle, and includes vehicle-to-vehicle (vehicle-to-vehicle, V2V) communication, vehicle-to-pedestrian (vehicle-to-pedestrian, V2P) communication, vehicle-to-infrastructure (vehicle-to-infrastructure, V2I) communication, and vehicle-to-network (vehicle-to-network, V2N) communication, (a) in FIG. 2 shows V2V, (b) in FIG. 2 shows V2P, and (c) in FIG. 2 shows V2I or V2N.

V2X communication is for a high-speed device represented by a vehicle. V2X communication in LTE may support a communication scenario with network coverage and a communication scenario without network coverage, and resource allocation may be performed in a network access device scheduling mode. The network access device scheduling mode is, for example, an evolved universal terrestrial radio access network NodeB (e-UTRAN NodeB, eNB) scheduling mode or a UE self-selection mode. Based on the V2X communication manner, vehicle user equipment (vehicle UE, V-UE) can send some information of the vehicle user equipment to surrounding vehicle user equipment, and may receive information sent by surrounding vehicle user equipment. The information is, for example, information, such as a location, a speed, and an intention (for example, turning, paralleling, or reversing).

LTE V2X meets some basic requirements in a V2X scenario. However, existing LTE V2X cannot effectively support an application scenario such as fully intelligent driving or autonomous driving in the future. 5G NR V2X further develops with promotion of a 5G new radio (new radio, NR) technology, to support a lower transmission latency, more reliable communication transmission, a higher throughput, and better user experience, to meet requirements of a wider range of application scenarios.

FIG. 3 is a schematic diagram of an application scenario according to an embodiment of this application. As shown in FIG. 3, a network architecture of the application scenario shown in FIG. 3 includes a terminal device A and a terminal device B. The terminal device A communicates with the terminal device B, the terminal device A is a data receive end, and the terminal device B is a data transmit end.

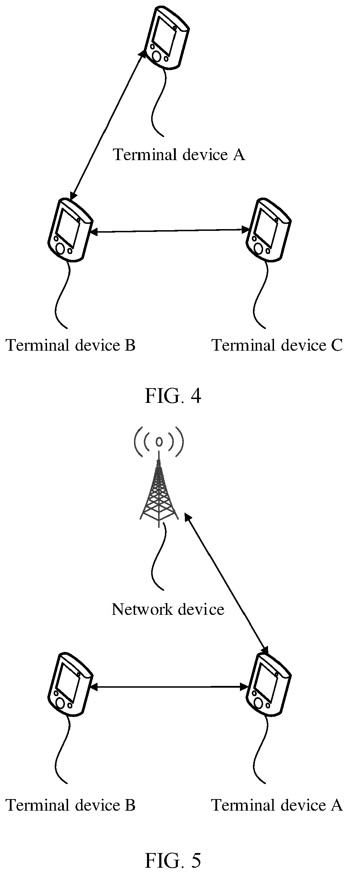

FIG. 4 is a schematic diagram of another application scenario according to an embodiment of this application. As shown in FIG. 4, a network architecture of the application scenario shown in FIG. 4 includes a terminal device A, a terminal device B, and a terminal device C. The terminal device B communicates with the terminal device C, the terminal device C is a data receive end, and the terminal device B is a data transmit end. The terminal device A is configured to indicate a resource, and the resource is used for data receiving and sending between the terminal device B and the terminal device C. To be specific, the terminal device A has an assistance capability, or may have a complete or partial scheduling capability, and the resource indicated by the terminal device A is used for communication between the terminal device B and the terminal device C.

FIG. 5 is a schematic diagram of another application scenario according to an embodiment of this application. As shown in FIG. 5, a network architecture of the application scenario shown in FIG. 5 includes a terminal device A, a terminal device B, and a network device. The terminal device A communicates with the terminal device B, the terminal device A is a data receive end, and the terminal device B is a data transmit end. When the terminal device has a complete or partial scheduling capability, the terminal device A senses a resource, and performs scheduling processing by using a resource obtained through sensing; or when the terminal device A has a complete or partial scheduling capability, the network device configures a resource for the terminal device A, so that the terminal device A can perform scheduling processing by using the resource.

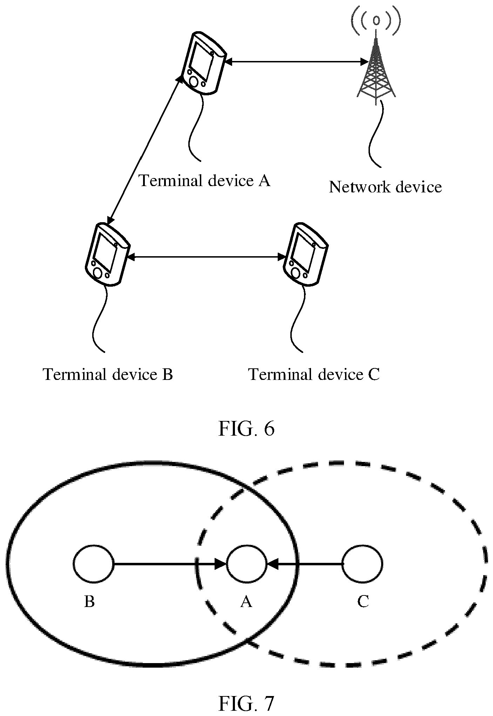

FIG. 6 is a schematic diagram of another application scenario according to an embodiment of this application. As shown in FIG. 6, a network architecture of the application scenario shown in FIG. 6 includes a terminal device A, a terminal device B, a terminal device C, and a network device. The terminal device C communicates with the terminal device B, the terminal device C is a data receive end, and the terminal device B is a data transmit end. When the terminal device has a complete or partial scheduling capability, the terminal device A senses a resource, and performs scheduling processing by using a resource obtained through sensing; or when the terminal device A has a complete or partial scheduling capability, the network device configures a resource for the terminal device A, so that the terminal device A can perform scheduling processing by using the resource.

The foregoing "scheduling capability" refers to a resource scheduling capability. A communication interface between the terminal device and the network device may be a Uu interface (Uu interface, Uu). A communication interface between terminal devices may be a PC5 interface (PC5 interface, PC5).

In a D2D technology, the terminal device needs to perform data transmission by using a resource, and further, the terminal device needs to obtain the resource before the data transmission. The terminal device obtains a resource in the following manners.

A first manner in which the terminal device obtains a resource is a mode 1 (Mode 1). The mode 1 means that the network device schedules a resource, and the resource is used for data transmission between terminal devices.

However, in the first manner, in the D2D technology, because the terminal devices directly communicate with each other, when the terminal devices cannot connect to the network device in time, the network device cannot schedule a resource for the terminal device.

A second manner in which the terminal device obtains a resource is a mode 2 (Mode 2). The mode 2 means that the network device does not need to schedule a resource, and the terminal device determines, in a configured or preconfigured resource of a network or the network device, a resource for data transmission.

In the second manner, the resource may be determined by using procedures such as sensing, resource selection, and resource reselection. Sensing means decoding sidelink control information (sidelink control information, SCI) and/or sidelink (sidelink, SL) measurement of another terminal device. In the resource selection and resource reselection procedures, a sensing result may be used to determine the resource for data transmission.

However, in the second manner, different terminal devices each determine a resource, and transmit data by using the resource. To be specific, a terminal device determines a resource, and then transmits data to another terminal device by using the resource determined by the terminal device. Therefore, the terminal device cannot determine whether the resource is used by another terminal device. Consequently, the used resource may be occupied, or the resource may not be appropriately used.

For example, FIG. 7 is a schematic diagram of a structure of another communication system according to an embodiment of this application. As shown in FIG. 7, a terminal device A, a terminal device B, and a terminal device C each may determine a resource in the foregoing mode 2. A range delimited by a dashed line in FIG. 7 is a sensing range of the terminal device C, and a range delimited by a solid line in FIG. 7 is a sensing range of the terminal device B. It may be learned that the terminal device C is outside the sensing range of the terminal device B, and the terminal device C is a hidden node of the terminal device B. The terminal device B is outside the sensing range of the terminal device C, and the terminal device B is a hidden node of the terminal device C.

Both the terminal device B and the terminal device C need to send data to the terminal device A. The terminal device C selects a resource 1 based on the mode 2, to send data to the terminal device A. Because the terminal device B is a hidden node of the terminal device C, the terminal device B does not know existence of the terminal device C, and the terminal device B cannot obtain, through sensing, that the resource 1 has been occupied by the terminal device C, considers that the resource 1 is idle, and further sends data to the terminal device A by using the resource 1. In this case, because the terminal device C and the terminal device B send data by using the same resource, signal collision and mutual interference in a data transmission process occur. Consequently, data transmission of both the terminal device C and the terminal device B fails. In addition, when there are more hidden nodes outside the sensing range of the terminal device B, problems of signal collision and a data transmission failure are more serious.

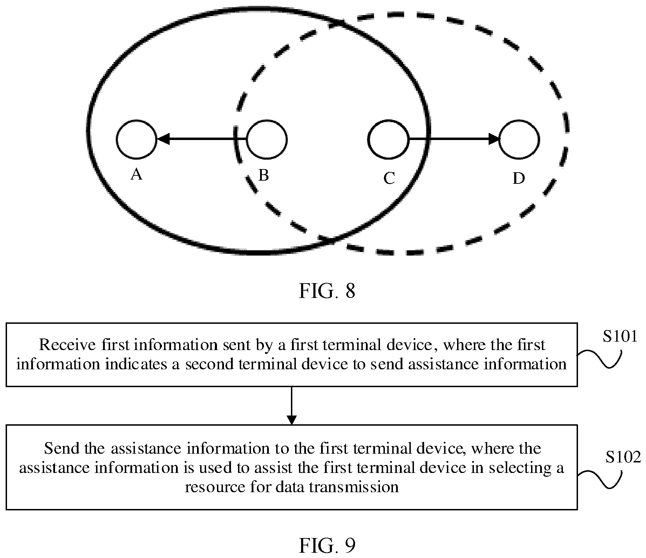

For example, FIG. 8 is a schematic diagram of a structure of another communication system according to an embodiment of this application. As shown in FIG. 8, a terminal device A, a terminal device B, a terminal device C, and a terminal device D each may determine a resource in the foregoing mode 2. A range delimited by a dashed line in FIG. 8 is a sensing range of the terminal device C, and a range delimited by a solid line in FIG. 8 is a sensing range of the terminal device B.

The terminal device B needs to send data to the terminal device A, and the terminal device C needs to send data to the terminal device D. The terminal device C selects a resource 1 based on the mode 2, and sends data to the terminal device D by using the resource 1. The terminal device B may obtain, through sensing, that the resource is occupied. To avoid signal collision, the terminal device B does not select the resource 1, but selects another resource to send data to the terminal device A. However, from a perspective of resource multiplexing, actually, the terminal device B may send data to the terminal device A by using the resource 1, and the terminal device A is not interfered by a signal sent by the terminal device C on the resource 1. Resource multiplexing means that the terminal device performs data transmission by using a same time-frequency resource. Therefore, the resource is not appropriately used, and resource utilization efficiency is low. The terminal device needs to reselect a resource, and this results in low communication efficiency.

It may be learned that in the foregoing several communication manners, when the terminal device cannot connect to the network device in time, the network device cannot schedule a resource for the terminal device; or the terminal device cannot determine whether a resource is used by another terminal device. Consequently, a used resource may be occupied or a resource may not be appropriately used, and resource utilization efficiency is low. Therefore, a communication process of the terminal device is affected, and user experience is affected.

FIG. 9 is a schematic flowchart of a device-to-device based resource determining method according to an embodiment of this application. As shown in FIG. 9, the method includes the following steps.

S101: Receive first information sent by a first terminal device, where the first information indicates a second terminal device to send assistance information.

In an example, a preset indicator field or a preset bit in the first information indicates the second terminal device to send the assistance information.

In an example, the first information is physical layer sidelink control information, media access control (media access control, MAC) layer sidelink control information, or radio resource control (radio resource control, RRC) layer sidelink control information.

For example, the method provided in this embodiment may be performed by the second terminal device. The second terminal device communicates with the first terminal device.

The first terminal device is a data transmit end, the second terminal device is a data receive end, and the second terminal device is an assistance end. Alternatively, the first terminal device is a data transmit end, the second terminal device is not a data receive end, and the second terminal device is an assistance end.

The "assistance end" is a device that provides a resource or a resource set for another terminal device, and the resource or the resource set is used by the another terminal device to select a resource for data transmission.

In this embodiment, if the second terminal device is an assistance end, the second terminal device provides a resource or a resource set for the first terminal device, and the resource or the resource set is used by the first terminal device to select the resource for data transmission. For example, the resource or the resource set is used by the first terminal device to choose whether to use the resource or the resource set as the resource for data transmission.

When the first terminal device needs to send data, the first terminal device sends the first information to the second terminal device, where the first information indicates the second terminal device to send the assistance information, and the assistance information is used to assist the first terminal device in selecting the resource for data transmission. In an example, the first information indicates that the first terminal device requires the second terminal device to return the assistance information to the first terminal device. In other words, in addition to indicating the second terminal device to send the assistance information, the first information further indicates that the first terminal device requires the assistance information.

In an example, the first terminal device sends the first information to the second terminal device. The first information is a single piece of signaling. There are a plurality of indicator fields in the first information, and one preset indicator field in the plurality of indicator fields may indicate the second terminal device to send the assistance information. A location of the preset indicator field in the first information and a size of the preset indicator field are not limited. Alternatively, the first information is a single piece of signaling. There are a plurality of bits in the first information, and one preset bit in the plurality of indicator fields may indicate the second terminal device to send the assistance information. A location of the preset bit in the first information and a size of the preset bit are not limited.

In another example, the first information is physical layer sidelink control information. A preset indicator field in the physical layer sidelink control information indicates the second terminal device to send the assistance information, or a preset bit in the physical layer sidelink control information indicates the second terminal device to send the assistance information. The physical layer sidelink control information may explicitly indicate the second terminal device to send the assistance information, or the physical layer sidelink control information may implicitly indicate the second terminal device to send the assistance information. For example, the physical layer sidelink control information may be 1^{st} stage sidelink control information (1^{st} stage SCI), 2^{nd} stage sidelink control information (2^{nd} stage SCI), or sidelink control information (sidelink control information, SCI).

In an example, the first information is 2^{nd} stage SCI. There is a preset indicator field in the 2^{nd} stage SCI. When a value in the preset indicator field is a first value, it indicates to activate the second terminal device to send the assistance information to the first terminal device. When a value in the preset indicator field is a second value, it indicates to deactivate the second terminal device to send the assistance information to the first terminal device. "Deactivation" means that the second terminal device does not need to send the assistance information. The first value is different from the second value. In addition, the 2^{nd} stage SCI includes an identifier of the first terminal device and an identifier of the second terminal device. To be specific, the 2^{nd} stage SCI includes an identifier of a terminal device that sends the 2^{nd} stage SCI and an identifier of a terminal device that receives the 2^{nd} stage SCI. In this case, the first information explicitly indicates the second terminal device to send the assistance information. For example, the first terminal device sends the 2^{nd} stage SCI to the second terminal device, where the 2^{nd} stage SCI includes the identifier of the first terminal device and the identifier of the second terminal device. There is a 1-bit indicator field in the 2^{nd} stage SCI, and the 1-bit indicator field indicates whether the second terminal device sends the assistance information. When a value in the 1-bit indicator field is 1, it indicates to activate the second terminal device to send the assistance information to the first terminal device. When a value in the 1-bit indicator field is 0, it indicates to deactivate the second terminal device to send the assistance information to the first terminal device.

In an example, the first information is 1^{st} stage SCI. There is a preset indicator field in the 1^{st} stage SCI. When a value in the preset indicator field is a first value, it indicates to activate the second terminal device to send the assistance information to the first terminal device. When a value in the preset indicator field is a second value, it indicates to deactivate the second terminal device to send the assistance information to the first terminal device. "Deactivation" means that the second terminal device does not need to send the assistance information. The first value is different from the second value. In addition, before receiving the 1^{st} stage SCI or after receiving the 1^{st} stage SCI, the second terminal device further needs to receive identification information sent by the first terminal device, where the identification information indicates an identifier of the first terminal device and an identifier of the second terminal device. For example, the identification information is 2^{nd} stage SCI. Therefore, the second terminal device may learn that the first terminal device requests the assistance information from the second terminal device. In this case, the first information explicitly indicates the second terminal device to send the assistance information. For example, the first terminal device sends the 1^{st} stage SCI and the 2^{nd} stage SCI to the second terminal device. There is a 1-bit indicator field in the 1^{st} stage SCI, and the 1-bit indicator field indicates whether the second terminal device sends the assistance information. When a value in the 1-bit indicator field is 1, it indicates to activate the second terminal device to send the assistance information to the first terminal device. When a value in the 1-bit indicator field is 0, it indicates to deactivate the second terminal device to send the assistance information to the first terminal device. The 2^{nd} stage SCI indicates the identifier of the first terminal device and the identifier of the second terminal device.

In an example, the first information is 2^{nd} stage SCI. There is a preset bit in the 2^{nd} stage SCI. When the preset bit is a first bit sequence, it indicates to activate the second terminal device to send the assistance information to the first terminal device, where the first bit sequence includes at least one bit. When the preset bit is a second bit sequence, it indicates to deactivate the second terminal device to send the assistance information to the first terminal device. "Deactivation" means that the second terminal device does not need to send the assistance information. The second bit sequence includes at least one bit. The first bit sequence and the second bit sequence are different bit sequences. In addition, the 2^{nd} stage SCI includes an identifier of the first terminal device and an identifier of the second terminal device. To be specific, the 2^{nd} stage SCI includes an identifier of a terminal device that sends the 2^{nd} stage SCI and an identifier of a terminal device that receives the 2^{nd} stage SCI. In this case, the first information implicitly indicates the second terminal device to send the assistance information. For example, the first terminal device sends the 2^{nd} stage SCI to the second terminal device, where the 2^{nd} stage SCI includes the identifier of the first terminal device and the identifier of the second terminal device, and there is a cyclic redundancy checksum (cyclic redundancy checksum, CRC) in the 2^{nd} stage SCI. In this case, the last bit of the CRC in the 2^{nd} stage SCI is scrambled by using one bit. When 1 is used for scrambling, it indicates to activate the second terminal device to send the assistance information to the first terminal device. When 0 is used for scrambling, it indicates to deactivate the second terminal device to send the assistance information to the first terminal device. For example, the CRC in the 2^{nd} stage SCI is a 24-bit bit sequence: 0101 1010 0101 1010 0101 1010, and a CRC scrambled by using 1 is 0101 1010 0101 1010 0101 1011. In this case, it indicates to activate the second terminal device to send the assistance information to the first terminal device.

In an example, the first information is 1^{st} stage SCI. There is a preset bit in the 1^{st} stage SCI. When the preset bit is a first bit sequence, it indicates to activate the second terminal device to send the assistance information to the first terminal device, where the first bit sequence includes at least one bit. When the preset bit is a second bit sequence, it indicates to deactivate the second terminal device to send the assistance information to the first terminal device. "Deactivation" means that the second terminal device does not need to send the assistance information. The second bit sequence includes at least one bit. The first bit sequence and the second bit sequence are different bit sequences. In addition, before receiving the 1^{st} stage SCI or after receiving the 1^{st} stage SCI, the second terminal device further needs to receive identification information sent by the first terminal device, where the identification information indicates an identifier of the first terminal device and an identifier of the second terminal device. For example, the identification information is 2^{nd} stage SCI. Therefore, the second terminal device may learn that the first terminal device requests the assistance information from the second terminal device. In this case, the first information implicitly indicates the second terminal device to send the assistance information. For example, the first terminal device sends the 1^{st} stage SCI and the 2^{nd} stage SCI to the second terminal device, and there is a CRC in the 1^{st} stage SCI. In this case, the last bit of the CRC in the 1^{st} stage SCI is scrambled by using one bit. When 1 is used for scrambling, it indicates to activate the second terminal device to send the assistance information to the first terminal device. When 0 is used for scrambling, it indicates to deactivate the second terminal device to send the assistance information to the first terminal device. The 2^{nd} stage SCI indicates the identifier of the first terminal device and the identifier of the second terminal device. For example, the CRC in the 1^{st} stage SCI is a 24-bit bit sequence: 0101 1010 0101 1010 0101 1010, and a CRC scrambled by using 1 is 0101 1010 0101 1010 0101 1011. In this case, it indicates to activate the second terminal device to send the assistance information to the first terminal device.

In still another example, the first information is MAC layer sidelink control information. A preset indicator field in the MAC layer sidelink control information indicates the second terminal device to send the assistance information, or a preset bit in the MAC layer sidelink control information indicates the second terminal device to send the assistance information. The MAC layer sidelink control information may explicitly indicate the second terminal device to send the assistance information, or the MAC layer sidelink control information may implicitly indicate the second terminal device to send the assistance information. For example, the MAC layer sidelink control information may be SL MAC CE information, where SL refers to a sidelink (Sidelink, SL), MAC refers to a media access control (media access control, MAC) layer, and CE refers to a control element (control element, CE).

In an example, the first information is SL MAC CE information. There is a preset indicator field in the SL MAC CE information. When a value in the preset indicator field is a first value, it indicates to activate the second terminal device to send the assistance information to the first terminal device. When a value in the preset indicator field is a second value, it indicates to deactivate the second terminal device to send the assistance information to the first terminal device. "Deactivation" means that the second terminal device does not need to send the assistance information. The first value is different from the second value. In addition, before receiving the SL MAC CE information or after receiving the SL MAC CE information, the second terminal device further needs to receive identification information sent by the first terminal device, where the identification information indicates an identifier of the first terminal device and an identifier of the second terminal device. For example, the identification information is 2^{nd} stage SCI. Therefore, the second terminal device may learn that the first terminal device requests the assistance information from the second terminal device. In this case, the first information explicitly indicates the second terminal device to send the assistance information. For example, the first terminal device sends the SL MAC CE information and the 2^{nd} stage SCI to the second terminal device. There is a preset indicator field in the SL MAC CE information, and the preset indicator field indicates whether the second terminal device sends the assistance information. When a value in the preset indicator field is 1, it indicates to activate the second terminal device to send the assistance information to the first terminal device. When a value in the preset indicator field is 0, it indicates to deactivate the second terminal device to send the assistance information to the first terminal device. The 2^{nd} stage SCI indicates the identifier of the first terminal device and the identifier of the second terminal device.

In yet another example, the first information is RRC layer sidelink control information. A preset indicator field in the RRC layer sidelink control information indicates the second terminal device to send the assistance information, or a preset bit in the RRC layer sidelink control information indicates the second terminal device to send the assistance information. The RRC layer sidelink control information may explicitly indicate the second terminal device to send the assistance information, or the RRC layer sidelink control information may implicitly indicate the second terminal device to send the assistance information. For example, the RRC layer sidelink control information may be PC5 RRC information.

In an example, the first information is PC5 RRC information. There is a preset indicator field in the PC5 RRC information. When a value in the preset indicator field is a first value, it indicates to activate the second terminal device to send the assistance information to the first terminal device. When a value in the preset indicator field is a second value, it indicates to deactivate the second terminal device to send the assistance information to the first terminal device. "Deactivation" means that the second terminal device does not need to send the assistance information. The first value is different from the second value. In addition, before receiving the PC5 RRC information or after receiving the PC5 RRC information, the second terminal device further needs to receive identification information sent by the first terminal device, where the identification information indicates an identifier of the first terminal device and an identifier of the second terminal device. For example, the identification information is 2^{nd} stage SCI. Therefore, the second terminal device may learn that the first terminal device requests the assistance information from the second terminal device. In this case, the first information explicitly indicates the second terminal device to send the assistance information. For example, the first terminal device sends the PC5 RRC information and the 2^{nd} stage SCI to the second terminal device. There is a preset indicator field in the PC5 RRC information, and the preset indicator field indicates whether the second terminal device sends the assistance information. The preset indicator field may be indicated by using an integer. When a value in the preset indicator field is 1, it indicates to activate the second terminal device to send the assistance information to the first terminal device. When a value in the preset indicator field is 0, it indicates to deactivate the second terminal device to send the assistance information to the first terminal device. The 2^{nd} stage SCI indicates the identifier of the first terminal device and the identifier of the second terminal device. For another example, the first terminal device sends the PC5 RRC information and the 2^{nd} stage SCI to the second terminal device. There is a preset indicator field in the PC5 RRC information, and the preset indicator field indicates whether the second terminal device sends the assistance information. The preset indicator field may be indicated by using an enumeration type, and members of the enumeration type include "activate" and "deactivate". When a value in the preset indicator field is "activate", it indicates to activate the second terminal device to send the assistance information to the first terminal device. When a value in the preset indicator field is "deactivate", it indicates to deactivate the second terminal device to send the assistance information to the first terminal device. The 2^{nd} stage SCI indicates the identifier of the first terminal device and the identifier of the second terminal device.

S102: Send the assistance information to the first terminal device, where the assistance information is used to assist the first terminal device in selecting the resource for data transmission.

In an example, the assistance information specifically indicates a size and a location anchor of the resource for data transmission.

In an example, the assistance information is physical layer sidelink control information, media access control layer sidelink control information, or radio resource control layer sidelink control information.

For example, after receiving the first information, the second terminal device determines "the resource for data transmission", and further generates the assistance information.

In an example, the assistance information indicates the resource for data transmission. To help the first terminal device determine a location of the resource, the assistance information may indicate the size of the resource for data transmission and the location anchor of the resource for data transmission.

In an example, the second terminal device may obtain channel state information, and then determine, based on the channel state information, the size of the resource that needs to be occupied by the first terminal device for data transmission. The second terminal device performs sensing at a granularity of the resource size, and further obtains an unoccupied resource through sensing, or obtains an unoccupied resource set through sensing. Therefore, the second terminal device uses the unoccupied resource or resource set that is obtained through sensing as the resource for data transmission. The granularity of the resource size may be a subchannel (subchannel), a resource block group (resource block group, RBG), a resource block (resource block, RB), or the like. The granularity of the resource size is not limited.

Herein, a process of "sensing" the resource or "sensing" the resource set is described. Sensing refers to the foregoing mode 2. During sensing, when a terminal device needs to send data, a MAC layer of the terminal device indicates a physical layer of the terminal device to perform sensing, to determine a resource subset. The MAC layer of the terminal device selects, from the resource subset, a resource used for transmitting data on a physical sidelink shared channel (Physical Sidelink Shared Channel, PSSCH) or a physical sidelink control channel (Physical Sidelink Control Channel, PSCCH). The terminal device determines a resource sensing result in a resource sensing window, and then selects a resource set or a resource in a resource selection window based on the resource sensing result.

For example, it is assumed that the terminal device triggers resource selection in a slot n. The "resource sensing window" may be defined as T slots before resource selection is triggered, where n and T are positive integers greater than or equal to 1. The "resource selection window" is slots [n+T1, n+T2] after resource selection is triggered, where T1 and T2 are integers greater than or equal to 1, and T2 is greater than or equal to T1.

A frequency domain resource pool has been configured, where a maximum quantity of subchannels in the frequency domain resource pool is N_{subCH}, and a corresponding subchannel set is S = {S₀, S₁, ..., S_{N_{subCH}-1}}. All candidate (candidate) resource sets in each slot in the resource selection window [n+T1, n+T2] are defined as C = {C₀, C₁,..,G_{N_{subCH}-L_{subCH}}}, each candidate resource set is a set of consecutive subchannels with a length of L_{subCH}, and L_{subCH} is a quantity of subchannels occupied by a PSSCH corresponding to to-be-transmitted data. In this case, a total quantity of candidate resource sets in each slot is N_{subCH} - L_{subCH} + 1.

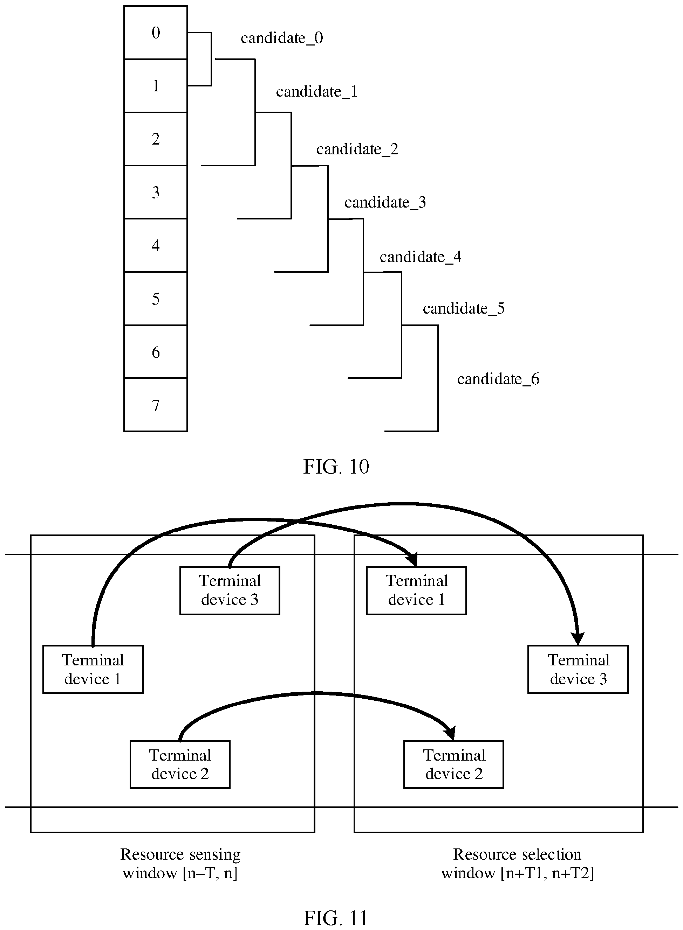

For example, FIG. 10 is a schematic diagram of candidate resource sets according to an embodiment of this application. As shown in FIG. 10, a maximum quantity N_{subCH} of subchannels in a frequency domain resource pool is 8, a corresponding subchannel set is S = {S₀,S₁,...,S₇}, and a quantity L_{subCH} of subchannels occupied by a PSSCH corresponding to to-be-transmitted data is 2. In this case, a total quantity of candidate resource sets in each slot is N_{subCH} - L_{subCH} + 1 = 7, and all the candidate resource sets are defined as C = {C₀,C₁,C₂,C₃,C₄,C₅,C₆}. That is, as shown in FIG. 10, all candidate resource sets are candidate resource set candidate_0, candidate resource set candidate_1, candidate resource set candidate_2, candidate resource set candidate_3, candidate resource set candidate_4, candidate resource set candidate_5, and candidate resource set candidate_6.

FIG. 11 is a schematic flowchart of selecting a resource through sensing according to an embodiment of this application. As shown in FIG. 11, during resource selection, a terminal device senses a resource in a frequency domain resource pool in a resource sensing window. In an example, the terminal device senses SCI sent by another terminal device. If the sensed SCI includes a resource set (or a reserved resource) that has been reserved by the another terminal device, and the resource is in a resource selection window [n+T1, n+T2], the terminal device performs RSRP measurement on a candidate resource set corresponding to the resource set (or the resource), to obtain a measurement result. If a value represented by the measurement result is greater than or equal to a preset threshold Th_{RSRP}, the resource set (or the resource) is excluded from the resource selection window. The preset threshold Th_{RSRP} is a function determined based on a priority corresponding to data indicated in the received SCI and a priority corresponding to to-be-transmitted data of the terminal device. The terminal device selects, from a remaining candidate resource set (or a remaining candidate resource), a resource set (or a resource) for data transmission.

In an example, to help the first terminal device determine a resource set indicated by the assistance information, the assistance information may indicate a size and a location anchor of the resource set. In this case, the resource set is a resource set determined by the second terminal device. Because the assistance information indicates the size and the location anchor of the resource set, after receiving scheduling information, the first terminal device may learn of a quantity of resource sets or resources allocated by the second terminal device to the first terminal device.

Then, the second terminal device sends the assistance information to the first terminal device by using a resource obtained through sensing.

In an example, the second terminal device sends the assistance information to the first terminal device, where the assistance information is a single piece of signaling.

In another example, the assistance information is physical layer sidelink control information. In other words, the second terminal device sends the physical layer sidelink control information to the first terminal device, where the physical layer sidelink control information is used to assist the first terminal device in selecting the resource for data transmission. For example, the physical layer sidelink control information may be 1^{st} stage SCI, 2^{nd} stage SCI, or SCI.

In still another example, the assistance information is MAC layer sidelink control information. In other words, the second terminal device sends the MAC layer sidelink control information to the first terminal device, where the MAC layer sidelink control information is used to assist the first terminal device in selecting the resource for data transmission. For example, the MAC layer sidelink control information may be SL MAC CE information.

In yet another example, the assistance information is RRC layer sidelink control information. In other words, the second terminal device sends the RRC layer sidelink control information to the first terminal device, where the RRC layer sidelink control information is used to assist the first terminal device in selecting the resource for data transmission. For example, the RRC layer sidelink control information may be PC5 RRC information.

Further, the first terminal device determines the resource for data transmission based on an indication of the assistance information.

In an example, the assistance information indicates the resource set determined by the second terminal device, and the resource set determined by the second terminal device is an unoccupied resource determined by the second terminal device. Further, the first terminal device selects, based on a size of to-be-transmitted data, an appropriate resource set from the resource set indicated by the assistance information. The resource set selected by the first terminal device may carry the to-be-transmitted data. In this case, the first terminal device determines the resource for data transmission.

In another example, the assistance information indicates the resource set determined by the second terminal device, the first terminal device also obtains a resource set through sensing, and the resource set obtained by the first terminal device through sensing is an unoccupied resource determined by the first terminal device. The first terminal device selects, based on a size of to-be-transmitted data, an appropriate resource set from the resource set indicated by the assistance information and the resource set obtained by the first terminal device through sensing. The resource set selected by the first terminal device may carry the to-be-transmitted data. In this case, the first terminal device determines the resource for data transmission.

For example, in the application scenario shown in FIG. 7, both the terminal device B and the terminal device C need to send data to the terminal device A. The terminal device C sends data to the terminal device A by using the resource 1. The terminal device B sends the first information to the terminal device A. The terminal device B is a hidden node of the terminal device C. The terminal device B does not know existence of the terminal device C, but the terminal device A knows that the terminal device C has sent data to the terminal device A by using the resource 1. The terminal device A may determine that the resource 1 has been occupied, and assistance information generated by the terminal device A does not indicate the resource 1. Then, the terminal device A returns the assistance information to the terminal device B, and the terminal device B determines a resource for data transmission based on the assistance information. In this case, the terminal device B determines, based on the assistance information, that the resource 1 has been occupied, and no longer uses the resource 1. The terminal device B may send data to the terminal device A by using another resource or another resource indicated by the assistance information. Therefore, the terminal device C and the terminal device B do not send data by using a same resource, to avoid signal collision and mutual interference in a data transmission process, and ensure successful data transmission of both the terminal device C and the terminal device B.

For another example, in the application scenario shown in FIG. 8, from a perspective of resource multiplexing, the terminal device B needs to send data to the terminal device A, and the terminal device C needs to send data to the terminal device D. The terminal device C sends data to the terminal device D by using the resource 1. The terminal device B sends the first information to the terminal device A. The terminal device A may determine that the resource 1 is not occupied, and then assistance information generated by the terminal device A may indicate the resource 1. Then, the terminal device A returns the assistance information to the terminal device B. The terminal device B determines a resource for data transmission based on the assistance information. In this case, the terminal device B determines, based on the assistance information, that the resource 1 is not occupied, and the terminal device B may send data to the terminal device A by using the resource 1. Further, from the perspective of resource multiplexing, the terminal device B may send data to the terminal device A by using the resource 1, and the terminal device A is not interfered by a signal sent by the terminal device C on the resource 1. According to the solution provided in this embodiment, the resource is appropriately used, and resource utilization efficiency is improved.

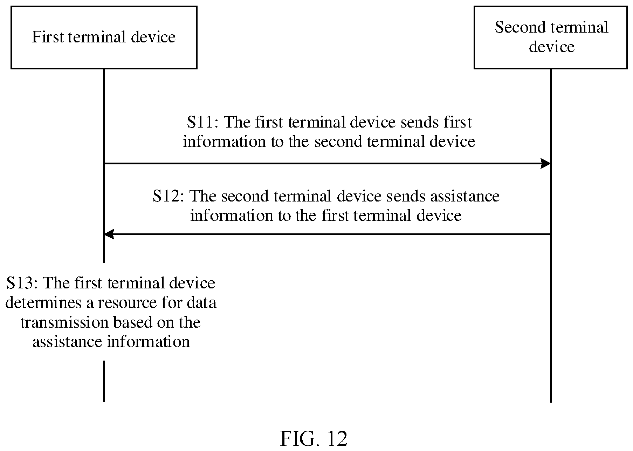

FIG. 12 is a signaling diagram of a device-to-device based resource determining method according to an embodiment of this application, and is used to implement the steps in FIG. 9. As shown in FIG. 12, the method includes the following steps.

S11: A first terminal device sends first information to a second terminal device, where the first information indicates the second terminal device to send assistance information.

S12: The second terminal device sends the assistance information to the first terminal device, where the assistance information is used to assist the first terminal device in selecting a resource for data transmission.

S13: The first terminal device determines the resource (or a resource set) for data transmission based on the assistance information.

Herein, for S11, refer to step S101 in FIG. 9; for S12, refer to step S102 in FIG. 9; for S13, refer to step 102 in FIG. 9. Details are not described again.

In this embodiment, the second terminal device receives the first information sent by the first terminal device, where the first information indicates the second terminal device to send the assistance information. The second terminal device sends the assistance information to the first terminal device, where the assistance information is used to assist the first terminal device in selecting the resource for data transmission. When the first terminal device needs to send data, the first terminal device requests the assistance information from the second terminal device, where the assistance information is used to assist the first terminal device in selecting the resource for data transmission. The second terminal device generates the assistance information, and the second terminal device returns the assistance information to the first terminal device. The first terminal device determines the resource for data transmission based on the assistance information. In the foregoing process, when the first terminal device needs to send data, the second terminal device assists the first terminal device in determining the resource for data transmission. To be specific, another terminal device (a terminal device that receives data or a terminal device that is not the terminal device that receives data) assists the first terminal device in determining the resource for data transmission, instead of completely determining, by a terminal device that sends data, the resource for data transmission. This may avoid a case in which different terminal devices send data by using a same resource, avoid signal collision and mutual interference in a data transmission process, and ensure successful data transmission of the different terminal devices. In addition, from a perspective of resource multiplexing, the resource may be appropriately used, and resource utilization efficiency may be improved.

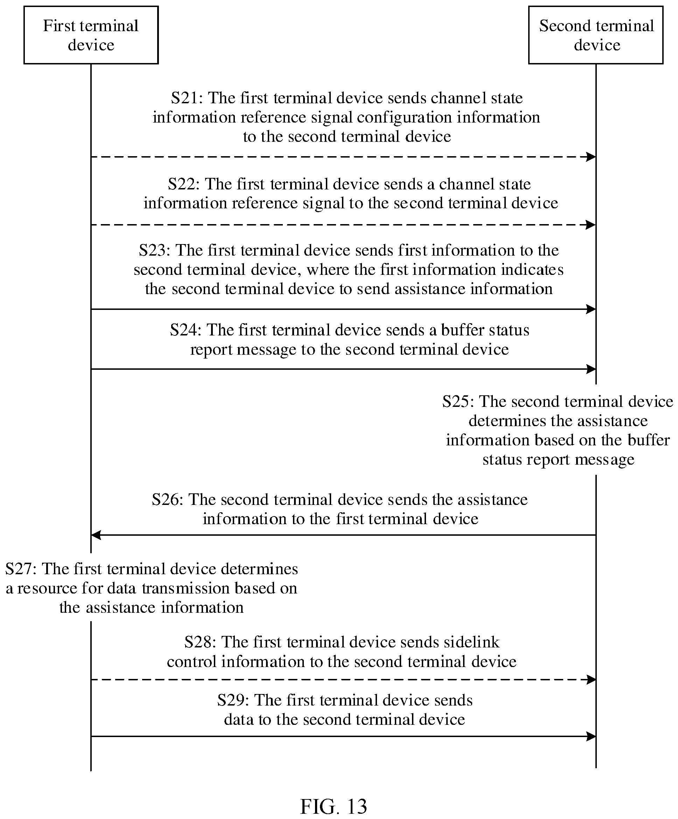

FIG. 13 is a signaling diagram of another device-to-device based resource determining method according to an embodiment of this application. As shown in FIG. 13, the method includes the following steps.

S21: A first terminal device sends channel state information reference signal (channel state information reference signal, CSI-RS) configuration information to a second terminal device, where the channel state information reference signal configuration information indicates to receive a channel state information reference signal

For example, in this embodiment, the first terminal device communicates with the second terminal device. The first terminal device is a data transmit end, the second terminal device is a data receive end, and the second terminal device is an assistance end. The second terminal device may not have a capability of scheduling a resource for data transmission, or may have the capability of scheduling the resource for data transmission. This is not limited.

The first terminal device sends the CSI-RS configuration information to the second terminal device, where the CSI-RS configuration information indicates the second terminal device to receive the channel state information reference signal. In an example, the CSI-RS configuration information is PC5 RRC information.

Optionally, step S21 is an optional step.

S22: The first terminal device sends the channel state information reference signal to the second terminal device, where the channel state information reference signal is used to determine channel state information.

For example, the first terminal device sends the CSI-RS to the second terminal device, where the CSI-RS is used by the second terminal device to determine the channel state information. In this way, after receiving the CSI-RS, the second terminal device performs channel measurement based on the CSI-RS to obtain a measurement result, and the second terminal device obtains the channel state information based on the measurement result. After learning of the channel state information, the second terminal device can accurately determine necessary information, such as a modulation and coding scheme (modulation and coding scheme, MCS), used for data receiving, to further improve a capability of appropriately using a resource.

Optionally, step S22 is an optional step.

S23: The first terminal device sends first information to the second terminal device, where the first information indicates the second terminal device to send assistance information.

In an example, a preset indicator field or a preset bit in the first information indicates the second terminal device to send the assistance information.

In an example, the first information is physical layer sidelink control information, media access control layer sidelink control information, or radio resource control layer sidelink control information.

For example, before needing to send data to the second terminal device, the first terminal device first sends the first information to the second terminal device. In this embodiment, the first information may also be referred to as an "assistance request".

In an example, the first terminal device may obtain a resource through sensing. In this case, the resource obtained through sensing is used to send the assistance request.

For this step, refer to step S101 shown in FIG. 9. Details are not described again.

S24: The first terminal device sends a buffer status report (buffer status report, BSR) message to the second terminal device, where the buffer status report message indicates a size of to-be-transmitted data.

In an example, a preset indicator field or a scrambled bit in the buffer status report message indicates the size of the to-be-transmitted data.

In an example, the buffer status report message is physical layer sidelink control information, MAC layer sidelink control information, or RRC layer sidelink control information.

For example, the first terminal device sends the BSR message to the second terminal device. To help the second terminal device determine an appropriate resource for the first terminal device, the BSR message needs to indicate the size of the to-be-transmitted data of the first terminal device. For example, the BSR message includes an index of the size of the to-be-transmitted data in a buffer, or the BSR message includes the size of the to-be-transmitted data in the buffer. In other words, "the size of the to-be-transmitted data" is the index of the size of the to-be-transmitted data in the buffer, or is the size of the to-be-transmitted data in the buffer. In an example, the first terminal device determines a resource in a sensing manner, where the resource is used to transmit the BSR message. Then, the first terminal device sends the BSR message to the second terminal device by using the resource obtained through sensing.

For example, the BSR message includes the index of the size of the to-be-transmitted data in the buffer, and x bits or a binary bit may indicate the index of the size of the to-be-transmitted data of the first terminal device in the buffer, where x is a positive integer. There are 2^{x} buffer size levels. For example, when x=5, there are 2^{x} buffer size levels. To be specific, there are 32 buffer size levels, which are respectively represented by indexes 0, 1, ..., and 31. One buffer size level corresponds to one buffer size range or one buffer size. The buffer size may be in the unit of byte (byte) or bit (bit).

For example, Table 6.1.3.1-1 (Table 6.1.3.1-1) in the 3GPP protocol describes buffer size levels for 5-bit buffer size field (Buffer size levels (in bytes) for 5-bit Buffer Size field).

**Table 6.1.3.1-1: Buffer size levels (in bytes) for 5-bit buffer size field**

| Index | BS value | Index | BS value | Index | BS value | Index | BS value |
|---|---|---|---|---|---|---|---|
| 0 | 0 | 8 | ≤ 102 | 16 | ≤ 1446 | 24 | ≤ 20516 |
| 1 | ≤ 10 | 9 | ≤ 142 | 17 | ≤ 2014 | 25 | ≤ 28581 |
| 2 | ≤ 14 | 10 | ≤ 198 | 18 | ≤ 2806 | 26 | ≤ 39818 |
| 3 | ≤ 20 | 11 | ≤ 276 | 19 | ≤ 3909 | 27 | ≤ 55474 |
| 4 | < 28 | 12 | ≤ 384 | 20 | ≤ 5446 | 28 | ≤ 77284 |
| 5 | ≤ 38 | 13 | ≤ 535 | 21 | ≤ 7587 | 29 | ≤ 107669 |
| 6 | ≤ 53 | 14 | ≤ 745 | 22 | ≤ 10570 | 30 | ≤ 150000 |
| 7 | ≤ 74 | 15 | ≤ 1038 | 23 | ≤ 14726 | 31 | > 150000 |

For another example, the BSR message includes the size of the to-be-transmitted data in the buffer, that is, the BSR message includes a value of the size of the to-be-transmitted data in the buffer. The size of the to-be-transmitted data in the buffer may be represented by using a real number or a character string. For example, the size of the to-be-transmitted data in the buffer is 1023. If 1023 is represented by using 10 bits, the size of the to-be-transmitted data in the buffer is 1111 1111 11. If a real number is used for representation, the size of the to-be-transmitted data in the buffer is 1023. Alternatively, if a character string is used for representation, the size of the to-be-transmitted data in the buffer is 1023.

In an example, the first terminal device sends the BSR information to the second terminal device. The BSR information is a single piece of signaling. There are a plurality of indicator fields in the BSR information, and one preset indicator field in the plurality of indicator fields may indicate the size of the to-be-transmitted data. A location of the preset indicator field in the BSR information and a size of the preset indicator field are not limited. Alternatively, the BSR information is a single piece of signaling. There are a plurality of bits in the BSR information, and one preset bit in the plurality of indicator fields may indicate the size of the to-be-transmitted data. A location of the preset bit in the BSR information and a size of the preset bit are not limited.

In another example, the BSR information is physical layer sidelink control information. A preset indicator field in the physical layer sidelink control information indicates the size of the to-be-transmitted data, or a preset bit in the physical layer sidelink control information indicates the size of the to-be-transmitted data. The physical layer sidelink control information may explicitly indicate the size of the to-be-transmitted data, or the physical layer sidelink control information may implicitly indicate the size of the to-be-transmitted data. For example, the physical layer sidelink control information may be 1^{st} stage SCI, 2^{nd} stage SCI, or SCI.

In an example, the BSR information is 2^{nd} stage SCI. There is a preset indicator field in the 2^{nd} stage SCI. The preset indicator field indicates the size of the to-be-transmitted data. For example, the preset indicator field in the 2^{nd} stage SCI includes a 5-bit buffer size field, and the 5-bit buffer size field represents the BSR information. In addition, the 2^{nd} stage SCI includes an identifier of the first terminal device and an identifier of the second terminal device. To be specific, the 2^{nd} stage SCI includes an identifier of a terminal device that sends the 2^{nd} stage SCI and an identifier of a terminal device that receives the 2^{nd} stage SCI. Therefore, the second terminal device knows that the first terminal device sends the BSR information to the second terminal device. In this case, the BSR information may explicitly indicate the size of the to-be-transmitted data.

In an example, the BSR information is 1^{st} stage SCI. There is a preset indicator field in the 1^{st} stage SCI. The preset indicator field indicates the size of the to-be-transmitted data. For example, the preset indicator field in the 1^{st} stage SCI includes a 5-bit buffer size field, and the 5-bit buffer size field represents the BSR information. In addition, before receiving the 1^{st} stage SCI or after receiving the 1^{st} stage SCI, the second terminal device further needs to receive identification information sent by the first terminal device, where the identification information indicates an identifier of the first terminal device and an identifier of the second terminal device. For example, the identification information is 2^{nd} stage SCI. Therefore, the second terminal device knows that the first terminal device sends the BSR information to the second terminal device. In this case, the BSR information may explicitly indicate the size of the to-be-transmitted data.

In an example, the BSR information is 2^{nd} stage SCI. There is a preset bit in the 2^{nd} stage SCI. The preset bit indicates the size of the to-be-transmitted data. For example, a CRC in the 2^{nd} stage SCI is scrambled by using x bits, to indicate the size of the to-be-transmitted data, where x is a positive integer. In addition, the 2^{nd} stage SCI includes an identifier of the first terminal device and an identifier of the second terminal device. To be specific, the 2^{nd} stage SCI includes an identifier of a terminal device that sends the 2^{nd} stage SCI and an identifier of a terminal device that receives the 2^{nd} stage SCI. Therefore, the second terminal device knows that the first terminal device sends the BSR information to the second terminal device. In this case, the BSR information may implicitly indicate the size of the to-be-transmitted data.

For example, the first terminal device sends the 2^{nd} stage SCI to the second terminal device, where the 2^{nd} stage SCI includes the identifier of the first terminal device and the identifier of the second terminal device. There is a CRC in the 2^{nd} stage SCI, and the unscrambled CRC in the 2^{nd} stage SCI is a 24-bit bit sequence: 0101 1010 0101 1010 0101 1010. The BSR information uses 11111 to indicate that the buffer size is greater than 150000 bytes. The last five bits of the CRC in the 2^{nd} stage SCI are scrambled by using five bits. In this case, the last five bits of the CRC in the 2^{nd} stage SCI are scrambled by using 11111, and it is obtained that a scrambled CRC in the 2^{nd} stage SCI is a 24-bit bit sequence 0101 1010 0101 1010 0100 0101. Therefore, after receiving the scrambled CRC, the second terminal device attempts to descramble the CRC by using all possible 5-bit BSR information. When the CRC is successfully descrambled by using 11111, the second terminal device may learn that the buffer size of the first terminal device is greater than 150000 bytes.

In an example, the BSR information is 1^{st} stage SCI. There is a preset bit in the 1^{st} stage SCI. The preset bit indicates the size of the to-be-transmitted data. For example, a CRC in the 1^{st} stage SCI is scrambled by using x bits, to indicate the size of the to-be-transmitted data, where x is a positive integer. In addition, before receiving the 1^{st} stage SCI or after receiving the 1^{st} stage SCI, the second terminal device further needs to receive identification information sent by the first terminal device, where the identification information indicates an identifier of the first terminal device and an identifier of the second terminal device. For example, the identification information is 2 ^{nd} stage SCI. Therefore, the second terminal device knows that the first terminal device sends the BSR information to the second terminal device. In this case, the BSR information may implicitly indicate the size of the to-be-transmitted data.

For example, the first terminal device sends the 1^{st} stage SCI and the 2^{nd} stage SCI to the second terminal device, where the 2^{nd} stage SCI includes the identifier of the first terminal device and the identifier of the second terminal device. There is a CRC in the 1^{st} stage SCI, and the unscrambled CRC in the 1^{st} stage SCI is a 24-bit bit sequence: 0101 1010 0101 1010 0101 1010. The BSR information uses 11111 to indicate that the buffer size is greater than 150000 bytes (bytes). The last five bits of the CRC in the 1^{st} stage SCI are scrambled by using five bits. In this case, the last five bits of the CRC in the 1^{st} stage SCI are scrambled by using 11111, and it is obtained that a scrambled CRC in the 1^{st} stage SCI is a 24-bit bit sequence 0101 1010 0101 1010 0100 0101. Therefore, after receiving the scrambled CRC, the second terminal device attempts to descramble the CRC by using all possible 5-bit BSR information. When the CRC is successfully descrambled by using 11111, the second terminal device may learn that the buffer size of the first terminal device is greater than 150000 bytes.

In still another example, the BSR information is MAC layer sidelink control information. A preset indicator field in the MAC layer sidelink control information indicates the size of the to-be-transmitted data, or a preset bit in the MAC layer sidelink control information indicates the size of the to-be-transmitted data. The MAC layer sidelink control information may explicitly indicate the size of the to-be-transmitted data, or the MAC layer sidelink control information may implicitly indicate the size of the to-be-transmitted data. For example, the MAC layer sidelink control information may be SL MAC CE information.

In an example, the BSR information is SL MAC CE information. There is a preset indicator field in the SL MAC CE information. The preset indicator field indicates the size of to-be-transmitted data. For example, the preset indicator field in the SL MAC CE information includes a 5-bit buffer size field, and the 5-bit buffer size field represents the BSR information. In addition, before receiving the SL MAC CE information or after receiving the SL MAC CE information, the second terminal device further needs to receive identification information sent by the first terminal device, where the identification information indicates an identifier of the first terminal device and an identifier of the second terminal device. For example, the identification information is 2^{nd} stage SCI. Therefore, the second terminal device knows that the first terminal device sends the BSR information to the second terminal device. In this case, the BSR information may explicitly indicate the size of the to-be-transmitted data.

In yet another example, the BSR information is RRC layer sidelink control information. A preset indicator field in the RRC layer sidelink control information indicates the size of the to-be-transmitted data, or a preset bit in the RRC layer sidelink control information indicates the size of the to-be-transmitted data. The RRC layer sidelink control information may explicitly indicate the size of the to-be-transmitted data, or the RRC layer sidelink control information may implicitly indicate the size of the to-be-transmitted data. For example, the RRC layer sidelink control information may be PC5 RRC information.

In an example, the BSR information is PC5 RRC information. There is a preset indicator field in the PC5 RRC information. The preset indicator field indicates the size of to-be-transmitted data. For example, the preset indicator field in the PC5 RRC information includes a 5-bit buffer size field, and the 5-bit buffer size field represents the BSR information. In addition, before receiving the PC5 RRC information or after receiving the PC5 RRC information, the second terminal device further needs to receive identification information sent by the first terminal device, where the identification information indicates an identifier of the first terminal device and an identifier of the second terminal device. For example, the identification information is 2^{nd} stage SCI. Therefore, the second terminal device knows that the first terminal device sends the BSR information to the second terminal device. In this case, the BSR information may explicitly indicate the size of the to-be-transmitted data.

There is no requirement on an execution sequence of the four steps: S21, S22, S23, and S24.

S25: The second terminal device determines the assistance information based on the buffer status report message, where the assistance information indicates an unoccupied resource set (or resource).

In an example, the assistance information specifically indicates a size and a location anchor of the resource for data transmission.

In an example, step S25 specifically includes the following processes: determining the size of the resource for data transmission based on the buffer status report message; and determining the assistance information based on the size of the resource for data transmission.

For example, after receiving the BSR information and the first information, the second terminal device determines, based on the first information, that the assistance information needs to be returned to the first terminal device. However, before returning the assistance information, the second terminal device needs to first determine the assistance information. The second terminal device determines the assistance information based on the BSR message.

In an example, in step S22, the second terminal device may already obtain the channel state information based on the CSI-RS measurement result, and the BSR message indicates the size of the to-be-transmitted data. The second terminal device may determine, based on the channel state information and the BSR information, the size of the resource that needs to be occupied by the first terminal device for data transmission. Then, the second terminal device performs sensing by using the size as a granularity, determines the unoccupied resource set or resource, and further determines an available resource set or resource. The second terminal device generates the assistance information, where the assistance information indicates the unoccupied resource set or resource.

In another example, after the second terminal device receives the BSR information, because the BSR message indicates the size of the to-be-transmitted data, the second terminal device may determine, based on the BSR, the size of the resource that needs to be occupied by the first terminal device for data transmission. Then, the second terminal device performs sensing by using the size as a granularity, determines the unoccupied resource set or resource, and further determines an available resource set or resource. The second terminal device generates the assistance information, where the assistance information indicates the unoccupied resource set or resource.

The granularity of the resource size may be a subchannel, a resource block group, a resource block, or the like. The granularity of the resource size is not limited.

To help the first terminal device determine a location of the resource, the assistance information may indicate the size of the resource for data transmission and the location anchor of the resource for data transmission. Alternatively, the assistance information may indicate the size of the resource set for data transmission and the location anchor of the resource set for data transmission. This is because "the resource for data transmission" is not necessarily one resource, but a resource set including at least one resource. Sizes of different resources may be the same or different, but location anchors of different resources are different. A location anchor refers to a start point of a resource, an end point of the resource, a midpoint of the resource, or the like.

The following uses a "resource" as an example for description, and the assistance information indicates a plurality of unoccupied resources.

In an example, the assistance information includes first indication information of each resource, and the first indication information indicates a size and a location anchor of the resource. In this case, the assistance information may indicate a plurality of unoccupied resources, and each resource has its own first indication information. In other words, the first indication information is an indication of an unoccupied resource, and the first indication information may be represented by using one index value. The first indication information of each resource indicates the size and the location anchor of the resource.

In another example, the assistance information includes second indication information of each resource and third indication information of each resource, the second indication information indicates a size of the resource, and the third indication information indicates a location anchor of the resource. In this case, the assistance information may indicate a plurality of unoccupied resources, and each resource has its own second indication information and third indication information. For example, the assistance information includes an indication of each resource, and the indication may be represented by using one field. The field includes a subfield 1 and a subfield 2. The subfield 1 indicates a size of the resource, and the subfield 2 indicates a location anchor of the resource.

In still another example, the assistance information includes fourth indication information and fifth indication information that is of each resource, the fourth indication information indicates sizes of resources, where the sizes of all the resources are the same, and the fifth indication information indicates a location anchor of the resource. In this case, the assistance information may indicate a plurality of unoccupied resources. Because sizes of the resources are the same, a same piece of fourth indication information may indicate the sizes of the resources. For example, the sizes of the resources are uniformly indicated by using one field. Each resource has its own fifth indication information, and the fifth indication information indicates a location anchor of the resource. In other words, location anchors of the resources are separately indicated by using different fields.

In addition, a quantity of resources indicated by the assistance information is a quantity of all unoccupied resources; or a quantity of resources indicated by the assistance information is a preset quantity.

In an example, the quantity of resources indicated by the assistance information is not limited. To be specific, if the second terminal device determines all the unoccupied resources, the second terminal device may indicate all the unoccupied resources by using the assistance information. It may be learned that the assistance information sent by the second terminal device to the first terminal device may indicate as many unoccupied resources as possible.

In another example, the quantity of resources indicated by the assistance information is limited. To be specific, the assistance information sent by the second terminal device to the first terminal device may indicate N unoccupied resources, where N is a positive integer greater than or equal to 1. If a quantity of unoccupied resources determined by the second terminal device is N, the quantity of resources indicated by the assistance information is N. If a quantity of unoccupied resources determined by the second terminal device is greater than N, N resources are selected from the unoccupied resources, for example, N resources with minimum noise and interference power are selected, and the quantity of resources indicated by the assistance information is N. If a quantity of unoccupied resources determined by the second terminal device is less than N, for example, is M, where M is a positive integer greater than or equal to 1 and less than N, the assistance information indicates the M resources; or the assistance information indicates the M resources, and a remaining field that is in the assistance information and that indicates the resources is set to null (or zero).

For example, the quantity of resources indicated by the assistance information is limited to 3. If the quantity of unoccupied resources determined by the second terminal device is 3, the quantity of resources indicated by the assistance information is 3. If the quantity of unoccupied resources determined by the second terminal device is greater than 3, three resources are selected from the unoccupied resources, for example, three resources with minimum noise and interference power are selected, and the quantity of resources indicated by the assistance information is 3. If the quantity of unoccupied resources determined by the second terminal device is less than 3, for example, is 2, the assistance information indicates the two resources; or the assistance information indicates the two resources and the 3^{rd} available resource field is set to null (or zero).

When the quantity of resources indicated by the assistance information is limited, the quantity of resources may be specified. For example, a maximum value of the quantity of resources indicated by the assistance information is 3.

Alternatively, when the quantity of resources indicated by the assistance information is limited, the first terminal device sends second information to the second terminal device, where the second information indicates a maximum quantity of resources. Therefore, the first terminal device limits a maximum quantity of resources returned by the second terminal device. In an example, the second information is physical layer sidelink control information, MAC layer sidelink control information, or RRC layer sidelink control information.

In an example, the first terminal device sends the second information to the second terminal device, where the second information is a single piece of signaling.

In another example, the second information is physical layer sidelink control information. In other words, the first terminal device sends the physical layer sidelink control information to the second terminal device, where the physical layer sidelink control information indicates the maximum quantity of resources. For example, the physical layer sidelink control information may be 1^{st} stage SCI, 2^{nd} stage SCI, or SCI.

In still another example, the second information is MAC layer sidelink control information. In other words, the first terminal device sends the MAC layer sidelink control information to the second terminal device, where the MAC layer sidelink control information indicates the maximum quantity of resources. For example, the MAC layer sidelink control information may be SL MAC CE information.

In yet another example, the second information is RRC layer sidelink control information. In other words, the first terminal device sends the RRC layer sidelink control information to the second terminal device, where the RRC layer sidelink control information indicates the maximum quantity of resources. For example, the RRC layer sidelink control information may be PC5 RRC information.

S26: The second terminal device sends the assistance information to the first terminal device, where the assistance information is used to assist the first terminal device in selecting the resource for data transmission.

In an example, the assistance information is physical layer sidelink control information, MAC layer sidelink control information, or RRC layer sidelink control information.

For example, refer to step S102 shown in FIG. 9. Details are not described again.

S27: The first terminal device determines the resource for data transmission based on the assistance information.

In an example, step S27 specifically includes the following implementations.

First implementation of step S27: Select, from a resource set indicated by the assistance information, a resource as the resource for data transmission, where the assistance information indicates an unoccupied resource set (or resource).

In an example, the first implementation of step S27 specifically includes: randomly selecting, from the resource set indicated by the assistance information, a resource as the resource for data transmission; or selecting, based on a priority of a resource in the resource set indicated by the assistance information, a resource with a highest priority as the resource for data transmission.

Second implementation of step S27: Determine the resource for data transmission based on a resource set indicated by the assistance information and a resource set obtained through sensing.

In an example, the second implementation of step S27 specifically includes: determining a shared resource between the resource set indicated by the assistance information and the resource set obtained through sensing; and selecting, from the shared resource, a resource as the resource for data transmission.

For example, because the assistance information may indicate the unoccupied resource, the first terminal device may determine the resource for data transmission based on the assistance information.

In an example, the assistance information may indicate the unoccupied resource set. The first terminal device may select, based on the size of the to-be-transmitted data, an appropriate resource set from the resource set indicated by the assistance information, where the resource set selected by the first terminal device may carry the to-be-transmitted data. In this case, the first terminal device determines the resource for data transmission.

For example, the first terminal device randomly selects, from the resource set indicated by the assistance information, a resource that can carry the to-be-transmitted data as the resource for data transmission.

For another example, if a resource in the resource set indicated by the assistance information has a priority, the first terminal device may use, based on the priority of the resource, a resource with a highest priority as the resource for data transmission.

In another example, the first terminal device may sense a resource, for example, sense a resource by using a size of the resource indicated by the assistance information, or sense a resource by using the size of the to-be-transmitted data indicated by the BSR information. In this case, the assistance information indicates a resource set determined by the second terminal device, the first terminal device also obtains a resource set through sensing, and the resource set obtained by the first terminal device through sensing is an unoccupied resource determined by the first terminal device. The first terminal device selects, based on the size of the to-be-transmitted data, an appropriate resource set from the resource set indicated by the assistance information and the resource set obtained by the first terminal device through sensing. The resource set selected by the first terminal device may carry the to-be-transmitted data. In this case, the first terminal device determines the resource for data transmission. When the first terminal device senses a resource by using a size of a resource indicated by the assistance information, that is, the first terminal device senses a resource by using a resource granularity indicated by the assistance information, the first terminal device does not need to depend on a channel quality indicator (channel quality indicator, CQI) of the second terminal device to determine strength of sensing a resource.

For example, the first terminal device obtains an intersection between the resource set indicated by the assistance information and the resource set obtained by the first terminal device through sensing, to obtain a shared resource, and then randomly selects, from the shared resource, a resource that can carry the to-be-transmitted data as the resource for data transmission, or uses a resource with a highest priority in the shared resource as the resource for data transmission.

"The resource for data transmission" may be a frequency domain resource, a time domain resource, or a time-frequency resource.

S28: The first terminal device sends sidelink control information to the second terminal device.

For example, the first terminal device sends the sidelink control information to the second terminal device, where the sidelink control information indicates information, such as an MCS, used for data transmission. To be specific, before the first terminal device sends data to the second terminal device, the first terminal device needs to indicate necessary information, such as the MCS, used for data receiving. Then, the first terminal device notifies, by using the sidelink control information, the second terminal device of the necessary information used for data receiving.

In an example, the first terminal device sends the sidelink control information to the second terminal device by using the resource for data transmission in step S27.

In an example, the sidelink control information is physical layer sidelink control information, MAC layer sidelink control information, or RRC layer sidelink control information. For example, the sidelink control information is 1^{st} stage SCI, 2^{nd} stage SCI, or SCI.

Step S28 is an optional step. If step S28 is not performed, it may be specified in the protocol that both the first terminal device and the second terminal device have learned of the necessary information used for data receiving.

An execution sequence between step S28 and the foregoing steps S21 to S27 is not limited, provided that step S28 is performed before step S29.

S29: The first terminal device sends data to the second terminal device based on the resource for data transmission.

For example, the first terminal device sends data to the second terminal device by using the resource for data transmission obtained in step S27.

In this embodiment, the first terminal device is a data transmit end, and the second terminal device is a data receive end. The first terminal device sends the first information to the second terminal device, where the first information indicates the second terminal device to send the assistance information, and the assistance information is used to assist the first terminal device in selecting the resource for data transmission. For example, the assistance information indicates the unoccupied resource. Further, the resource provided by the second terminal device may be used as a reference for selecting a resource by the first terminal device. The assistance information may help the first terminal device exclude a resource occupied by a hidden terminal device, prevent different terminal devices from sending data by using a same resource, and avoid signal collision and mutual interference in a data transmission process, to improve a success rate of transmitting data to the second terminal device by the first terminal device. In addition, from a perspective of resource multiplexing, the resource may be appropriately used, and resource utilization efficiency may be improved. In addition, the first terminal device sends the BSR information to the second terminal device. Therefore, when determining the assistance information, the second terminal device may more appropriately calculate a sensing resource granularity based on the size of the to-be-transmitted data indicated by the BSR information, to determine a resource suitable for the first terminal device to perform data transmission, so that the resource is appropriately used.

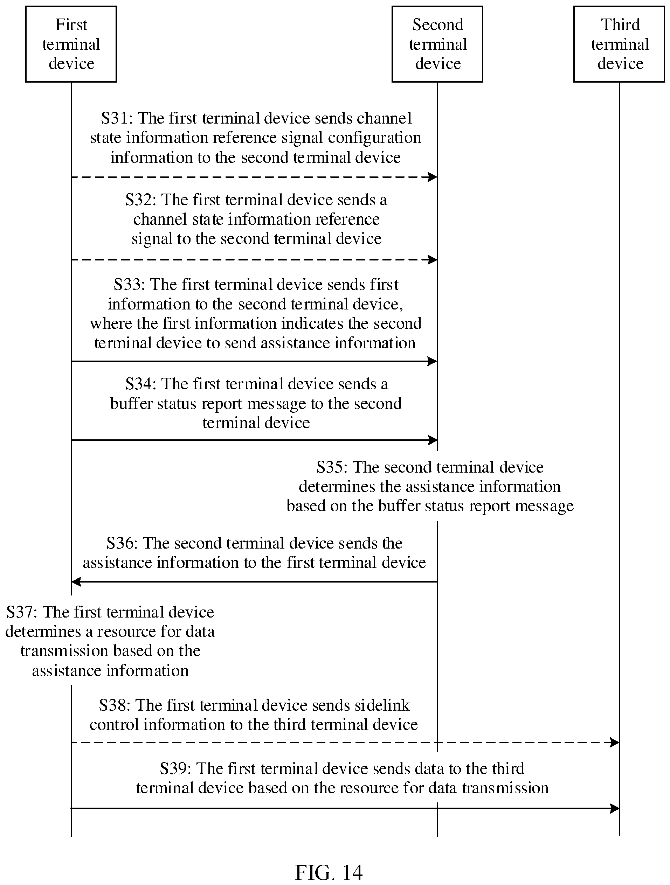

FIG. 14 is a signaling diagram of another device-to-device based resource determining method according to an embodiment of this application. As shown in FIG. 14, the method includes the following steps.

S31: A first terminal device sends channel state information reference signal configuration information to a second terminal device, where the channel state information reference signal configuration information indicates to receive a channel state information reference signal.

For example, in this embodiment, the first terminal device is a data transmit end, the second terminal device is an assistance end (where the second terminal device is not a data receive end), and a third terminal device is a data receive end. The second terminal device may not have a capability of scheduling a resource for data transmission, or may have the capability of scheduling the resource for data transmission. This is not limited.

For this step, refer to step S21 shown in FIG. 13. Details are not described again. Step S31 is an optional step.

S32: The first terminal device sends the channel state information reference signal to the second terminal device, where the channel state information reference signal is used to determine channel state information.

For example, for this step, refer to step S22 shown in FIG. 13. Details are not described again. Step S32 is an optional step.

S33: The first terminal device sends first information to the second terminal device, where the first information indicates the second terminal device to send assistance information.

For example, for this step, refer to step S23 shown in FIG. 13. Details are not described again.

S34: The first terminal device sends a buffer status report message to the second terminal device, where the buffer status report message indicates a size of to-be-transmitted data.

For example, for this step, refer to step S24 shown in FIG. 13. Details are not described again.

S35: The second terminal device determines the assistance information based on the buffer status report message, where the assistance information indicates an unoccupied resource set (or resource).

For example, for this step, refer to step S25 shown in FIG. 13. Details are not described again.

S36: The second terminal device sends the assistance information to the first terminal device, where the assistance information is used to assist the first terminal device in selecting the resource for data transmission.

For example, for this step, refer to step S26 shown in FIG. 13. Details are not described again.

S37: The first terminal device determines the resource for data transmission based on the assistance information.

For example, for this step, refer to step S27 shown in FIG. 13. Different from FIG. 13, the resource for data transmission determined in step S37 is a resource that needs to be used when the first terminal device transmits data to the third terminal device.

In an example, the assistance information may indicate the unoccupied resource set. The first terminal device may select, based on the size of the to-be-transmitted data, an appropriate resource set from the resource set indicated by the assistance information, where the resource set selected by the first terminal device may carry the to-be-transmitted data. In this case, the first terminal device determines the resource for data transmission, and the resource for data transmission is the resource that needs to be used when the first terminal device transmits data to the third terminal device.

In another example, the first terminal device may sense a resource, for example, sense a resource by using a size of the resource indicated by the assistance information, or sense a resource by using the size of the to-be-transmitted data indicated by the BSR information. In this case, the assistance information indicates a resource set determined by the second terminal device, the first terminal device also obtains a resource set through sensing, and the resource set obtained by the first terminal device through sensing is an unoccupied resource determined by the first terminal device. The first terminal device selects, based on the size of the to-be-transmitted data, an appropriate resource set from the resource set indicated by the assistance information and the resource set obtained by the first terminal device through sensing. The resource set selected by the first terminal device may carry the to-be-transmitted data. In this case, the first terminal device determines the resource for data transmission, and the resource for data transmission is the resource that needs to be used when the first terminal device transmits data to the third terminal device.

"The resource for data transmission" may be a frequency domain resource, a time domain resource, or a time-frequency resource.

S38: The first terminal device sends sidelink control information to the third terminal device.

For example, the first terminal device sends the sidelink control information to the third terminal device, where the sidelink control information indicates information, such as an MCS, used for data transmission. To be specific, before the first terminal device sends data to the third terminal device, the first terminal device needs to indicate necessary information, such as the MCS, used for data receiving. Then, the first terminal device notifies, by using the sidelink control information, the third terminal device of the necessary information used for data receiving.

In an example, the first terminal device sends the sidelink control information to the third terminal device by using the resource for data transmission in step S37.

In an example, the sidelink control information is physical layer sidelink control information, MAC layer sidelink control information, or RRC layer sidelink control information. For example, the sidelink control information is 1^{st} stage SCI, 2^{nd} stage SCI, or SCI.

Step S38 is an optional step. If step S38 is not performed, it may be specified in the protocol that both the first terminal device and the third terminal device have learned of the necessary information used for data receiving.

An execution sequence between step S38 and the foregoing steps S31 to S37 is not limited, provided that step S38 is performed before step S39.

S39: The first terminal device sends data to the third terminal device based on the resource for data transmission.

For example, the first terminal device sends data to the third terminal device by using the resource for data transmission obtained in step S37.

In this embodiment, the first terminal device is a data transmit end, the second terminal device is an assistance end, and the third terminal device is a data receive end. The first terminal device sends the first information to the second terminal device, where the first information indicates the second terminal device to send the assistance information, and the assistance information is used to assist the first terminal device in selecting the resource for data transmission. For example, the assistance information indicates the unoccupied resource. Further, although the second terminal device is not a data receive end, the resource provided by the second terminal device may be used as a reference for selecting a resource by the first terminal device. The assistance information may help the first terminal device exclude a resource occupied by a hidden terminal device, prevent different terminal devices from sending data by using a same resource, and avoid signal collision and mutual interference in a data transmission process, to improve a success rate of transmitting data to the third terminal device by the first terminal device. In addition, from a perspective of resource multiplexing, the resource may be appropriately used, and resource utilization efficiency may be improved. In addition, the first terminal device sends the BSR information to the second terminal device. Therefore, when determining the assistance information, the second terminal device may more appropriately calculate a sensing resource granularity based on the size of the to-be-transmitted data indicated by the BSR information, to determine a resource suitable for the first terminal device to perform data transmission, so that the resource is appropriately used.

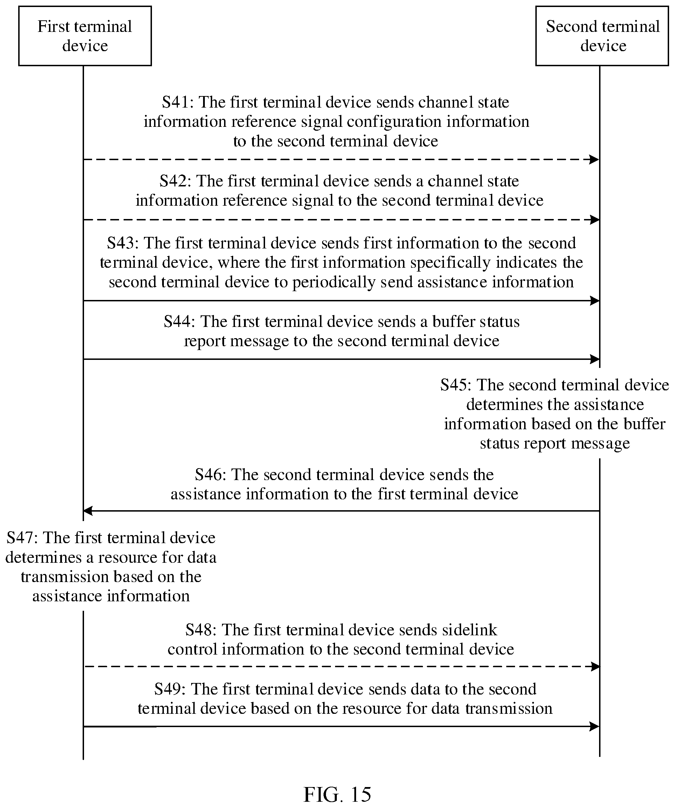

FIG. 15 is a signaling diagram of another device-to-device based resource determining method according to an embodiment of this application. As shown in FIG. 15, the method includes the following steps.

S41: A first terminal device sends channel state information reference signal configuration information to a second terminal device, where the channel state information reference signal configuration information indicates to receive a channel state information reference signal.

For example, in this embodiment, the first terminal device communicates with the second terminal device. The first terminal device is a data transmit end, the second terminal device is a data receive end, and the second terminal device is an assistance end. The second terminal device may not have a capability of scheduling a resource for data transmission, or may have the capability of scheduling the resource for data transmission. This is not limited.

For this step, refer to step S21 shown in FIG. 13. Details are not described again. Step S41 is an optional step.

S42: The first terminal device sends the channel state information reference signal to the second terminal device, where the channel state information reference signal is used to determine channel state information.

For example, for this step, refer to step S22 shown in FIG. 13. Details are not described again. Step S42 is an optional step.

S43: The first terminal device sends first information to the second terminal device, where the first information specifically indicates the second terminal device to periodically send assistance information.

In an example, a first indicator field or a first bit in the first information indicates a periodicity for sending the assistance information, and a second indicator field or a second bit in the first information indicates a time point for sending the assistance information.

In an example, the first information is physical layer sidelink control information, media access control layer sidelink control information, or radio resource control layer sidelink control information.

For example, before needing to send data to the second terminal device, the first terminal device first sends the first information to the second terminal device. In this embodiment, the first information may also be referred to as "assistance information sending configuration information".

When the first terminal device needs to send data, the first terminal device sends the first information to the second terminal device, where the first information indicates the second terminal device to periodically send the assistance information, and the assistance information is used to assist the first terminal device in selecting the resource for data transmission. In an example, the first terminal device may obtain the resource through sensing, and send the first information to the second terminal device by using the resource obtained through sensing. Because the first information indicates the second terminal device to periodically feed back the assistance information, the first terminal device does not need to continuously trigger the second terminal device to feed back the assistance information, so that signaling overheads of the first terminal device are reduced.

There are a plurality of indicator fields in the first information. One first indicator field in the plurality of indicator fields may indicate the periodicity for sending the assistance information, and one second indicator field in the plurality of indicator fields may indicate the time point for sending the assistance information. A location of the first indicator field in the first information, a size of the first indicator field, a location of the second indicator field in the first information, and a size of the second indicator field are not limited.

Alternatively, there are a plurality of bits in the first information. One first bit in the plurality of bits may indicate the periodicity for sending the assistance information, and one second bit in the plurality of bits may indicate the time point for sending the assistance information. A location of the first bit in the first information, a size of the first bit, a location of the second bit in the first information, and a size of the second bit are not limited.

There are a plurality of indicator fields in the first information, and one first indicator field in the plurality of indicator fields may indicate the periodicity for sending the assistance information; there are a plurality of bits in the first information, and one second bit in the plurality of bits may indicate the time point for sending the assistance information. A location of the first indicator field in the first information, a size of the first indicator field, a location of the second bit in the first information, and a size of the second bit are not limited.

Alternatively, there are a plurality of bits in the first information, and one first bit in the plurality of bits may indicate the periodicity for sending the assistance information; there are a plurality of indicator fields in the first information, and one second indicator field in the plurality of indicator fields may indicate the time point for sending the assistance information. A location of the first bit in the first information, a size of the first bit, a location of the second indicator field in the first information, and a size of the second indicator field are not limited.

In an example, "the periodicity for sending the assistance information" may be an actual time interval for sending the assistance information. Alternatively, "the periodicity for sending the assistance information" may be an index of an actual time interval for sending the assistance information. In this case, an index table between the actual time interval and the index needs to be created.

For example, "the periodicity for sending the assistance information" is an actual time interval for sending the assistance information. If the actual time interval is four subframes (subframes), "the periodicity for sending the assistance information" may be indicated by using 4.

For another example, "the periodicity for sending the assistance information" may be an index of an actual time interval for sending the assistance information. If the actual time interval is four subframes, an index 1 may be obtained based on the index table between the actual time interval and the index. In this case, "the periodicity for sending the assistance information" is indicated by using 1.

In an example, "the time point for sending the assistance information" may be an absolute time point, or may be a relative time point.

For example, "the time point for sending the assistance information" is an absolute time point. If "the time point for sending the assistance information" is three subframes, "the time point for sending the assistance information" is indicated by using 3.

For another example, "the time point for sending the assistance information" is a relative time point. If "the time point for sending the assistance information" is three slots, it is determined that the second terminal device starts to periodically send the assistance information after three slots after receiving the first information.

A time unit may be a slot (slot), a subframe (subframe), a transmission time interval (transmission time interval, TTI), a symbol (symbol), a frame (frame), a millisecond, a second, or the like. This is not limited.

In an example, the first terminal device sends the first information to the second terminal device. The first information is a single piece of signaling.

In another example, the first information is physical layer sidelink control information. A first indicator field or a first bit in the physical layer sidelink control information indicates the periodicity for sending the assistance information, and a second indicator field or a second bit in the physical layer sidelink control information indicates the time point for sending the assistance information. For example, the physical layer sidelink control information may be 1^{st} stage SCI, 2^{nd} stage SCI, or SCI.

In an example, the first information is 2^{nd} stage SCI. There are a first indicator field and a second indicator field in the 2^{nd} stage SCI, the first indicator field indicates the periodicity for sending the assistance information, and the second indicator field indicates the time point for sending the assistance information. A value in the first indicator field may be represented by using an integer or a character string, which is not limited. Further, the value in the first indicator field indicates the periodicity for sending the assistance information. A value in the second indicator field may be represented by using an integer or a character string, which is not limited. Further, the value in the second indicator field indicates the time point for sending the assistance information. In addition, the 2^{nd} stage SCI includes an identifier of the first terminal device and an identifier of the second terminal device. Therefore, the second terminal device may learn that the first terminal device requests the second terminal device to periodically send the assistance information.

In an example, the first information is 1^{st} stage SCI. There are a first indicator field and a second indicator field in the 1^{st} stage SCI, the first indicator field indicates the periodicity for sending the assistance information, and the second indicator field indicates the time point for sending the assistance information. A value in the first indicator field may be represented by using an integer or a character string, which is not limited. Further, the value in the first indicator field indicates the periodicity for sending the assistance information. A value in the second indicator field may be represented by using an integer or a character string, which is not limited. Further, the value in the second indicator field indicates the time point for sending the assistance information. In addition, before receiving the 1^{st} stage SCI or after receiving the 1^{st} stage SCI, the second terminal device further needs to receive identification information sent by the first terminal device, where the identification information indicates an identifier of the first terminal device and an identifier of the second terminal device. For example, the identification information is 2^{nd} stage SCI. Therefore, the second terminal device may learn that the first terminal device requests the second terminal device to periodically send the assistance information.

In an example, the first information is 2^{nd} stage SCI. There are a first bit and a second bit in the 2^{nd} stage SCI. The first bit indicates the periodicity for sending the assistance information, and the second bit indicates the time point for sending the assistance information. The first bit may be a bit sequence, and the second bit may be a bit sequence. Original bits in the 2^{nd} stage SCI may be scrambled to obtain the first bit and the second bit. In addition, the 2^{nd} stage SCI includes an identifier of the first terminal device and an identifier of the second terminal device. Therefore, the second terminal device may learn that the first terminal device requests the second terminal device to periodically send the assistance information.

In an example, the first information is 1^{st} stage SCI. There are a first bit and a second bit in the 1^{st} stage SCI, the first bit indicates the periodicity for sending the assistance information, and the second bit indicates the time point for sending the assistance information. The first bit may be a bit sequence, and the second bit may be a bit sequence. Original bits in the 1^{st} stage SCI may be scrambled to obtain the first bit and the second bit. In addition, before receiving the 1^{st} stage SCI or after receiving the 1^{st} stage SCI, the second terminal device further needs to receive identification information sent by the first terminal device, where the identification information indicates an identifier of the first terminal device and an identifier of the second terminal device. For example, the identification information is 2^{nd} stage SCI. Therefore, the second terminal device may learn that the first terminal device requests the second terminal device to periodically send the assistance information.

In still another example, the first information is MAC layer sidelink control information. A first indicator field or a first bit in the MAC layer sidelink control information indicates the periodicity for sending the assistance information, and a second indicator field or a second bit in the MAC layer sidelink control information indicates the time point for sending the assistance information. For example, the MAC layer sidelink control information may be SL MAC CE information.

For example, the first information is SL MAC CE information. There are a first indicator field and a second indicator field in the SL MAC CE information, the first indicator field indicates the periodicity for sending the assistance information, and the second indicator field indicates the time point for sending the assistance information. A value in the first indicator field may be represented by using an integer or a character string, which is not limited. Further, the value in the first indicator field indicates the periodicity for sending the assistance information. A value in the second indicator field may be represented by using an integer or a character string, which is not limited. Further, the value in the second indicator field indicates the time point for sending the assistance information. In addition, before receiving the SL MAC CE information or after receiving the SL MAC CE information, the second terminal device further needs to receive identification information sent by the first terminal device, where the identification information indicates an identifier of the first terminal device and an identifier of the second terminal device. For example, the identification information is 2^{nd} stage SCI. Therefore, the second terminal device may learn that the first terminal device requests the second terminal device to periodically send the assistance information.

In yet another example, the first information is RRC layer sidelink control information. A first indicator field or a first bit in the RRC layer sidelink control information indicates the periodicity for sending the assistance information, and a second indicator field or a second bit in the RRC layer sidelink control information indicates the time point for sending the assistance information. For example, the RRC layer sidelink control information may be PC5 RRC information.

In an example, the first information is PC5 RRC information. There are a first indicator field and a second indicator field in the PC5 RRC information, the first indicator field indicates the periodicity for sending the assistance information, and the second indicator field indicates the time point for sending the assistance information. A value in the first indicator field may be represented by using an integer or a character string, which is not limited. Further, the value in the first indicator field indicates the periodicity for sending the assistance information. A value in the second indicator field may be represented by using an integer or a character string, which is not limited. Further, the value in the second indicator field indicates the time point for sending the assistance information. In addition, before receiving the PC5 RRC information or after receiving the PC5 RRC information, the second terminal device further needs to receive identification information sent by the first terminal device, where the identification information indicates an identifier of the first terminal device and an identifier of the second terminal device. For example, the identification information is 2^{nd} stage SCI. Therefore, the second terminal device may learn that the first terminal device requests the second terminal device to periodically send the assistance information.

S44: The first terminal device sends a buffer status report message to the second terminal device, where the buffer status report message indicates a size of to-be-transmitted data.

In an example, a preset indicator field or a scrambled bit in the buffer status report message indicates the size of the to-be-transmitted data.

In an example, the buffer status report message is physical layer sidelink control information, MAC layer sidelink control information, or RRC layer sidelink control information.

For example, the first terminal device sends the BSR message to the second terminal device. To help the second terminal device determine an appropriate resource for the first terminal device, the BSR message needs to indicate the size of the to-be-transmitted data of the first terminal device. For this step, refer to step S24 shown in FIG. 13. In this embodiment, compared with step S24 shown in FIG. 13, some additional content is described below.

Because the first information indicates the second terminal device to periodically send the assistance information, and the first information is sent by the first terminal device to the second terminal device, the first terminal device knows the periodicity and the time point at which the second terminal device sends the assistance information. Therefore, the first terminal device may send the BSR information to the second terminal device before the second terminal device sends each piece of assistance information. That is, before sending each piece of assistance information, the second terminal device receives the BSR information sent by the first terminal device.

In an example, the first terminal device may periodically send the BSR information. In this case, a periodicity for sending the BSR information is the same as the periodicity for sending the assistance information, that is, a BSR periodicity is the same as an assistance information periodicity. Alternatively, there is a multiple relationship between a periodicity for sending the BSR information and the periodicity for sending the assistance information, that is, there is a multiple relationship between a BSR periodicity and an assistance information periodicity. For example, if the periodicity for sending the assistance information is 20 subframes, the periodicity for sending the BSR information may be 10 subframes, 20 subframes, or 40 subframes.

In an example, the first terminal device may aperiodically send the BSR information. In this case, because the first terminal device knows the periodicity and the time point at which the second terminal device sends the assistance information, the first terminal device only needs to send the BSR information to the second terminal device before the second terminal device sends the assistance information. For example, if the assistance information periodicity is T, and the second terminal device sends the assistance information at a time point 0, a time point T, a time point 2T, and a time point 3T, the first terminal device may send or not send the BSR information during time [0, T], time [T, 2T], and time [2T, 3T], or may send the BSR information at any time within these time periods.

S45: The second terminal device determines the assistance information based on the buffer status report message, where the assistance information indicates an unoccupied resource set (or resource).

In an example, the assistance information specifically indicates a size and a location anchor of the resource for data transmission.

In an example, step S55 specifically includes the following processes: determining the size of the resource for data transmission based on the buffer status report message; and determining the assistance information based on the size of the resource for data transmission.

For example, for this step, refer to step S25 shown in FIG. 13. Details are not described again.

S46: The second terminal device sends the assistance information to the first terminal device, where the assistance information is used to assist the first terminal device in selecting the resource for data transmission.

In an example, the assistance information is physical layer sidelink control information, MAC layer sidelink control information, or RRC layer sidelink control information.

For example, for this step, refer to step S26 in FIG. 13. Details are not described again.

S47: The first terminal device determines the resource for data transmission based on the assistance information.

In an example, step S47 specifically includes the following implementations.

First implementation of step S47: Select, from a resource set indicated by the assistance information, a resource as the resource for data transmission, where the assistance information indicates an unoccupied resource set (or resource).

In an example, the first implementation of step S47 specifically includes: randomly selecting, from the resource set indicated by the assistance information, a resource as the resource for data transmission; or selecting, based on a priority of a resource in the resource set indicated by the assistance information, a resource with a highest priority as the resource for data transmission.

Second implementation of step S47: Determine the resource for data transmission based on a resource set indicated by the assistance information and a resource set obtained through sensing.

In an example, the second implementation of step S47 specifically includes: determining a shared resource between the resource set indicated by the assistance information and the resource set obtained through sensing; and selecting, from the shared resource, a resource as the resource for data transmission.

For example, for this step, refer to step S27 shown in FIG. 13. Details are not described again.

S48: The first terminal device sends sidelink control information to the second terminal device.

For example, for this step, refer to step S28 shown in FIG. 13. Details are not described again.

In an example, the sidelink control information is physical layer sidelink control information, MAC layer sidelink control information, or RRC layer sidelink control information. For example, the sidelink control information is 1^{st} stage SCI, 2^{nd} stage SCI, or SCI.

Step S48 is an optional step. If step S48 is not performed, it may be specified in the protocol that both the first terminal device and the second terminal device have learned necessary information used for data receiving.

An execution sequence between step S48 and the foregoing steps S41 to S47 is not limited, provided that step S28 is performed before step S49.

S49: The first terminal device sends data to the second terminal device based on the resource for data transmission.

For example, for this step, refer to step S29 shown in FIG. 13. Details are not described again.

In this embodiment, the first terminal device is a data transmit end, and the second terminal device is a data receive end. The first terminal device sends the first information to the second terminal device, where the first information indicates the second terminal device to periodically send the assistance information, and the assistance information is used to assist the first terminal device in selecting the resource for data transmission. For example, the assistance information indicates the unoccupied resource. Further, the resource provided by the second terminal device may be used as a reference for selecting a resource by the first terminal device. The assistance information may help the first terminal device exclude a resource occupied by a hidden terminal device, prevent different terminal devices from sending data by using a same resource, and avoid signal collision and mutual interference in a data transmission process, to improve a success rate of transmitting data to the second terminal device by the first terminal device. In addition, from a perspective of resource multiplexing, the resource may be appropriately used, and resource utilization efficiency may be improved. In addition, to help the first terminal device obtain a resource required for each transmission, the first terminal device does not need to continuously trigger the second terminal device to return the assistance information, and a manner in which the first information indicates the second terminal device to periodically send the assistance information is used, so that the second terminal device periodically returns the assistance information. The assistance information returned each time is used to assist the first terminal device in selecting the resource for data transmission. Therefore, signaling overheads of the first terminal device are reduced. In addition, the first terminal device sends the BSR information to the second terminal device. Therefore, when determining the assistance information, the second terminal device may more appropriately calculate a sensing resource granularity based on the size of the to-be-transmitted data indicated by the BSR information, to determine a resource suitable for the first terminal device to perform data transmission, so that the resource is appropriately used.

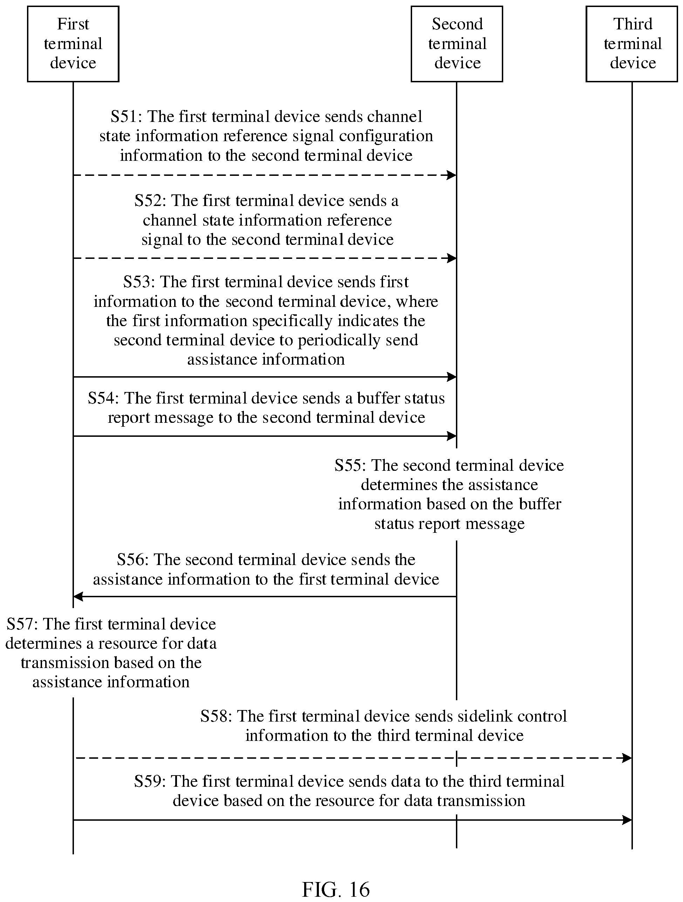

FIG. 16 is a signaling diagram of another device-to-device based resource determining method according to an embodiment of this application. As shown in FIG. 16, the method includes the following steps.

S51: A first terminal device sends channel state information reference signal configuration information to a second terminal device, where the channel state information reference signal configuration information indicates to receive a channel state information reference signal.

For example, in this embodiment, the first terminal device is a data transmit end, the second terminal device is an assistance end (where the second terminal device is not a data receive end), and a third terminal device is a data receive end. The second terminal device may not have a capability of scheduling a resource for data transmission, or may have the capability of scheduling the resource for data transmission. This is not limited.

For this step, refer to step S41 shown in FIG. 15. Details are not described again. Step S51 is an optional step.

S52: The first terminal device sends the channel state information reference signal to the second terminal device, where the channel state information reference signal is used to determine channel state information.

For example, for this step, refer to step S42 shown in FIG. 15. Details are not described again. Step S52 is an optional step.

S53: The first terminal device sends first information to the second terminal device, where the first information specifically indicates the second terminal device to periodically send assistance information.

In an example, a first indicator field or a first bit in the first information indicates a periodicity for sending the assistance information, and a second indicator field or a second bit in the first information indicates a time point for sending the assistance information.

In an example, the first information is physical layer sidelink control information, media access control layer sidelink control information, or radio resource control layer sidelink control information.

For example, before needing to send data to the second terminal device, the first terminal device first sends the first information to the second terminal device. In this embodiment, the first information may also be referred to as "assistance information sending configuration information".

For this step, refer to step S43 shown in FIG. 15. Details are not described again.

S54: The first terminal device sends a buffer status report message to the second terminal device, where the buffer status report message indicates a size of to-be-transmitted data.

In an example, a preset indicator field or a scrambled bit in the buffer status report message indicates the size of the to-be-transmitted data.

In an example, the buffer status report message is physical layer sidelink control information, MAC layer sidelink control information, or RRC layer sidelink control information.

For example, for this step, refer to step S44 shown in FIG. 15. Details are not described again.

S55: The second terminal device determines the assistance information based on the buffer status report message, where the assistance information indicates an unoccupied resource set (or resource).

In an example, the assistance information specifically indicates a size and a location anchor of the resource for data transmission.

In an example, step S55 specifically includes the following processes: determining the size of the resource for data transmission based on the buffer status report message; and determining the assistance information based on the size of the resource for data transmission.

For example, for this step, refer to step S45 shown in FIG. 15. Details are not described again.

S56: The second terminal device sends the assistance information to the first terminal device, where the assistance information is used to assist the first terminal device in selecting the resource for data transmission.

In an example, the assistance information is physical layer sidelink control information, MAC layer sidelink control information, or RRC layer sidelink control information.

For example, for this step, refer to step S46 shown in FIG. 15. Details are not described again.

S57: The first terminal device determines the resource for data transmission based on the assistance information.

In an example, step S57 specifically includes the following implementations.

First implementation of step S57: Select, from a resource set indicated by the assistance information, a resource as the resource for data transmission, where the assistance information indicates an unoccupied resource set (or resource).

In an example, the first implementation of step S57 specifically includes: randomly selecting, from the resource set indicated by the assistance information, a resource as the resource for data transmission; or selecting, based on a priority of a resource in the resource set indicated by the assistance information, a resource with a highest priority as the resource for data transmission.

Second implementation of step S57: Determine the resource for data transmission based on a resource set indicated by the assistance information and a resource set obtained through sensing.

In an example, the second implementation of step S57 specifically includes: determining a shared resource between the resource set indicated by the assistance information and the resource set obtained through sensing; and selecting, from the shared resource, a resource as the resource for data transmission.

For example, for this step, refer to step S47 shown in FIG. 15. However, different from FIG. 15, the resource for data transmission determined in step S57 is a resource that needs to be used when the first terminal device transmits data to the third terminal device.

S58: The first terminal device sends sidelink control information to the third terminal device.

For example, the first terminal device sends the sidelink control information to the third terminal device, where the sidelink control information indicates information, such as an MCS, for data transmission. To be specific, before the first terminal device sends data to the third terminal device, the first terminal device indicates necessary information, such as the MCS, used for data receiving. Then, the first terminal device notifies, by using the sidelink control information, the third terminal device of the necessary information used for data receiving.

In an example, the first terminal device sends the sidelink control information to the third terminal device by using the resource for data transmission in step S57.

In an example, the sidelink control information is physical layer sidelink control information, MAC layer sidelink control information, or RRC layer sidelink control information. For example, the sidelink control information is 1^{st} stage SCI, 2^{nd} stage SCI, or SCI.

Step S58 is an optional step. If step S58 is not performed, it may be specified in the protocol that both the first terminal device and the third terminal device have learned of the necessary information used for data receiving.

An execution sequence between step S58 and the foregoing steps S51 to S57 is not limited, provided that step S58 is performed before step S59.

S59: The first terminal device sends data to the third terminal device based on the resource for data transmission.

For example, the first terminal device sends data to the third terminal device by using the resource for data transmission obtained in step S57.

In this embodiment, the first terminal device is a data transmit end, the second terminal device is an assistance end, and the third terminal device is a data receive end. The first terminal device sends the first information to the second terminal device, where the first information indicates the second terminal device to periodically send the assistance information, and the assistance information is used to assist the first terminal device in selecting the resource for data transmission. For example, the assistance information indicates the unoccupied resource. Further, although the second terminal device is not a data receive end, the resource provided by the second terminal device may be used as a reference for selecting a resource by the first terminal device. The assistance information may help the first terminal device exclude a resource occupied by a hidden terminal device, prevent different terminal devices from sending data by using a same resource, and avoid signal collision and mutual interference in a data transmission process, to improve a success rate of transmitting data to the third terminal device by the first terminal device. In addition, from a perspective of resource multiplexing, the resource may be appropriately used, and resource utilization efficiency may be improved. In addition, to help the first terminal device obtain a resource required for each transmission, the first terminal device does not need to continuously trigger the second terminal device to return the assistance information, and a manner in which the first information indicates the second terminal device to periodically send the assistance information is used, so that the second terminal device periodically returns the assistance information. The assistance information returned each time is used to assist the first terminal device in selecting the resource for data transmission. Therefore, signaling overheads of the first terminal device are reduced. In addition, the first terminal device sends the BSR information to the second terminal device. Therefore, when determining the assistance information, the second terminal device may more appropriately calculate a sensing resource granularity based on the size of the to-be-transmitted data indicated by the BSR information, to determine a resource suitable for the first terminal device to perform data transmission, so that the resource is appropriately used.

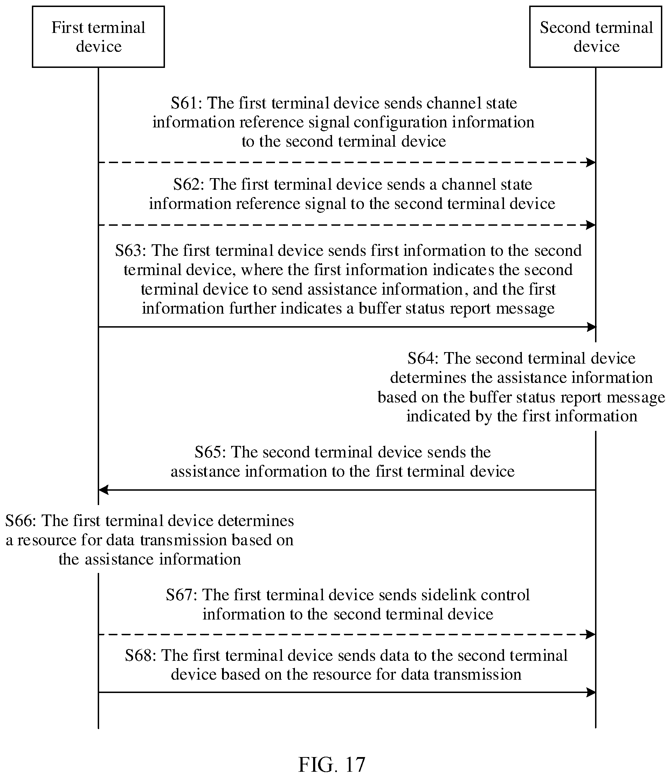

FIG. 17 is a signaling diagram of another device-to-device based resource determining method according to an embodiment of this application. As shown in FIG. 17, the method includes the following steps.

S61: A first terminal device sends channel state information reference signal configuration information to a second terminal device, where the channel state information reference signal configuration information indicates to receive a channel state information reference signal.

For example, in this embodiment, the first terminal device communicates with the second terminal device. The first terminal device is a data transmit end, the second terminal device is a data receive end, and the second terminal device is an assistance end. The second terminal device may not have a capability of scheduling a resource for data transmission, or may have the capability of scheduling the resource for data transmission. This is not limited.

For this step, refer to step S21 shown in FIG. 13. Details are not described again. Step S61 is an optional step.

S62: The first terminal device sends the channel state information reference signal to the second terminal device, where the channel state information reference signal is used to determine channel state information.

For example, for this step, refer to step S22 shown in FIG. 13. Details are not described again. Step S62 is an optional step.

S63: The first terminal device sends first information to the second terminal device, where the first information indicates the second terminal device to send assistance information. The first information further indicates a buffer status report message, and the buffer status report message indicates a size of to-be-transmitted data.

In an example, a preset indicator field or a preset bit in the first information indicates the second terminal device to send the assistance information. Another preset indicator field or another preset bit in the first information indicates the size of the to-be-transmitted data.

In an example, the first information is physical layer sidelink control information, media access control layer sidelink control information, or radio resource control layer sidelink control information.

For example, before needing to send data to the second terminal device, the first terminal device first sends the first information to the second terminal device.

The first information indicates the second terminal device to send the assistance information, where the assistance information is used to assist the first terminal device in selecting the resource for data transmission.

In addition, to help the second terminal device determine an appropriate resource for the first terminal device, the first information needs to indicate the size of the to-be-transmitted data of the first terminal device. For example, the first information includes an index of the size of the to-be-transmitted data in a buffer, or the first information includes the size of the to-be-transmitted data in the buffer. In other words, "the size of the to-be-transmitted data" is the index of the size of the to-be-transmitted data in the buffer, or is the size of the to-be-transmitted data in the buffer.

There are a plurality of indicator fields in the first information. One preset indicator field in the plurality of indicator fields may indicate the second terminal device to send the assistance information, and another preset indicator field in the plurality of indicator fields may indicate the size of the to-be-transmitted data. A location of the preset indicator field in the first information and a size of the preset indicator field are not limited. Alternatively, there are a plurality of bits in the first information. One preset bit in the plurality of bits may indicate the second terminal device to send the assistance information, and another preset bit in the plurality of bits may indicate the size of the to-be-transmitted data. A location of the preset bit in the first information and a size of the preset indicator field are not limited.

In an example, the first terminal device sends the first information to the second terminal device, where the first information is a single piece of signaling. A preset indicator field in the first information indicates the second terminal device to send the assistance information, and another preset indicator field in the first information indicates the size of the to-be-transmitted data. Alternatively, a preset bit in the first information indicates the second terminal device to send the assistance information, and another preset bit in the first information indicates the size of the to-be-transmitted data. Alternatively, a preset indicator field in the first information indicates the second terminal device to send the assistance information, and another preset bit in the first information indicates the size of the to-be-transmitted data. Alternatively, one preset bit in the first information indicates the size of the to-be-transmitted data, and another preset indicator field in the first information indicates the size of the to-be-transmitted data.

In another example, the first information is physical layer sidelink control information. A preset indicator field or a preset bit in the physical layer sidelink control information indicates the second terminal device to send the assistance information, and another preset indicator field or another preset bit in the physical layer sidelink control information indicates the size of the to-be-transmitted data. The physical layer sidelink control information may explicitly or implicitly indicate the second terminal device to send the assistance information, and indicate the size of the to-be-transmitted data. For example, the physical layer sidelink control information may be 1^{st} stage SCI, 2^{nd} stage SCI, or SCI.

In an example, the first information is 2^{nd} stage SCI. There is a preset indicator field in the 2^{nd} stage SCI. When a value in the preset indicator field is a first value, it indicates to activate the second terminal device to send the assistance information to the first terminal device. When a value in the preset indicator field is a second value, it indicates to deactivate the second terminal device to send the assistance information to the first terminal device. "Deactivation" means that the second terminal device does not need to send the assistance information. The first value is different from the second value. In addition, there is another preset indicator field in the 2^{nd} stage SCI, and the another preset indicator field indicates the size of the to-be-transmitted data. For example, the another preset indicator field in the 2^{nd} stage SCI includes a 5-bit buffer size field, and the 5-bit buffer size field indicates the size of the to-be-transmitted data. In addition, the 2^{nd} stage SCI includes an identifier of the first terminal device and an identifier of the second terminal device. To be specific, the 2^{nd} stage SCI includes an identifier of a terminal device that sends the 2^{nd} stage SCI and an identifier of a terminal device that receives the 2^{nd} stage SCI. Therefore, the second terminal device knows that the first terminal device sends the first information to the second terminal device.

In an example, the first information is 1^{st} stage SCI. There is a preset indicator field in the 1^{st} stage SCI. When a value in the preset indicator field is a first value, it indicates to activate the second terminal device to send the assistance information to the first terminal device. When a value in the preset indicator field is a second value, it indicates to deactivate the second terminal device to send the assistance information to the first terminal device. "Deactivation" means that the second terminal device does not need to send the assistance information. The first value is different from the second value. In addition, there is another preset indicator field in the 1^{st} stage SCI, and the another preset indicator field indicates the size of the to-be-transmitted data. For example, the another preset indicator field in the 1^{st} stage SCI includes a 5-bit buffer size field, and the 5-bit buffer size field indicates the size of the to-be-transmitted data. In addition, before receiving the 1^{st} stage SCI or after receiving the 1^{st} stage SCI, the second terminal device further needs to receive identification information sent by the first terminal device, where the identification information indicates an identifier of the first terminal device and an identifier of the second terminal device. For example, the identification information is 2^{nd} stage SCI. Therefore, the second terminal device knows that the first terminal device sends the first information to the second terminal device.

In an example, the first information is 2^{nd} stage SCI. There is a preset bit in the 2^{nd} stage SCI. When the preset bit is a first bit sequence, it indicates to activate the second terminal device to send the assistance information to the first terminal device, where the first bit sequence includes at least one bit. When the preset bit is a second bit sequence, it indicates to deactivate the second terminal device to send the assistance information to the first terminal device. "Deactivation" means that the second terminal device does not need to send the assistance information. The second bit sequence includes at least one bit. The first bit sequence and the second bit sequence are different bit sequences. In addition, there is another preset bit in the 2^{nd} stage SCI, and the another preset bit indicates the size of the to-be-transmitted data. For example, a CRC in the 2^{nd} stage SCI is scrambled by using x bits, to indicate the size of the to-be-transmitted data, where x is a positive integer. In addition, the 2^{nd} stage SCI includes an identifier of the first terminal device and an identifier of the second terminal device. To be specific, the 2^{nd} stage SCI includes an identifier of a terminal device that sends the 2^{nd} stage SCI and an identifier of a terminal device that receives the 2^{nd} stage SCI. Therefore, the second terminal device knows that the first terminal device sends the first information to the second terminal device.

For example, the first terminal device sends the 2^{nd} stage SCI to the second terminal device, where the 2^{nd} stage SCI includes the identifier of the first terminal device and the identifier of the second terminal device, and there is a CRC in the 2^{nd} stage SCI. In this case, the last bit of the CRC in the 2^{nd} stage SCI is scrambled by using one bit. When 1 is used for scrambling, it indicates to activate the second terminal device to send the assistance information to the first terminal device. When 0 is used for scrambling, it indicates to deactivate the second terminal device to send the assistance information to the first terminal device. In addition, the last 4^{th} bit to the last m^{th} bit of the CRC in the 2^{nd} stage SCI are scrambled by using one bit, to indicate the size of the to-be-transmitted data, where m is a positive integer greater than or equal to 4.

In an example, the first information is 1^{st} stage SCI. There is a preset bit in the 1^{st} stage SCI. When the preset bit is a first bit sequence, it indicates to activate the second terminal device to send the assistance information to the first terminal device, where the first bit sequence includes at least one bit. When the preset bit is a second bit sequence, it indicates to deactivate the second terminal device to send the assistance information to the first terminal device. "Deactivation" means that the second terminal device does not need to send the assistance information. The second bit sequence includes at least one bit. The first bit sequence and the second bit sequence are different bit sequences. In addition, there is another preset bit in the 1^{st} stage SCI, and the another preset bit indicates the size of the to-be-transmitted data. For example, a CRC in the 1^{st} stage SCI is scrambled by using x bits, to indicate the size of the to-be-transmitted data, where x is a positive integer. In addition, before receiving the 1^{st} stage SCI or after receiving the 1^{st} stage SCI, the second terminal device further needs to receive identification information sent by the first terminal device, where the identification information indicates an identifier of the first terminal device and an identifier of the second terminal device. For example, the identification information is 2^{nd} stage SCI. Therefore, the second terminal device knows that the first terminal device sends the first information to the second terminal device.

For example, the first terminal device sends the 1^{st} stage SCI and the 2^{nd} stage SCI to the second terminal device, and there is a CRC in the 1^{st} stage SCI. In this case, the last bit of the CRC in the 1^{st} stage SCI is scrambled by using one bit. When 1 is used for scrambling, it indicates to activate the second terminal device to send the assistance information to the first terminal device. When 0 is used for scrambling, it indicates to deactivate the second terminal device to send the assistance information to the first terminal device. In addition, the last 4^{th} bit to the last m^{tn} bit of the CRC in the 1^{st} stage SCI are scrambled by using one bit, to indicate the size of the to-be-transmitted data, where m is a positive integer greater than or equal to 4. The 2^{nd} stage SCI indicates the identifier of the first terminal device and the identifier of the second terminal device.

In still another example, the first information is MAC layer sidelink control information. A preset indicator field or a preset bit in the MAC layer sidelink control information indicates the second terminal device to send the assistance information, and another preset indicator field or another preset bit in the MAC layer sidelink control information indicates the size of the to-be-transmitted data. The MAC layer sidelink control information may explicitly or implicitly indicate the second terminal device to send the assistance information, and indicate the size of the to-be-transmitted data. For example, the MAC layer sidelink control information may be SL MAC CE information.

In an example, the first information is SL MAC CE information. There is a preset indicator field in the SL MAC CE information. When a value in the preset indicator field is a first value, it indicates to activate the second terminal device to send the assistance information to the first terminal device. When a value in the preset indicator field is a second value, it indicates to deactivate the second terminal device to send the assistance information to the first terminal device. "Deactivation" means that the second terminal device does not need to send the assistance information. The first value is different from the second value. In addition, there is another preset indicator field in the SL MAC CE information, and the another preset indicator field indicates the size of the to-be-transmitted data. For example, the preset indicator field in the SL MAC CE information includes a 5-bit buffer size field, and the 5-bit buffer size field indicates the size of the to-be-transmitted data. In addition, before receiving the SL MAC CE information or after receiving the SL MAC CE information, the second terminal device further needs to receive identification information sent by the first terminal device, where the identification information indicates an identifier of the first terminal device and an identifier of the second terminal device. For example, the identification information is 2^{nd} stage SCI. Therefore, the second terminal device may learn that the first terminal device sends the first information to the second terminal device.

In yet another example, the first information is RRC layer sidelink control information. A preset indicator field or a preset bit in the RRC layer sidelink control information indicates the second terminal device to send the assistance information, and another preset indicator field or another preset bit in the RRC layer sidelink control information indicates the size of the to-be-transmitted data. The RRC layer sidelink control information may explicitly or implicitly indicate the second terminal device to send the assistance information, and indicate the size of the to-be-transmitted data. For example, the RRC layer sidelink control information may be PC5 RRC information.

In an example, the first information is PC5 RRC information. There is a preset indicator field in the PC5 RRC information. When a value in the preset indicator field is a first value, it indicates to activate the second terminal device to send the assistance information to the first terminal device. When a value in the preset indicator field is a second value, it indicates to deactivate the second terminal device to send the assistance information to the first terminal device. "Deactivation" means that the second terminal device does not need to send the assistance information. The first value is different from the second value. In addition, there is another preset indicator field in the PC5 RRC information, and the another preset indicator field indicates the size of the to-be-transmitted data. For example, the preset indicator field in the PC5 RRC information includes a 5-bit buffer size field, and the 5-bit buffer size field indicates the size of the to-be-transmitted data. In addition, before receiving the PC5 RRC information or after receiving the PC5 RRC information, the second terminal device further needs to receive identification information sent by the first terminal device, where the identification information indicates an identifier of the first terminal device and an identifier of the second terminal device. For example, the identification information is 2^{nd} stage SCI. Therefore, the second terminal device may learn that the first terminal device sends the first information to the second terminal device.

There is no requirement on an execution sequence of the three steps: S61, S62, and S63.

S64: The second terminal device determines the assistance information based on the buffer status report message indicated by the first information, where the assistance information indicates an unoccupied resource set (or resource).

In an example, the assistance information specifically indicates a size and a location anchor of the resource for data transmission.

In an example, step S64 specifically includes the following processes: determining the size of the resource for data transmission based on the buffer status report message; and determining the assistance information based on the size of the resource for data transmission.

For example, after receiving the first information, the second terminal device determines, based on the first information, that the assistance information needs to be returned to the first terminal device. However, before returning the assistance information, the second terminal device needs to first determine the assistance information. The second terminal device determines the assistance information based on the BSR message indicated by the first information.

For a manner of determining the assistance information, refer to step S25 in FIG. 13. Details are not described again.

S65: The second terminal device sends the assistance information to the first terminal device, where the assistance information is used to assist the first terminal device in selecting the resource for data transmission.

In an example, the assistance information is physical layer sidelink control information, MAC layer sidelink control information, or RRC layer sidelink control information.

For example, for this step, refer to step S26 shown in FIG. 13. Details are not described again.

S66: The first terminal device determines the resource for data transmission based on the assistance information.

In an example, step S27 specifically includes the following implementations.

First implementation of step S66: Select, from a resource set indicated by the assistance information, a resource as the resource for data transmission, where the assistance information indicates an unoccupied resource set (or resource).

In an example, the first implementation of step S66 specifically includes: randomly selecting, from the resource set indicated by the assistance information, a resource as the resource for data transmission; or selecting, based on a priority of a resource in the resource set indicated by the assistance information, a resource with a highest priority as the resource for data transmission.

Second implementation of step S66: Determine the resource for data transmission based on a resource set indicated by the assistance information and a resource set obtained through sensing.

In an example, the second implementation of step S66 specifically includes: determining a shared resource between the resource set indicated by the assistance information and the resource set obtained through sensing; and selecting, from the shared resource, a resource as the resource for data transmission.

For example, for this step, refer to step S27 in FIG. 13. Details are not described again.

S67: The first terminal device sends sidelink control information to the second terminal device.

For example, the first terminal device sends the sidelink control information to the second terminal device by using the resource for data transmission in step S66. In an example, the sidelink control information is physical layer sidelink control information, MAC layer sidelink control information, or RRC layer sidelink control information. For example, the sidelink control information is 1^{st} stage SCI, 2^{nd} stage SCI, or SCI. For this step, refer to step S28 in FIG. 13. Details are not described again.

Step S67 is an optional step. If step S67 is not performed, it may be specified in the protocol that both the first terminal device and the second terminal device have learned of necessary information used for data receiving.

An execution sequence between step S67 and the foregoing steps S61 to S66 is not limited, provided that step S67 is performed before step S68.

S68: The first terminal device sends data to the second terminal device based on the resource for data transmission.

For example, the first terminal device sends data to the second terminal device by using the resource for data transmission obtained in step S66.

In this embodiment, a difference from the embodiment shown in FIG. 13 lies in that, in FIG. 13, the first terminal device sends the assistance request and the BSR information to the second terminal device, and in this embodiment, the first terminal device sends the first information to the second terminal device, where the first information indicates the second terminal device to send the assistance information, and the first information further indicates the size of the to-be-transmitted data. Therefore, this embodiment has the technical effect of the embodiment shown in FIG. 13, and one piece of signaling can indicate the second terminal device to send the assistance information and indicate the size of the to-be-transmitted data, so that signaling overheads are reduced.

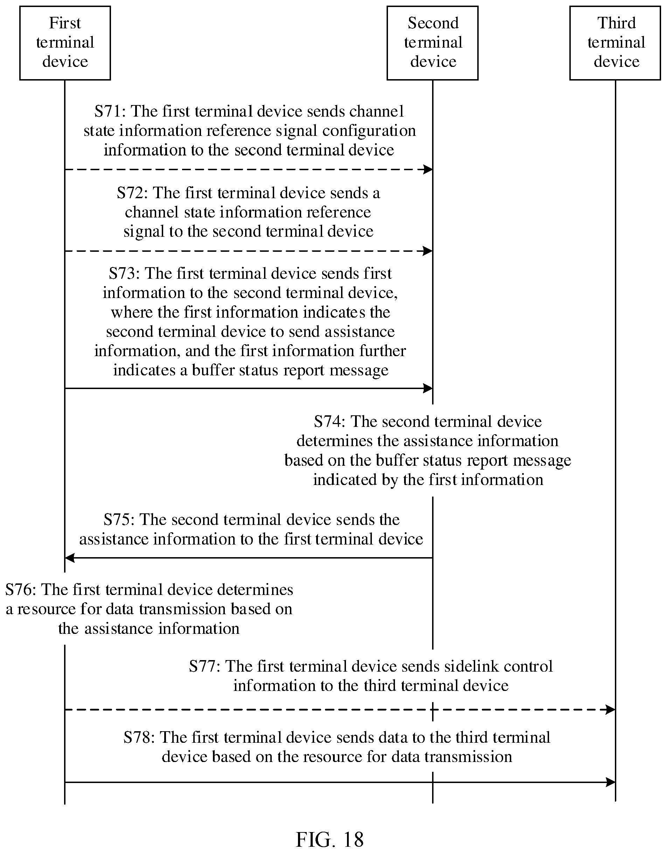

FIG. 18 is a signaling diagram of another device-to-device based resource determining method according to an embodiment of this application. As shown in FIG. 18, the method includes the following steps.

S71: A first terminal device sends channel state information reference signal configuration information to a second terminal device, where the channel state information reference signal configuration information indicates to receive a channel state information reference signal.

For example, in this embodiment, the first terminal device is a data transmit end, the second terminal device is an assistance end (where the second terminal device is not a data receive end), and a third terminal device is a data receive end. The second terminal device may not have a capability of scheduling a resource for data transmission, or may have the capability of scheduling the resource for data transmission. This is not limited.

For this step, refer to step S31 shown in FIG. 14. Details are not described again. Step S71 is an optional step.

S72: The first terminal device sends the channel state information reference signal to the second terminal device, where the channel state information reference signal is used to determine channel state information.

For example, for this step, refer to step S32 shown in FIG. 14. Details are not described again. Step S72 is an optional step.

S73: The first terminal device sends first information to the second terminal device, where the first information indicates the second terminal device to send assistance information. The first information further indicates a buffer status report message, and the buffer status report message indicates a size of to-be-transmitted data.

In an example, a preset indicator field or a preset bit in the first information indicates the second terminal device to send the assistance information. Another preset indicator field or another preset bit in the first information indicates the size of the to-be-transmitted data.

In an example, the first information is physical layer sidelink control information, media access control layer sidelink control information, or radio resource control layer sidelink control information.

For example, for this step, refer to step S63 shown in FIG. 16. Details are not described again.

S74: The second terminal device determines the assistance information based on the buffer status report message indicated by the first information, where the assistance information indicates an unoccupied resource set (or resource).

For example, for this step, refer to step S64 shown in FIG. 16. Details are not described again.

S75: The second terminal device sends the assistance information to the first terminal device, where the assistance information is used to assist the first terminal device in selecting the resource for data transmission.

For example, for this step, refer to step S36 shown in FIG. 14. Details are not described again.

S76: The first terminal device determines the resource for data transmission based on the assistance information.

For example, for this step, refer to step S37 shown in FIG. 14. Details are not described again.

S77: The first terminal device sends sidelink control information to the third terminal device.

For example, the first terminal device sends the sidelink control information to the third terminal device by using the resource for data transmission in step S76. In an example, the sidelink control information is physical layer sidelink control information, MAC layer sidelink control information, or RRC layer sidelink control information. For example, the sidelink control information is 1^{st} stage SCI, 2^{nd} stage SCI, or SCI. For this step, refer to step S38 shown in FIG. 14. Details are not described again.

Step S38 is an optional step. In addition, an execution sequence between step S77 and the foregoing steps S71 to S76 is not limited, provided that step S77 is performed before step S78.

S78: The first terminal device sends data to the third terminal device based on the resource for data transmission.

For example, the first terminal device sends data to the third terminal device by using the resource for data transmission obtained in step S76. For this step, refer to step S39 shown in FIG. 14. Details are not described again.

In this embodiment, a difference from the embodiment shown in FIG. 14 lies in that, in FIG. 14, the first terminal device sends the assistance request and the BSR information to the second terminal device, and in this embodiment, the first terminal device sends the first information to the second terminal device, where the first information indicates the second terminal device to send the assistance information, and the first information further indicates the size of the to-be-transmitted data. Therefore, this embodiment has the technical effect of the embodiment shown in FIG. 14, and one piece of signaling can indicate the second terminal device to send the assistance information and indicate the size of the to-be-transmitted data, so that signaling overheads are reduced.

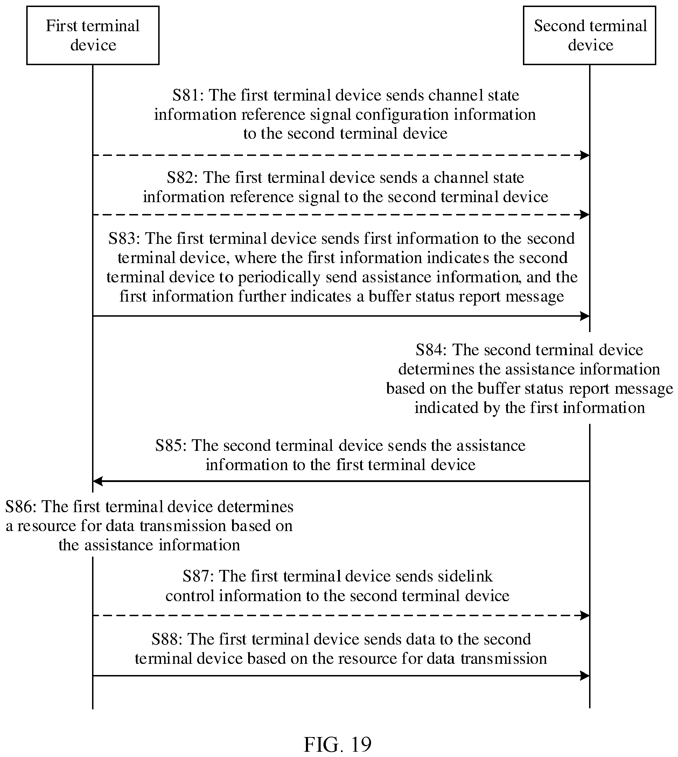

FIG. 19 is a signaling diagram of another device-to-device based resource determining method according to an embodiment of this application. As shown in FIG. 19, the method includes the following steps.

S81: A first terminal device sends channel state information reference signal configuration information to a second terminal device, where the channel state information reference signal configuration information indicates to receive a channel state information reference signal.

For example, in this embodiment, the first terminal device communicates with the second terminal device. The first terminal device is a data transmit end, the second terminal device is a data receive end, and the second terminal device is an assistance end. The second terminal device may not have a capability of scheduling a resource for data transmission, or may have the capability of scheduling the resource for data transmission. This is not limited.

For this step, refer to step S41 shown in FIG. 15. Details are not described again. Step S81 is an optional step.

S82: The first terminal device sends the channel state information reference signal to the second terminal device, where the channel state information reference signal is used to determine channel state information.

For example, for this step, refer to step S42 shown in FIG. 15. Details are not described again. Step S82 is an optional step.

S83: The first terminal device sends first information to the second terminal device, where the first information indicates the second terminal device to periodically send assistance information. The first information further indicates a buffer status report message, and the buffer status report message indicates a size of to-be-transmitted data.

In an example, a preset indicator field or a preset bit in the first information indicates the second terminal device to periodically send the assistance information. Another preset indicator field or another preset bit in the first information indicates the size of the to-be-transmitted data.

In an example, the first information is physical layer sidelink control information, media access control layer sidelink control information, or radio resource control layer sidelink control information.

For example, before needing to send data to the second terminal device, the first terminal device first sends the first information to the second terminal device.

The first information indicates the second terminal device to periodically send the assistance information, where the assistance information is used to assist the first terminal device in selecting the resource for data transmission.

In addition, to help the second terminal device determine an appropriate resource for the first terminal device, the first information needs to indicate the size of the to-be-transmitted data of the first terminal device. For example, the first information includes an index of the size of the to-be-transmitted data in a buffer, or the first information includes the size of the to-be-transmitted data in the buffer. In other words, "the size of the to-be-transmitted data" is the index of the size of the to-be-transmitted data in the buffer, or is the size of the to-be-transmitted data in the buffer.

In an example, there are a plurality of indicator fields in the first information. One first indicator field in the plurality of indicator fields may indicate a periodicity for sending the assistance information, one second indicator field in the plurality of indicator fields may indicate a time point for sending the assistance information, and one third indicator field in the plurality of indicator fields indicates the size of the to-be-transmitted data of the first terminal device. A location of the first indicator field in the first information, a size of the first indicator field, a location of the second indicator field in the first information, a size of the second indicator field, a location of the third indicator field in the first information, and a size of the third indicator field are not limited.

Alternatively, there are a plurality of bits in the first information. One first bit in the plurality of bits may indicate a periodicity for sending the assistance information, one second bit in the plurality of bits may indicate a time point for sending the assistance information, and one third bit in the plurality of bits indicates the size of the to-be-transmitted data of the first terminal device. A location of the first bit in the first information, a size of the first bit, a location of the second bit in the first information, a size of the second bit, a location of the third bit in the first information, and a size of the third bit are not limited.

In an example, "the periodicity for sending the assistance information" may be an actual time interval for sending the assistance information. Alternatively, "the periodicity for sending the assistance information" may be an index of an actual time interval for sending the assistance information. In this case, an index table between the actual time interval and the index needs to be created.

In an example, "the time point for sending the assistance information" may be an absolute time point, or may be a relative time point.

For "the periodicity for sending the assistance information" and "the time point for sending the assistance information", refer to the description of step S43 in FIG. 15.

In an example, the first terminal device sends the first information to the second terminal device. The first information is a single piece of signaling. A preset indicator field or a preset bit in the first information indicates the second terminal device to periodically send the assistance information, and another preset indicator field or another preset bit in the first information indicates the size of the to-be-transmitted data. For example, the first indicator field in the first information indicates a periodicity for sending the assistance information, a second indicator field in the first information indicates a time point for sending the assistance information, and a third indicator field in the first information indicates the size of the to-be-transmitted data.

In another example, the first information is physical layer sidelink control information. A preset indicator field or a preset bit in the physical layer sidelink control information indicates the second terminal device to periodically send the assistance information, and another preset indicator field or another preset bit in the physical layer sidelink control information indicates the size of the to-be-transmitted data. The physical layer sidelink control information may explicitly or implicitly indicate the second terminal device to periodically send the assistance information, and indicate the size of the to-be-transmitted data. For example, the physical layer sidelink control information may be 1^{st} stage SCI, 2^{nd} stage SCI, or SCI.

In an example, the first information is 2^{nd} stage SCI. There are a first indicator field, a second indicator field, and a third indicator field in the 2^{nd} stage SCI. The first indicator field indicates a periodicity for sending the assistance information, the second indicator field indicates a time point for sending the assistance information, and the third indicator field indicates the size of the to-be-transmitted data. Values in the first indicator field, the second indicator field, and the third indicator field may each be represented by using an integer or a character string, which is not limited. In addition, the 2^{nd} stage SCI includes an identifier of the first terminal device and an identifier of the second terminal device. Therefore, the second terminal device may learn that the first terminal device sends the first information to the second terminal device.

In an example, the first information is 1^{st} stage SCI. There are a first indicator field, a second indicator field, and a third indicator field in the 1^{st} stage SCI. The first indicator field indicates a periodicity for sending the assistance information, the second indicator field indicates a time point for sending the assistance information, and the third indicator field indicates the size of the to-be-transmitted data. Values in the first indicator field, the second indicator field, and the third indicator field may each be represented by using an integer or a character string, which is not limited. In addition, before receiving the 1^{st} stage SCI or after receiving the 1^{st} stage SCI, the second terminal device further needs to receive identification information sent by the first terminal device, where the identification information indicates an identifier of the first terminal device and an identifier of the second terminal device. For example, the identification information is 2^{nd} stage SCI. Therefore, the second terminal device may learn that the first terminal device sends the first information to the second terminal device.

In an example, the first information is 2^{nd} stage SCI. There are a first bit, a second bit, and a third bit in the 2^{nd} stage SCI. The first bit indicates a periodicity for sending the assistance information, the second bit indicates a time point for sending the assistance information, and the third bit indicates the size of the to-be-transmitted data. Values in the first bit, the second bit, and the third bit may each be represented by using an integer or a character string, which is not limited. In addition, the 2^{nd} stage SCI includes an identifier of the first terminal device and an identifier of the second terminal device. Therefore, the second terminal device may learn that the first terminal device sends the first information to the second terminal device.

In an example, the first information is 1^{st} stage SCI. There are a first bit, a second bit, and a third bit in the 1^{st} stage SCI. The first bit indicates a periodicity for sending the assistance information, the second bit indicates a time point for sending the assistance information, and the third bit indicates the size of the to-be-transmitted data. Values in the first bit, the second bit, and the third bit may each be represented by using an integer or a character string, which is not limited. In addition, before receiving the 1^{st} stage SCI or after receiving the 1^{st} stage SCI, the second terminal device further needs to receive identification information sent by the first terminal device, where the identification information indicates an identifier of the first terminal device and an identifier of the second terminal device. For example, the identification information is 2^{nd} stage SCI. Therefore, the second terminal device may learn that the first terminal device sends the first information to the second terminal device.

In still another example, the first information is MAC layer sidelink control information. A preset indicator field or a preset bit in the MAC layer sidelink control information indicates the second terminal device to periodically send the assistance information, and another preset indicator field or another preset bit in the MAC layer sidelink control information indicates the size of the to-be-transmitted data. The MAC layer sidelink control information may explicitly or implicitly indicate the second terminal device to periodically send the assistance information, and indicate the size of the to-be-transmitted data. For example, the MAC layer sidelink control information may be SL MAC CE information.

In an example, the first information is SL MAC CE information. There are a first indicator field, a second indicator field, and a third indicator field in the SL MAC CE information. The first indicator field indicates a periodicity for sending the assistance information, the second indicator field indicates a time point for sending the assistance information, and the third indicator field indicates the size of the to-be-transmitted data. Values in the first indicator field, the second indicator field, and the third indicator field may each be represented by using an integer or a character string, which is not limited. In addition, before receiving the SL MAC CE information or after receiving the SL MAC CE information, the second terminal device further needs to receive identification information sent by the first terminal device, where the identification information indicates an identifier of the first terminal device and an identifier of the second terminal device. For example, the identification information is 2^{nd} stage SCI. Therefore, the second terminal device may learn that the first terminal device sends the first information to the second terminal device.

In yet another example, the first information is RRC layer sidelink control information. A preset indicator field or a preset bit in the RRC layer sidelink control information indicates the second terminal device to periodically send the assistance information, and another preset indicator field or another preset bit in the RRC layer sidelink control information indicates the size of the to-be-transmitted data. The RRC layer sidelink control information may explicitly or implicitly indicate the second terminal device to periodically send the assistance information, and indicate the size of the to-be-transmitted data. For example, the RRC layer sidelink control information may be PC5 RRC information.

In an example, the first information is PC5 RRC information. There are a first indicator field, a second indicator field, and a third indicator field in the PC5 RRC information. The first indicator field indicates a periodicity for sending the assistance information, the second indicator field indicates a time point for sending the assistance information, and the third indicator field indicates the size of the to-be-transmitted data. Values in the first indicator field, the second indicator field, and the third indicator field may each be represented by using an integer or a character string, which is not limited. In addition, before receiving the SL MAC CE information or after receiving the SL MAC CE information, the second terminal device further needs to receive identification information sent by the first terminal device, where the identification information indicates an identifier of the first terminal device and an identifier of the second terminal device. For example, the identification information is 2^{nd} stage SCI. Therefore, the second terminal device may learn that the first terminal device sends the first information to the second terminal device.

S84: The second terminal device determines the assistance information based on the buffer status report message indicated by the first information, where the assistance information indicates an unoccupied resource set (or resource).

In an example, the assistance information specifically indicates a size and a location anchor of the resource for data transmission.

In an example, step S55 specifically includes the following processes: determining the size of the resource for data transmission based on the buffer status report message; and determining the assistance information based on the size of the resource for data transmission.

For example, after receiving the first information, the second terminal device determines, based on the first information, that the assistance information needs to be returned to the first terminal device. However, before returning the assistance information, the second terminal device needs to first determine the assistance information. The second terminal device determines the assistance information based on the BSR message indicated by the first information.

For a manner of determining the assistance information, refer to step S45 in FIG. 15. Details are not described again.

S85: The second terminal device sends the assistance information to the first terminal device, where the assistance information is used to assist the first terminal device in selecting the resource for data transmission.

In an example, the assistance information is physical layer sidelink control information, MAC layer sidelink control information, or RRC layer sidelink control information.

For example, for this step, refer to step S46 in FIG. 15. Details are not described again.

S86: The first terminal device determines the resource for data transmission based on the assistance information.

For example, for this step, refer to step S47 in FIG. 15. Details are not described again.

S87: The first terminal device sends sidelink control information to the second terminal device.

For example, the first terminal device sends the sidelink control information to the second terminal device by using the resource for data transmission in step S86. In an example, the sidelink control information is physical layer sidelink control information, MAC layer sidelink control information, or RRC layer sidelink control information. For example, the sidelink control information is 1^{st} stage SCI, 2^{nd} stage SCI, or SCI. For this step, refer to step S48 shown in FIG. 15. Details are not described again.

Step S87 is an optional step. If step S87 is not performed, it may be specified in the protocol that both the first terminal device and the second terminal device have learned of necessary information used for data receiving.

An execution sequence between step S87 and the foregoing steps S81 to S86 is not limited, provided that step S87 is performed before step S88.

S88: The first terminal device sends data to the second terminal device based on the resource for data transmission.

For example, the first terminal device sends data to the second terminal device by using the resource for data transmission obtained in step S86. For this step, refer to step S49 shown in FIG. 15. Details are not described again.

In this embodiment, a difference from the embodiment shown in FIG. 15 lies in that, in FIG. 15, the first terminal device sends the assistance information sending configuration information and the BSR information to the second terminal device, and in this embodiment, the first terminal device sends the first information to the second terminal device, where the first information indicates the second terminal device to periodically send the assistance information, and the first information further indicates the size of the to-be-transmitted data. Therefore, this embodiment has the technical effect of the embodiment shown in FIG. 15, and one piece of signaling can indicate the second terminal device to periodically send the assistance information and indicate the size of the to-be-transmitted data, so that signaling overheads are reduced.

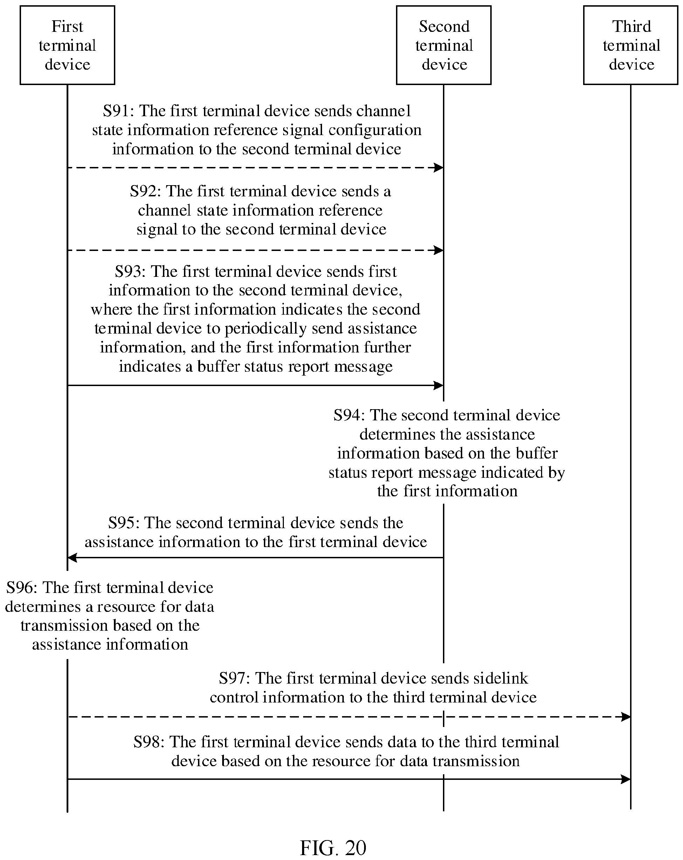

FIG. 20 is a signaling diagram of another device-to-device based resource determining method according to an embodiment of this application. As shown in FIG. 20, the method includes the following steps.

S91: A first terminal device sends channel state information reference signal configuration information to a second terminal device, where the channel state information reference signal configuration information indicates to receive a channel state information reference signal.

For example, in this embodiment, the first terminal device is a data transmit end, the second terminal device is an assistance end (where the second terminal device is not a data receive end), and a third terminal device is a data receive end. The second terminal device may not have a capability of scheduling a resource for data transmission, or may have the capability of scheduling the resource for data transmission. This is not limited.

For this step, refer to step S51 shown in FIG. 16. Details are not described again. Step S91 is an optional step.

S92: The first terminal device sends the channel state information reference signal to the second terminal device, where the channel state information reference signal is used to determine channel state information.

For example, for this step, refer to step S52 shown in FIG. 16. Details are not described again. Step S92 is an optional step.

S93: The first terminal device sends first information to the second terminal device, where the first information indicates the second terminal device to periodically send assistance information. The first information further indicates a buffer status report message, and the buffer status report message indicates a size of to-be-transmitted data.

In an example, a preset indicator field or a preset bit in the first information indicates the second terminal device to periodically send the assistance information. Another preset indicator field or another preset bit in the first information indicates the size of the to-be-transmitted data.

In an example, the first information is physical layer sidelink control information, media access control layer sidelink control information, or radio resource control layer sidelink control information.

For example, for this step, refer to step S83 shown in FIG. 19. Details are not described again.

S94: The second terminal device determines the assistance information based on the buffer status report message indicated by the first information, where the assistance information indicates an unoccupied resource set (or resource).

In an example, the assistance information specifically indicates a size and a location anchor of the resource for data transmission.

For example, for this step, refer to step S84 shown in FIG. 19. Details are not described again.

S95: The second terminal device sends the assistance information to the first terminal device, where the assistance information is used to assist the first terminal device in selecting the resource for data transmission.

In an example, the assistance information is physical layer sidelink control information, MAC layer sidelink control information, or RRC layer sidelink control information.

For example, for this step, refer to step S56 in FIG. 16. Details are not described again.

S96: The first terminal device determines the resource for data transmission based on the assistance information.

For example, for this step, refer to step S57 in FIG. 16. Details are not described again.

S97: The first terminal device sends sidelink control information to the third terminal device.

For example, the first terminal device sends the sidelink control information to the second terminal device by using the resource for data transmission in step S96. In an example, the sidelink control information is physical layer sidelink control information, MAC layer sidelink control information, or RRC layer sidelink control information. For example, the sidelink control information is 1^{st} stage SCI, 2^{nd} stage SCI, or SCI. For this step, refer to step S58 shown in FIG. 16. Details are not described again.

Step S97 is an optional step. If step S97 is not performed, it may be specified in the protocol that both the first terminal device and the third terminal device have learned of necessary information used for data receiving.

An execution sequence between step S97 and the foregoing steps S91 to S96 is not limited, provided that step S97 is performed before step S98.

S98: The first terminal device sends data to the third terminal device based on the resource for data transmission.

For example, the first terminal device sends data to the second terminal device by using the resource for data transmission obtained in step S96. For this step, refer to step S59 shown in FIG. 16. Details are not described again.

In this embodiment, a difference from the embodiment shown in FIG. 16 lies in that, in FIG. 16, the first terminal device sends the assistance information sending configuration information and the BSR information to the second terminal device, and in this embodiment, the first terminal device sends the first information to the second terminal device, where the first information indicates the second terminal device to periodically send the assistance information, and the first information further indicates the size of the to-be-transmitted data. Therefore, this embodiment has the technical effect of the embodiment shown in FIG. 15, and one piece of signaling can indicate the second terminal device to periodically send the assistance information and indicate the size of the to-be-transmitted data, so that signaling overheads are reduced.

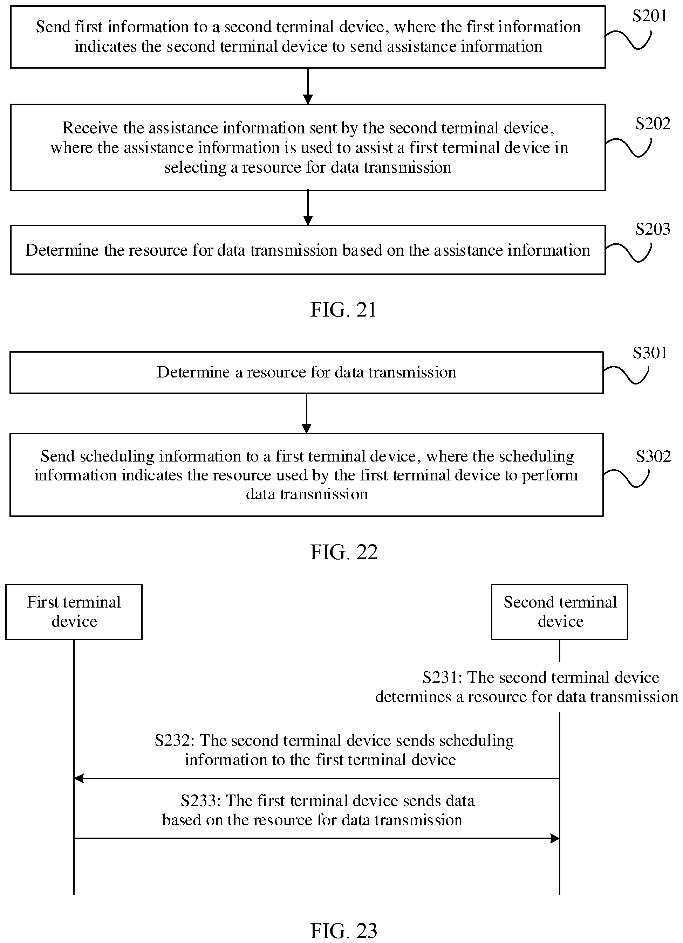

FIG. 21 is a schematic flowchart of another device-to-device based resource determining method according to an embodiment of this application. As shown in FIG. 21, the method includes the following steps.

S201: Send first information to a second terminal device, where the first information indicates the second terminal device to send assistance information.

S202: Receive the assistance information sent by the second terminal device, where the assistance information is used to assist a first terminal device in selecting a resource for data transmission.

S203: Determine the resource for data transmission based on the assistance information.

In this embodiment, this embodiment may be performed by the first terminal device. For the steps in this embodiment, refer to the processes in FIG. 9 to FIG. 20. Details are not described again.

In an example, a preset indicator field or a preset bit in the first information indicates the second terminal device to send the assistance information.

Alternatively, the first information specifically indicates the second terminal device to periodically send the assistance information. In an example, a first indicator field or a first bit in the first information indicates a periodicity for sending the assistance information, and a second indicator field or a second bit in the first information indicates a time point for sending the assistance information.

In an example, the first information is physical layer sidelink control information, media access control layer sidelink control information, or radio resource control layer sidelink control information.

In an example, step S202 may further include: sending a buffer status report message to the second terminal device, where the buffer status report message indicates a size of to-be-transmitted data. In an example, a preset indicator field or a scrambled bit in the buffer status report message indicates the size of the to-be-transmitted data. In an example, the buffer status report message is physical layer sidelink control information, media access control layer sidelink control information, or radio resource control layer sidelink control information.

Alternatively, the first information further indicates a buffer status report message, and the buffer status report message indicates a size of to-be-transmitted data.

In an example, the assistance information specifically indicates a size and a location anchor of the resource for data transmission.

In an example, the assistance information is physical layer sidelink control information, media access control layer sidelink control information, or radio resource control layer sidelink control information.

In an example, step S203 includes:
selecting, from a resource set indicated by the assistance information, a resource as the resource for data transmission, where the assistance information indicates an unoccupied resource set (or resource); or determining the resource for data transmission based on a resource set indicated by the assistance information and a resource set obtained through sensing.

In an example, the selecting, from a resource set indicated by the assistance information, a resource as the resource for data transmission includes:
randomly selecting, from the resource set indicated by the assistance information, a resource as the resource for data transmission; or selecting, based on a priority of a resource in the resource set indicated by the assistance information, a resource with a highest priority as the resource for data transmission.

In an example, the determining the resource for data transmission based on a resource set indicated by the assistance information and a resource set obtained through sensing includes:
determining a shared resource between the resource set indicated by the assistance information and the resource set obtained through sensing; and selecting, from the shared resource, a resource as the resource for data transmission.

In an example, after step S203, the method may further include: sending data to the second terminal device or a third terminal device based on the resource for data transmission.

In this embodiment, for the steps in this embodiment, refer to the processes in FIG. 9 to FIG. 20. Technical processes and technical effects are the same, and details are not described again.

FIG. 22 is a schematic flowchart of another device-to-device based resource determining method according to an embodiment of this application. As shown in FIG. 22, the method includes the following steps.

S301: Determine a resource for data transmission.

For example, the method provided in this embodiment may be performed by a second terminal device. The second terminal device communicates with a first terminal device.

The first terminal device is a data transmit end, the second terminal device is a data receive end, and the second terminal device is a scheduling end. Alternatively, the first terminal device is a data transmit end, the second terminal device is not a data receive end, and the second terminal device is a scheduling end.

The "scheduling end" is a device that schedules (or referred to as "allocates") a resource or a resource set for another terminal device. The resource or the resource set scheduled for the another terminal device is used by the another terminal device to perform data transmission. It may be learned that the "scheduling end" has a resource scheduling capability.

In this embodiment, if the second terminal device is a scheduling end, the second terminal device schedules a resource or a resource set for the first terminal device, and the resource or the resource set scheduled for the first terminal device is used by the first terminal device to perform data transmission.

When the first terminal device needs to send data, the second terminal device determines, for the first terminal device, the resource for data transmission in the following several manners.

In an example, the second terminal device may obtain channel state information, and then determine a resource size based on the channel state information. The second terminal device performs sensing at a granularity of the resource size. The second terminal device determines, in a resource or a resource set obtained by the second terminal device through sensing, a resource scheduled for the first terminal device. The second terminal device may determine, in the resource or the resource set obtained by the second terminal device through sensing, a data transmission resource scheduled for another terminal device. The resource or the resource set obtained by the second terminal device through sensing may be a resource pool (resource pool) or a scheduling resource pool. To be specific, the second terminal device senses a resource, and determines a scheduling resource pool, where the scheduling resource pool includes one or more resource sets (or resources).

The granularity of the resource size may be a subchannel (subchannel), a resource block group (resource block group, RBG), a resource block (resource block, RB), or the like. The granularity of the resource size is not limited.

For a process of "sensing" the resource or "sensing" the resource set, refer to the description of step 102 in FIG. 9. Details are not described again.

In another example, the second terminal device sends a resource set or resource request to a network device, and the network device configures a resource set or a resource for the second terminal device. In this case, the second terminal device determines, in the resource set or the resource indicated by the network device, the resource used by the first terminal device to perform data transmission. That is, the second terminal device obtains one scheduling resource pool from the network device, where the scheduling resource pool includes one or more resource sets (or resources).

In still another example, a network device configures a resource or a resource set for the second terminal device. In this case, the second terminal device determines, in the resource or the resource set indicated by the network device, the resource used by the first terminal device to perform data transmission. That is, the second terminal device determines a scheduling resource pool based on a configuration of the network device, where the scheduling resource pool includes one or more resource sets (or resources).

In yet another example, the second terminal device has a preconfigured resource set or resource. In this case, the second terminal device determines, in the preconfigured resource set or resource, the resource used by the first terminal device to perform data transmission.

S302: Send scheduling information to the first terminal device, where the scheduling information indicates the resource used by the first terminal device to perform data transmission.

In an example, the scheduling information specifically indicates a size and a location anchor of the resource for data transmission.

In an example, the scheduling information is physical layer sidelink control information, media access control layer sidelink control information, or radio resource control layer sidelink control information.

For example, after determining the resource for data transmission, the second terminal device generates the scheduling information. The scheduling information may be referred to as sidelink grant (sidelink grant, SL grant) information.

In an example, the scheduling information indicates the resource for data transmission. To help the first terminal device determine a location of the resource, the scheduling information may indicate the size of the resource for data transmission and the location anchor of the resource for data transmission.

In an example, to help the first terminal device determine a resource set indicated by the scheduling information, the scheduling information may indicate a size and a location anchor of the resource set. In this case, the resource set is a resource set determined by the second terminal device. Because the scheduling information indicates the size and the location anchor of the resource set, after receiving scheduling information, the first terminal device may learn of a quantity of resource sets or resources allocated by the second terminal device to the first terminal device.

In an example, the scheduling information indicates one resource set or one resource.

Then, the second terminal device sends the scheduling information to the first terminal device by using a resource in the scheduling resource pool.

In an example, the second terminal device sends the scheduling information to the first terminal device, where the scheduling information is a single piece of signaling.

In another example, the scheduling information is physical layer sidelink control information. In other words, the second terminal device sends the physical layer sidelink control information to the first terminal device, where the physical layer sidelink control information indicates the resource for data transmission. For example, the physical layer sidelink control information may be 1^{st} stage SCI, 2^{nd} stage SCI, or SCI.

In still another example, the scheduling information is MAC layer sidelink control information. In other words, the second terminal device sends the MAC layer sidelink control information to the first terminal device, where the MAC layer sidelink control information indicates the resource for data transmission. For example, the MAC layer sidelink control information may be SL MAC CE information.

In yet another example, the scheduling information is RRC layer sidelink control information. In other words, the second terminal device sends the RRC layer sidelink control information to the first terminal device, where the RRC layer sidelink control information indicates the resource for data transmission. For example, the RRC layer sidelink control information may be PC5 RRC information.

Further, after the first terminal device receives the scheduling information, because the scheduling information directly indicates a resource that can be used by the first terminal device, the first terminal device may send data by using the resource that is for data transmission and that is indicated by the scheduling information. In an example, the scheduling information indicates one resource set or one resource, so that the first terminal device sends data by using the resource set or the resource. In another example, the scheduling information indicates a plurality of resource sets or a plurality of resources, so that the first terminal device sends the data by using the plurality of resource sets or the plurality of resources.

For example, in the application scenario shown in FIG. 7, both the terminal device B and the terminal device C need to send data to the terminal device A. The terminal device C sends data to the terminal device A by using the resource 1. The terminal device B sends first information to the terminal device A. The terminal device B is a hidden node of the terminal device C. The terminal device B does not know existence of the terminal device C, but the terminal device A knows that the terminal device C has sent data to the terminal device A by using the resource 1. The terminal device A may determine that the resource 1 has been occupied, and scheduling information generated by the terminal device A does not indicate the resource 1. Then, the terminal device A returns the scheduling information to the terminal device B. In this case, the terminal device B determines, based on the scheduling information, that the resource 1 has been occupied, and no longer uses the resource 1. The terminal device B may send data to the terminal device A by using the resource indicated by the scheduling information. Therefore, the terminal device C and the terminal device B do not send data by using a same resource, to avoid signal collision and mutual interference in a data transmission process, and ensure successful data transmission of both the terminal device C and the terminal device B.

For another example, in the application scenario shown in FIG. 8, from a perspective of resource multiplexing, the terminal device B needs to send data to the terminal device A, and the terminal device C needs to send data to the terminal device D. The terminal device C sends data to the terminal device D by using the resource 1. The terminal device B sends first information to the terminal device A. The terminal device A may determine that the resource 1 is not occupied, and then scheduling information generated by the terminal device A may indicate the resource 1. Then, the terminal device A returns the scheduling information to the terminal device B. In this case, the terminal device B determines, based on the scheduling information, that the resource 1 is not occupied, and the terminal device B may send data to the terminal device A by using the resource 1. Further, from the perspective of resource multiplexing, the terminal device B may send data to the terminal device A by using the resource 1, and the terminal device A is not interfered by a signal sent by the terminal device C on the resource 1. According to the solution provided in this embodiment, the resource is appropriately used, and resource utilization efficiency is improved.

FIG. 23 is a signaling diagram of another device-to-device based resource determining method according to an embodiment of this application, and is used to implement the steps in FIG. 22. As shown in FIG. 23, the method includes the following steps.

S231: A second terminal device determines a resource for data transmission.

S232: The second terminal device sends scheduling information to a first terminal device, where the scheduling information indicates the resource used by the first terminal device to perform data transmission.

S233: The first terminal device sends data based on the resource for data transmission.

Herein, for S231, refer to step S301 in FIG. 22; for S232, refer to step S302 in FIG. 22; for S233, refer to step S302 in FIG. 22. Details are not described again.

In this embodiment, the second terminal device determines the resource for data transmission. The second terminal device sends the scheduling information to the first terminal device, where the scheduling information indicates the resource used by the first terminal device to perform data transmission. When the first terminal device needs to send data, the second terminal device determines the resource for data transmission, and the second terminal device generates the scheduling information, where the scheduling information indicates the resource used by the first terminal device to perform data transmission. Further, the second terminal device schedules a resource for the first terminal device, and the first terminal device may send data based on the resource indicated by the scheduling information. In the foregoing process, when the first terminal device needs to send data, the second terminal device schedules the resource for the first terminal device. To be specific, another terminal device (a terminal device that receives data or a terminal device that is not the terminal device that receives data) schedules, for the first terminal device, the resource for data transmission, instead of completely determining, by a terminal device that sends data, the resource for data transmission, and the resource indicated by the second terminal device may directly exclude a resource occupied by another hidden terminal. This may avoid a case in which different terminal devices send data by using a same resource, avoid signal collision and mutual interference in a data transmission process, and ensure successful data transmission of the different terminal devices. In addition, from a perspective of resource multiplexing, the resource may be appropriately used, and resource utilization efficiency may be improved.

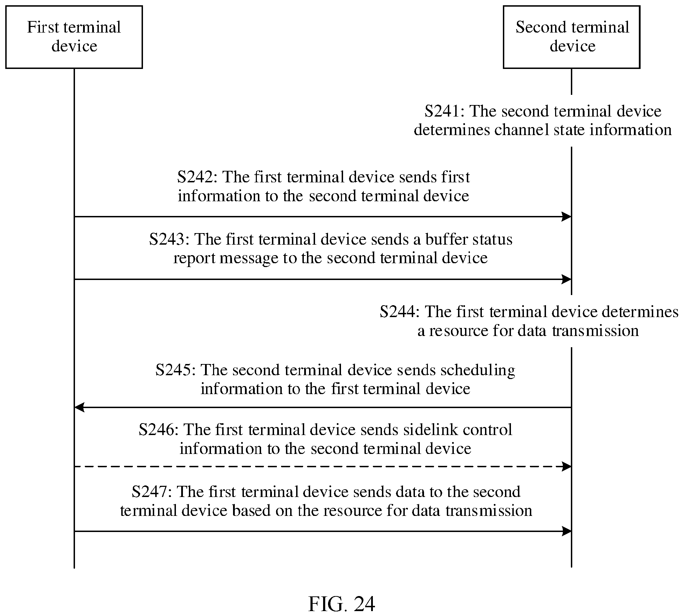

FIG. 24 is a signaling diagram of another device-to-device based resource determining method according to an embodiment of this application. As shown in FIG. 24, the method includes the following steps.

S241: A second terminal device determines channel state information.

In an example, step S241 includes the following implementations.

First implementation of step S241:
Step 1: The second terminal device sends first channel state information reference signal configuration information to a first terminal device, where the first channel state information reference signal configuration information indicates to receive a channel state information reference signal.
Step 2: The second terminal device sends the channel state information reference signal to the first terminal device, where the channel state information reference signal is used to determine channel state information.
Step 3: The second terminal device receives the channel state information sent by the first terminal device.

Second implementation of step S241:
Step 1: The second terminal device sends second channel state information reference signal configuration information to a first terminal device, where the second channel state information reference signal configuration information indicates to send a channel state information reference signal.
Step 2: The second terminal device receives the channel state information reference signal sent by the first terminal device, where the channel state information reference signal is used to determine channel state information.
Step 3: The second terminal device determines the channel state information based on the channel state information reference signal.

For example, the first terminal device is a data transmit end, the second terminal device is a data receive end, and the second terminal device is a scheduling end. To be specific, the second terminal device has a capability of scheduling a resource for data transmission. In this embodiment, the second terminal device schedules a resource for the first terminal device.

The second terminal device needs to determine channel state information for communicating with the first terminal device.

In an example, the second terminal device sends the first CSI-RS configuration information to the first terminal device, where the first CSI-RS configuration information indicates the first terminal device to receive the CSI-RS. In an example, the CSI-RS configuration information is PC5 RRC information. The second terminal device sends the CSI-RS to the first terminal device, where the CSI-RS is used to determine the channel state information. Then, after receiving the CSI-RS, the first terminal device performs channel measurement based on the CSI-RS to obtain a measurement result, and the first terminal device obtains the channel state information based on the measurement result. The first terminal device sends the channel state information to the second terminal device, and then the second terminal device obtains the channel state information.

In another example, the second terminal device sends the second CSI-RS configuration information to the first terminal device, where the second CSI-RS configuration information indicates the first terminal device to send the CSI-RS. In an example, the CSI-RS configuration information is PC5 RRC information. The first terminal device sends the CSI-RS to the second terminal device, where the CSI-RS is used to determine the channel state information. Then, after receiving the CSI-RS, the second terminal device performs channel measurement based on the CSI-RS to obtain a measurement result, and the second terminal device obtains the channel state information based on the measurement result.

Step S241 is an optional step.

S242: The first terminal device sends first information to the second terminal device, where the first information indicates to request the resource for data transmission.

In an example, a preset indicator field or a preset bit in the first information indicates to request the resource for data transmission.

In an example, the first information is physical layer sidelink control information, MAC layer sidelink control information, or RRC layer sidelink control information.

For example, before needing to send data to the second terminal device, the first terminal device first sends the first information to the second terminal device, where the first information indicates to request the resource for data transmission. In this embodiment, the first information may also be referred to as a "scheduling request (scheduling request, SR)".

In an example, the first terminal device senses a resource, and then sends the first information to the second terminal device by using the resource obtained through sensing.

Alternatively, the second terminal device sends configuration information of the first information to the first terminal device, where the configuration information of the first information indicates a resource for transmitting the first information. Therefore, the first terminal device sends the first information to the second terminal device based on the resource indicated by the configuration information of the first information. For example, the second terminal device sends configuration information of the SR to the first terminal device, where the configuration information of the SR indicates a resource for transmitting the SR. Therefore, the first terminal device sends the SR to the second terminal device based on the resource indicated by the configuration information of the SR.

In an example, the first terminal device sends the first information to the second terminal device. The first information is a single piece of signaling. There are a plurality of indicator fields in the first information, and one preset indicator field in the plurality of indicator fields may indicate to request the resource for data transmission. A location of the preset indicator field in the first information and a size of the preset indicator field are not limited. Alternatively, the first information is a single piece of signaling. There are a plurality of bits in the first information, and one preset bit in the plurality of indicator fields may indicate to request the resource for data transmission. A location of the preset bit in the first information and a size of the preset bit are not limited.

In another example, the first information is physical layer sidelink control information. A preset indicator field in the physical layer sidelink control information indicates to request the resource for data transmission, or a preset bit in the physical layer sidelink control information indicates to request the resource for data transmission. The physical layer sidelink control information may explicitly indicate to request the resource for data transmission, or the physical layer sidelink control information may implicitly indicate to request the resource for data transmission. For example, the physical layer sidelink control information may be 1^{st} stage SCI, 2^{nd} stage SCI, or SCI.

In an example, the first information is 2^{nd} stage SCI. There is a preset indicator field in the 2^{nd} stage SCI. When a value in the preset indicator field is a first value, it indicates to request the resource for data transmission. When a value in the preset indicator field is a second value, it indicates that the resource for data transmission does not need to be requested. In addition, the 2^{nd} stage SCI includes an identifier of the first terminal device and an identifier of the second terminal device. To be specific, the 2^{nd} stage SCI includes an identifier of a terminal device that sends the 2^{nd} stage SCI and an identifier of a terminal device that receives the 2^{nd} stage SCI. In this case, the first information explicitly requests the resource for data transmission. For example, the first terminal device sends the 2^{nd} stage SCI to the second terminal device, where the 2^{nd} stage SCI includes the identifier of the first terminal device and the identifier of the second terminal device. There is a 1-bit indicator field in the 2^{nd} stage SCI, and the 1-bit indicator field indicates whether to request the resource for data transmission. When a value in the 1-bit indicator field is 1, it indicates to request the resource for data transmission. When a value in the 1-bit indicator field is 0, it indicates that the resource for data transmission does not need to be requested.

In an example, the first information is 1^{st} stage SCI. There is a preset indicator field in the 1^{st} stage SCI. When a value in the preset indicator field is a first value, it indicates to request the resource for data transmission. When a value in the preset indicator field is a second value, it indicates that the resource for data transmission does not need to be requested. In addition, before receiving the 1^{st} stage SCI or after receiving the 1^{st} stage SCI, the second terminal device further needs to receive identification information sent by the first terminal device, where the identification information indicates an identifier of the first terminal device and an identifier of the second terminal device. For example, the identification information is 2^{nd} stage SCI. Therefore, the second terminal device may learn that the first terminal device requests the resource for data transmission from the second terminal device. In this case, the first information explicitly indicates to request the resource for data transmission. For example, the first terminal device sends the 1^{st} stage SCI and the 2^{nd} stage SCI to the second terminal device. There is a 1-bit indicator field in the 1^{st} stage SCI, and the 1-bit indicator field indicates whether to request the resource for data transmission. When a value in the 1-bit indicator field is 1, it indicates to request the resource for data transmission. When a value in the 1-bit indicator field is 0, it indicates that the resource for data transmission does not need to be requested. The 2^{nd} stage SCI indicates the identifier of the first terminal device and the identifier of the second terminal device.

In an example, the first information is 2^{nd} stage SCI. There is a preset bit in the 2^{nd} stage SCI. When the preset bit is a first bit sequence, it indicates to request the resource for data transmission, where the first bit sequence includes at least one bit. When the preset bit is a second bit sequence, it indicates that the resource for data transmission does not need to be requested, where the second bit sequence includes at least one bit. The first bit sequence and the second bit sequence are different bit sequences. In addition, the 2^{nd} stage SCI includes an identifier of the first terminal device and an identifier of the second terminal device. To be specific, the 2^{nd} stage SCI includes an identifier of a terminal device that sends the 2^{nd} stage SCI and an identifier of a terminal device that receives the 2^{nd} stage SCI. In this case, the first information implicitly requests the resource for data transmission. For example, the first terminal device sends the 2^{nd} stage SCI to the second terminal device, where the 2^{nd} stage SCI includes the identifier of the first terminal device and the identifier of the second terminal device, and there is a CRC in the 2^{nd} stage SCI. In this case, the last bit of the CRC in the 2^{nd} stage SCI is scrambled by using one bit. When 1 is used for scrambling, it indicates to request the resource for data transmission. When 0 is used for scrambling, it indicates that the resource for data transmission does not need to be requested. For example, the CRC in the 2^{nd} stage SCI is a 24-bit bit sequence: 0101 1010 0101 1010 0101 1010, and a CRC scrambled by using 1 is 0101 1010 0101 1010 0101 1011. In this case, it indicates to request the resource for data transmission.

In an example, the first information is 1^{st} stage SCI. There is a preset bit in the 1^{st} stage SCI. When the preset bit is a first bit sequence, it indicates to request the resource for data transmission, where the first bit sequence includes at least one bit. When the preset bit is a second bit sequence, it indicates that the resource for data transmission does not need to be requested, where the second bit sequence includes at least one bit. The first bit sequence and the second bit sequence are different bit sequences. In addition, before receiving the 1^{st} stage SCI or after receiving the 1^{st} stage SCI, the second terminal device further needs to receive identification information sent by the first terminal device, where the identification information indicates an identifier of the first terminal device and an identifier of the second terminal device. For example, the identification information is 2^{nd} stage SCI. Therefore, the second terminal device may learn that the first terminal device requests the resource for data transmission from the second terminal device. In this case, the first information implicitly indicates to request the resource for data transmission. For example, the first terminal device sends the 1^{st} stage SCI and the 2^{nd} stage SCI to the second terminal device, and there is a CRC in the 1^{st} stage SCI. In this case, the last bit of the CRC in the 1^{st} stage SCI is scrambled by using one bit. When 1 is used for scrambling, it indicates to request the resource for data transmission. When 0 is used for scrambling, it indicates that the resource for data transmission does not need to be requested. The 2^{nd} stage SCI indicates the identifier of the first terminal device and the identifier of the second terminal device. For example, the CRC in the 1^{st} stage SCI is a 24-bit bit sequence: 0101 1010 0101 1010 0101 1010, and a CRC scrambled by using 1 is 0101 1010 0101 1010 0101 1011. In this case, it indicates to request the resource for data transmission.

In still another example, the first information is MAC layer sidelink control information. A preset indicator field in the MAC layer sidelink control information indicates to request the resource for data transmission, or a preset bit in the MAC layer sidelink control information indicates to request the resource for data transmission. The MAC layer sidelink control information may explicitly indicate to request the resource for data transmission, or the MAC layer sidelink control information may implicitly indicate to request the resource for data transmission. For example, the MAC layer sidelink control information may be SL MAC CE information.

In an example, the first information is SL MAC CE information. There is a preset indicator field in the SL MAC CE information. When a value in the preset indicator field is a first value, it indicates to request the resource for data transmission. When a value in the preset indicator field is a second value, it indicates that the resource for data transmission does not need to be requested. The first value is different from the second value. In addition, before receiving the SL MAC CE information or after receiving the SL MAC CE information, the second terminal device further needs to receive identification information sent by the first terminal device, where the identification information indicates an identifier of the first terminal device and an identifier of the second terminal device. For example, the identification information is 2^{nd} stage SCI. Therefore, the second terminal device may learn that the first terminal device requests the resource for data transmission from the second terminal device. In this case, the first information explicitly indicates to request the resource for data transmission. For example, the first terminal device sends the SL MAC CE information and the 2^{nd} stage SCI to the second terminal device. There is a preset indicator field in the SL MAC CE information, and the preset indicator field indicates whether to request the resource for data transmission. When a value in the preset indicator field is 1, it indicates to request the resource for data transmission. When a value in the preset indicator field is 0, it indicates that the resource for data transmission does not need to be requested. The 2^{nd} stage SCI indicates the identifier of the first terminal device and the identifier of the second terminal device.

In yet another example, the first information is RRC layer sidelink control information. A preset indicator field in the RRC layer sidelink control information indicates to request the resource for data transmission, or a preset bit in the RRC layer sidelink control information indicates to request the resource for data transmission. The RRC layer sidelink control information may explicitly indicate to request the resource for data transmission, or the RRC layer sidelink control information may implicitly indicate to request the resource for data transmission. For example, the RRC layer sidelink control information may be PC5 RRC information.

In an example, the first information is PC5 RRC information. There is a preset indicator field in the PC5 RRC information. When a value in the preset indicator field is a first value, it indicates to request the resource for data transmission. When a value in the preset indicator field is a second value, it indicates that the resource for data transmission does not need to be requested. The first value is different from the second value. In addition, before receiving the PC5 RRC information or after receiving the PC5 RRC information, the second terminal device further needs to receive identification information sent by the first terminal device, where the identification information indicates an identifier of the first terminal device and an identifier of the second terminal device. For example, the identification information is 2^{nd} stage SCI. Therefore, the second terminal device may learn that the first terminal device requests the resource for data transmission from the second terminal device. In this case, the first information explicitly indicates to request the resource for data transmission. For example, the first terminal device sends the PC5 RRC information and the 2^{nd} stage SCI to the second terminal device. There is a preset indicator field in the PC5 RRC information, and the preset indicator field indicates whether to request the resource for data transmission. The preset indicator field may be indicated by using an integer. When a value in the preset indicator field is 1, it indicates to request the resource for data transmission. When a value in the preset indicator field is 0, it indicates that the resource for data transmission does not need to be requested. The 2^{nd} stage SCI indicates the identifier of the first terminal device and the identifier of the second terminal device. For another example, the first terminal device sends the PC5 RRC information and the 2^{nd} stage SCI to the second terminal device. There is a preset indicator field in the PC5 RRC information, and the preset indicator field indicates whether to request the resource for data transmission. The preset indicator field may be indicated by using an enumeration type, and members of the enumeration type include "activate" and "deactivate". When a value in the preset indicator field is "activate", it indicates to request the resource for data transmission. When a value in the preset indicator field is "deactivate", it indicates that the resource for data transmission does not need to be requested. The 2^{nd} stage SCI indicates the identifier of the first terminal device and the identifier of the second terminal device.

S243: The first terminal device sends a buffer status report message to the second terminal device, where the buffer status report message indicates a size of to-be-transmitted data.

In an example, a preset indicator field or a scrambled bit in the buffer status report message indicates the size of the to-be-transmitted data.

In an example, the buffer status report message is physical layer sidelink control information, MAC layer sidelink control information, or RRC layer sidelink control information.

For example, the first terminal device sends the BSR message to the second terminal device. To help the second terminal device determine an appropriate resource for the first terminal device, the BSR message needs to indicate the size of the to-be-transmitted data of the first terminal device. For example, the BSR message includes an index of the size of the to-be-transmitted data in a buffer, or the BSR message includes the size of the to-be-transmitted data in the buffer. In other words, "the size of the to-be-transmitted data" is the index of the size of the to-be-transmitted data in the buffer, or is the size of the to-be-transmitted data in the buffer. In an example, the first terminal device determines a resource in a sensing manner, where the resource is used to transmit the BSR message. Then, the first terminal device sends the BSR message to the second terminal device by using the resource obtained through sensing.

For the BSR message, refer to the description of step S24 shown in FIG. 12. Details are not described again.

In an example, the first terminal device sends the BSR information to the second terminal device. The BSR information is a single piece of signaling. There are a plurality of indicator fields in the BSR information, and one preset indicator field in the plurality of indicator fields may indicate the size of the to-be-transmitted data. A location of the preset indicator field in the BSR information and a size of the preset indicator field are not limited. Alternatively, the BSR information is a single piece of signaling. There are a plurality of bits in the BSR information, and one preset bit in the plurality of indicator fields may indicate the size of the to-be-transmitted data. A location of the preset bit in the BSR information and a size of the preset bit are not limited.

In another example, the BSR information is physical layer sidelink control information. A preset indicator field in the physical layer sidelink control information indicates the size of the to-be-transmitted data, or a preset bit in the physical layer sidelink control information indicates the size of the to-be-transmitted data. The physical layer sidelink control information may explicitly indicate the size of the to-be-transmitted data, or the physical layer sidelink control information may implicitly indicate the size of the to-be-transmitted data. For example, the physical layer sidelink control information may be 1^{st} stage SCI, 2^{nd} stage SCI, or SCI.

In still another example, the BSR information is MAC layer sidelink control information. A preset indicator field in the MAC layer sidelink control information indicates the size of the to-be-transmitted data, or a preset bit in the MAC layer sidelink control information indicates the size of the to-be-transmitted data. The MAC layer sidelink control information may explicitly indicate the size of the to-be-transmitted data, or the MAC layer sidelink control information may implicitly indicate the size of the to-be-transmitted data. For example, the MAC layer sidelink control information may be SL MAC CE information.

In yet another example, the BSR information is RRC layer sidelink control information. A preset indicator field in the RRC layer sidelink control information indicates the size of the to-be-transmitted data, or a preset bit in the RRC layer sidelink control information indicates the size of the to-be-transmitted data. The RRC layer sidelink control information may explicitly indicate the size of the to-be-transmitted data, or the RRC layer sidelink control information may implicitly indicate the size of the to-be-transmitted data. For example, the RRC layer sidelink control information may be PC5 RRC information.

There is no requirement on an execution sequence of the three steps: S241, S242, and S243.

S244: The second terminal device determines the resource for data transmission.

In an example, step S243 specifically includes: determining the resource for data transmission based on the buffer status report message.

For example, after receiving the first information and the BSR information, the second terminal device determines, based on the first information, the resource requested by the first terminal device for data transmission. Therefore, the second terminal device needs to return scheduling information to the first terminal device. However, before returning the scheduling information, the second terminal device needs to first determine the resource for data transmission.

In an example, the second terminal device determines a resource size based on the obtained channel state information. The second terminal device performs sensing at a granularity of the resource size, to obtain a scheduling resource pool, where the scheduling resource pool includes one or more resource sets (or resources). Then, the second terminal device selects, from the scheduling resource pool based on the size of the to-be-transmitted data indicated by the BSR information, a resource set (or a resource) that can carry the to-be-transmitted data. In this case, "the resource for data transmission" is determined.

In another example, the second terminal device sends a resource set or resource request to a network device, and the network device configures a resource set or a resource for the second terminal device. Further, the second terminal device determines a scheduling resource pool, where the scheduling resource pool includes one or more resource sets (or resources). Then, the second terminal device selects, from the scheduling resource pool based on the size of the to-be-transmitted data indicated by the BSR information, a resource set (or a resource) that can carry the to-be-transmitted data. In this case, "the resource for data transmission" is determined.

In still another example, a network device configures a scheduling resource pool for the second terminal device, where the scheduling resource pool includes one or more resource sets (or resources). Then, the second terminal device selects, from the scheduling resource pool based on the size of the to-be-transmitted data indicated by the BSR information, a resource set (or a resource) that can carry the to-be-transmitted data. In this case, "the resource for data transmission" is determined.

In yet another example, the second terminal device preconfigures a scheduling resource pool, where the scheduling resource pool includes one or more resource sets (or resources). Then, the second terminal device selects, from the scheduling resource pool based on the size of the to-be-transmitted data indicated by the BSR information, a resource set (or a resource) that can carry the to-be-transmitted data. In this case, "the resource for data transmission" is determined.

The granularity of the resource size may be a subchannel, a resource block group, a resource block, or the like. The granularity of the resource size is not limited.

S245: The second terminal device sends the scheduling information to the first terminal device, where the scheduling information indicates the resource used by the first terminal device to perform data transmission.

In an example, the scheduling information specifically indicates a size and a location anchor of the resource for data transmission.

In an example, the scheduling information is physical layer sidelink control information, media access control layer sidelink control information, or radio resource control layer sidelink control information.

For example, after determining "the resource for data transmission", the second terminal device generates the scheduling information. The second terminal device sends the scheduling information to the first terminal device.

There may be the following several implementations about a quantity of resource sets (resources) indicated by "the scheduling information".

First implementation of the quantity of resource sets (resources) indicated by "the scheduling information": In an example, the scheduling information indicates one resource set (or one resource). In this case, to help the first terminal device determine a location of the resource set (resource), the scheduling information may further indicate a size of the resource set (or the resource) and a location anchor of the resource set (or the resource).

Second implementation of the quantity of resource sets (resources) indicated by "the scheduling information": The scheduling information indicates a plurality of resource sets (or a plurality of resources). In this case, sizes of different resource sets (resources) may be the same or different, but location anchors of different resource sets (resources) are different. A location anchor is a start point, an end point, a midpoint, or the like of a resource set (resource).

The following uses a "resource" as an example to describe that "the scheduling information indicates a plurality of resource sets (or a plurality of resources)".

In an example, the scheduling information includes first indication information of each resource, and the first indication information indicates a size and a location anchor of the resource. In this case, the scheduling information may indicate a plurality of unoccupied resources, and each resource has its own first indication information. In other words, the first indication information is an indication of an unoccupied resource, and the first indication information may be represented by using one index value. The first indication information of each resource indicates the size and the location anchor of the resource.

In another example, the scheduling information includes second indication information of each resource and third indication information of each resource, the second indication information indicates a size of the resource, and the third indication information indicates a location anchor of the resource. In this case, the scheduling information may indicate a plurality of unoccupied resources, and each resource has its own second indication information and third indication information. For example, the scheduling information includes an indication of each resource, and the indication may be represented by using one field. The field includes a subfield 1 and a subfield 2. The subfield 1 indicates a size of the resource, and the subfield 2 indicates a location anchor of the resource.

In still another example, the scheduling information includes fourth indication information and fifth indication information that is of each resource, the fourth indication information indicates sizes of resources, where the sizes of all the resources are the same, and the fifth indication information indicates a location anchor of the resource. In this case, the scheduling information may indicate a plurality of unoccupied resources. Because sizes of the resources are the same, a same piece of fourth indication information may indicate the sizes of the resources. For example, the sizes of the resources are uniformly indicated by using one field. Each resource has its own fifth indication information, and the fifth indication information indicates a location anchor of the resource. In other words, location anchors of the resources are separately indicated by using different fields.

In addition, a quantity of resources indicated by the scheduling information is a quantity of all unoccupied resources; or a quantity of resources indicated by the scheduling information is a preset quantity.

In an example, the quantity of resources indicated by the scheduling information is not limited. To be specific, if the second terminal device determines all the unoccupied resources, the second terminal device may indicate all the unoccupied resources by using the scheduling information. It may be learned that the scheduling information sent by the second terminal device to the first terminal device may indicate as many unoccupied resources as possible.

In another example, the quantity of resources indicated by the scheduling information is limited. To be specific, the scheduling information sent by the second terminal device to the first terminal device may indicate N unoccupied resources, where N is a positive integer greater than or equal to 1. If a quantity of unoccupied resources determined by the second terminal device is N, the quantity of resources indicated by the scheduling information is N. If a quantity of unoccupied resources determined by the second terminal device is greater than N, N resources are selected from the unoccupied resources, for example, N resources with minimum noise and interference power are selected, and the quantity of resources indicated by the scheduling information is N. If a quantity of unoccupied resources determined by the second terminal device is less than N, for example, is M, where M is a positive integer greater than or equal to 1 and less than N, the scheduling information indicates the M resources; or the scheduling information indicates the M resources, and a remaining field that is in the scheduling information and that indicates the resources is set to null (or zero).

For example, the quantity of resources indicated by the scheduling information is limited to 3. If the quantity of unoccupied resources determined by the second terminal device is 3, the quantity of resources indicated by the scheduling information is 3. If the quantity of unoccupied resources determined by the second terminal device is greater than 3, three resources are selected from the unoccupied resources, for example, three resources with minimum noise and interference power are selected, and the quantity of resources indicated by the scheduling information is 3. If the quantity of unoccupied resources determined by the second terminal device is less than 3, for example, is 2, the scheduling information indicates the two resources; or the scheduling information indicates the two resources and the 3^{rd} available resource field is set to null (or zero).

When the quantity of resources indicated by the scheduling information is limited, the quantity of resources may be specified. For example, a maximum value of the quantity of resources indicated by the scheduling information is 3.

Alternatively, when the quantity of resources indicated by the scheduling information is limited, the first terminal device sends second information to the second terminal device, where the second information indicates a maximum quantity of resources. Therefore, the first terminal device limits a maximum quantity of resources returned by the second terminal device. In an example, the second information is physical layer sidelink control information, MAC layer sidelink control information, or RRC layer sidelink control information.

In an example, the first terminal device sends the second information to the second terminal device, where the second information is a single piece of signaling.

In another example, the second information is physical layer sidelink control information. In other words, the first terminal device sends the physical layer sidelink control information to the second terminal device, where the physical layer sidelink control information indicates the maximum quantity of resources. For example, the physical layer sidelink control information may be 1^{st} stage SCI, 2^{nd} stage SCI, or SCI.

In still another example, the second information is MAC layer sidelink control information. In other words, the first terminal device sends the MAC layer sidelink control information to the second terminal device, where the MAC layer sidelink control information indicates the maximum quantity of resources. For example, the MAC layer sidelink control information may be SL MAC CE information.

In yet another example, the second information is RRC layer sidelink control information. In other words, the first terminal device sends the RRC layer sidelink control information to the second terminal device, where the RRC layer sidelink control information indicates the maximum quantity of resources. For example, the RRC layer sidelink control information may be PC5 RRC information.

Then, the second terminal device sends the scheduling information to the first terminal device by using a resource in the scheduling resource pool.

In an example, the second terminal device sends the scheduling information to the first terminal device, where the scheduling information is a single piece of signaling.

In another example, the scheduling information is physical layer sidelink control information. In other words, the second terminal device sends the physical layer sidelink control information to the first terminal device, where the physical layer sidelink control information indicates the resource for data transmission. For example, the physical layer sidelink control information may be 1^{st} stage SCI, 2^{nd} stage SCI, or SCI.

In still another example, the scheduling information is MAC layer sidelink control information. In other words, the second terminal device sends the MAC layer sidelink control information to the first terminal device, where the MAC layer sidelink control information indicates the resource for data transmission. For example, the MAC layer sidelink control information may be SL MAC CE information.

In yet another example, the scheduling information is RRC layer sidelink control information. In other words, the second terminal device sends the RRC layer sidelink control information to the first terminal device, where the RRC layer sidelink control information indicates the resource for data transmission. For example, the RRC layer sidelink control information may be PC5 RRC information.

S246: The first terminal device sends sidelink control information to the second terminal device.

For example, the first terminal device sends the sidelink control information to the second terminal device, where the sidelink control information indicates information, such as an MCS, used for data transmission. To be specific, before the first terminal device sends data to the second terminal device, the first terminal device needs to indicate necessary information, such as the MCS, used for data receiving. Then, the first terminal device notifies, by using the sidelink control information, the second terminal device of the necessary information used for data receiving.

In an example, the first terminal device sends the sidelink control information to the second terminal device by using the resource indicated by the scheduling information in step S245.

In an example, the sidelink control information is physical layer sidelink control information, MAC layer sidelink control information, or RRC layer sidelink control information. For example, the sidelink control information is 1^{st} stage SCI, 2^{nd} stage SCI, or SCI.

Step S246 is an optional step. If step S246 is not performed, it may be specified in the protocol that both the first terminal device and the second terminal device have learned of the necessary information used for data receiving.

An execution sequence between step S246 and the foregoing steps S241 to S245 is not limited, provided that step S246 is performed before step S247.

S247: The first terminal device sends data to the second terminal device based on the resource for data transmission.

For example, if the scheduling information indicates one resource set (or one resource), the second terminal device sends data to the second terminal device based on the resource set (or the resource). If the scheduling information indicates a plurality of resource sets (or resources), the second terminal device sends data to the second terminal device based on the plurality of resource sets (or resources).

It may be learned that the first terminal device does not need to sense a resource, and only needs to select a resource based on an indication of the scheduling information.

In this embodiment, the first terminal device is a data transmit end, and the second terminal device is a data receive end. In addition, the second terminal device has a capability of scheduling the resource for data transmission, that is, the second terminal device is also a scheduling end. The second terminal device schedules a resource for the first terminal device. The first terminal device sends the first information to the second terminal device, where the first information indicates to request the resource for data transmission. The second terminal device may determine that the first terminal device needs to obtain a resource to send data. The second terminal device determines the resource for data transmission, and then sends the scheduling information to the first terminal device, where the scheduling information indicates the resource used by the first terminal device for data transmission. Then, the first terminal device sends data based on the resource indicated by the scheduling information. In the foregoing process, when the first terminal device needs to send data, the second terminal device schedules a resource for the first terminal device, instead of completely determining, by a terminal device that sends data, the resource for data transmission, and the resource indicated by the second terminal device may directly exclude a resource occupied by another hidden terminal. This may avoid a case in which different terminal devices send data by using a same resource, avoid signal collision and mutual interference in a data transmission process, and ensure successful data transmission of the different terminal devices. In addition, from a perspective of resource multiplexing, the resource may be appropriately used, and resource utilization efficiency may be improved. In addition, the first terminal device may further send the BSR information to the second terminal device. Therefore, when determining the scheduling information, the second terminal device may more appropriately calculate a sensing resource granularity based on the size of the to-be-transmitted data indicated by the BSR information, to determine a resource suitable for the first terminal device to perform data transmission, so that the resource is appropriately used.

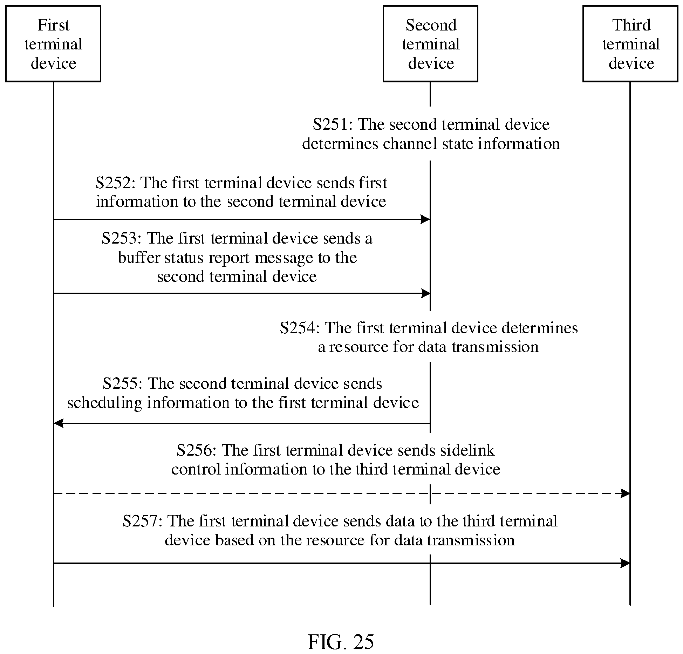

FIG. 25 is a signaling diagram of another device-to-device based resource determining method according to an embodiment of this application. As shown in FIG. 25, the method includes the following steps.

S251: A second terminal device determines channel state information.

For example, a first terminal device is a data transmit end, the second terminal device is a data scheduling end, and a third terminal device is a data receive end. To be specific, the second terminal device has a resource scheduling capability. In this embodiment, the second terminal device schedules a resource for the first terminal device.

The second terminal device needs to determine channel state information for communicating with the first terminal device.

For this step, refer to step S241 shown in FIG. 24. Details are not described again. Step S251 is an optional step.

S252: The first terminal device sends first information to the second terminal device, where the first information indicates to request a resource for data transmission.

In an example, a preset indicator field or a preset bit in the first information indicates to request the resource for data transmission.

In an example, the first information is physical layer sidelink control information, MAC layer sidelink control information, or RRC layer sidelink control information.

For example, before needing to send data to the second terminal device, the first terminal device first sends the first information to the second terminal device, where the first information indicates to request the resource for data transmission. In this embodiment, the first information may also be referred to as a "scheduling request".

In an example, the first terminal device senses a resource, and then sends the first information to the second terminal device by using the resource obtained through sensing.

Alternatively, the second terminal device sends configuration information of the first information to the first terminal device, where the configuration information of the first information indicates a resource for transmitting the first information. Therefore, the first terminal device sends the first information to the second terminal device based on the resource indicated by the configuration information of the first information. For example, the second terminal device sends configuration information of the SR to the first terminal device, where the configuration information of the SR indicates a resource for transmitting the SR. Therefore, the first terminal device sends the SR to the second terminal device based on the resource indicated by the configuration information of the SR.

In an example, the first terminal device indicates an identifier of the first terminal device to the second terminal device, and the first terminal device is a receive end of scheduling information. Therefore, when scheduling and allocating the resource for data transmission, the second terminal device needs to learn of a receive end of the scheduling information, that is, needs to learn of a receive end of the resource for data transmission. In this case, the second terminal device may learn that the receive end of the scheduling information is the first terminal device rather than the second terminal device. For example, the first information carries the identifier of the first terminal device. For another example, the first terminal device sends third information to the second terminal device, where the third information indicates the identifier of the first terminal device, and the third information is physical layer sidelink control information, MAC layer sidelink control information, or RRC layer sidelink control information. In this case, the action of "sending, by the first terminal device, the third information to the second terminal device" only needs to be performed before step S254.

Alternatively, the first terminal device does not need to indicate an identifier of the first terminal device to the second terminal device, and the first terminal device is a receive end of scheduling information. Therefore, when scheduling and allocating the resource for data transmission, the second terminal device does not need to learn of a receive end of the scheduling information, that is, does not need to learn of a receive end of the resource for data transmission. In this case, the second terminal device directly sends the scheduling information to the first terminal device. For example, the first information does not need to carry the identifier of the first terminal device. For another example, the first terminal device does not need to send the third information to the second terminal device.

In an example, the first terminal device indicates, to the second terminal device, a use end of the resource for data transmission. The first information further indicates a use end of the resource for data transmission; or the first terminal device sends fourth information to the second terminal device, where the fourth information indicates a use end of the resource for data transmission. If the use end of the resource for data transmission is the first terminal device, when allocating the resource for data transmission, the second terminal device learns that the allocated resource for data transmission is used by the first terminal device to perform data transmission. In this case, the second terminal device learns that the second terminal device does not use the resource indicated by the scheduling information. If the use end of the resource for data transmission is the second terminal device, when allocating the resource for data transmission, the second terminal device learns that the allocated resource for data transmission is used by the second terminal device to perform data transmission. In this case, the second terminal device learns that the second terminal device may use the resource indicated by the scheduling information. The fourth information is physical layer sidelink control information, MAC layer sidelink control information, or RRC layer sidelink control information. In this case, the action of "sending, by the first terminal device, the fourth information to the second terminal device" only needs to be performed before step S254.

In an example, the first terminal device indicates a data receive end to the second terminal device. The first information further indicates a data receive end, or the first terminal device sends fifth information to the second terminal device, where the fifth information indicates a data receive end. In this embodiment, the data receive end is a third terminal device. The fifth information is physical layer sidelink control information, MAC layer sidelink control information, or RRC layer sidelink control information. In this case, the action of "sending, by the first terminal device, the fifth information to the second terminal device" only needs to be performed before step S254.

In an example, the first terminal device sends the first information to the second terminal device. The first information is a single piece of signaling. There are a plurality of indicator fields in the first information, and one preset indicator field in the plurality of indicator fields may indicate to request the resource for data transmission. A location of the preset indicator field in the first information and a size of the preset indicator field are not limited. Alternatively, the first information is a single piece of signaling. There are a plurality of bits in the first information, and one preset bit in the plurality of indicator fields may indicate to request the resource for data transmission. A location of the preset bit in the first information and a size of the preset bit are not limited.

The first information carries the identifier of the first terminal device, or the first terminal device sends the third information to the second terminal device, where the third information indicates the identifier of the first terminal device. Therefore, the second terminal device may learn that the receive end of the scheduling information is the first terminal device. Alternatively, the first information does not need to carry the identifier of the first terminal device, and the first terminal device does not need to send the third information to the second terminal device. Therefore, the second terminal device does not need to learn of a receive end of the scheduling information, and directly sends the scheduling information to the first terminal device.

The first information further indicates that the use end of the resource for data transmission is the first terminal device, or the first terminal device sends the fourth information to the second terminal device, where the fourth information indicates that the use end of the resource for data transmission is the first terminal device. Therefore, the second terminal device learns that the resource for data transmission needs to be allocated to the first terminal device for data transmission.

The first information further indicates that the data receive end is the third terminal device, or the first terminal device sends the fifth information to the second terminal device, where the fifth information indicates that the data receive end is the third terminal device.

In another example, the first information is physical layer sidelink control information. A preset indicator field or a preset bit in the physical layer sidelink control information indicates to request the resource for data transmission. The physical layer sidelink control information may explicitly or implicitly indicate to request the resource for data transmission. For example, the physical layer sidelink control information may be 1^{st} stage SCI, 2^{nd} stage SCI, or SCI.

The physical layer sidelink control information carries the identifier of the first terminal device, or the first terminal device sends the third information to the second terminal device, where the third information indicates the identifier of the first terminal device. Therefore, the second terminal device may learn that the receive end of the scheduling information is the first terminal device. Alternatively, the physical layer sidelink control information does not need to carry the identifier of the first terminal device, and the first terminal device does not need to send the third information to the second terminal device. Therefore, the second terminal device does not need to learn of a receive end of the scheduling information, and directly sends the scheduling information to the first terminal device.

The physical layer sidelink control information further indicates that the use end of the resource for data transmission is the first terminal device, or the first terminal device sends the fourth information to the second terminal device, where the fourth information indicates that the use end of the resource for data transmission is the first terminal device. Therefore, the second terminal device learns that the resource for data transmission needs to be allocated to the first terminal device for data transmission.

The physical layer sidelink control information further indicates that the data receive end is the third terminal device, or the first terminal device sends the fifth information to the second terminal device, where the fifth information indicates that the data receive end is the third terminal device.

In an example (referred to as "Example 1"), the first information is 2^{nd} stage SCI. There is a preset indicator field in the 2^{nd} stage SCI. When a value in the preset indicator field is a first value, it indicates to request the resource for data transmission. When a value in the preset indicator field is a second value, it indicates that the resource for data transmission does not need to be requested. In this case, the first information explicitly requests the resource for data transmission. For example, the first terminal device sends the 2^{nd} stage SCI to the second terminal device, where the 2^{nd} stage SCI includes an identifier of the first terminal device and an identifier of the second terminal device. There is a 1-bit indicator field in the 2^{nd} stage SCI, and the 1-bit indicator field indicates whether to request the resource for data transmission. When a value in the 1-bit indicator field is 1, it indicates to request the resource for data transmission. When a value in the 1-bit indicator field is 0, it indicates that the resource for data transmission does not need to be requested.

The following implementations are further involved. First implementation: The 2^{nd} stage SCI includes the identifier of the first terminal device and the identifier of the second terminal device. To be specific, the 2^{nd} stage SCI includes an identifier of a terminal device that sends the 2^{nd} stage SCI and an identifier of a terminal device that receives the 2^{nd} stage SCI. Alternatively, the first terminal device sends the third information to the second terminal device, where the third information indicates the identifier of the first terminal device (in this case, the third information and the fourth information are the same information). Therefore, the second terminal device learns that the receive end of the scheduling information is the first terminal device, and learns that the use end of the resource for data transmission is the first terminal device.

The 2^{nd} stage SCI further includes an identifier of the third terminal device, or the first terminal device sends the fifth information to the second terminal device, where the fifth information indicates the identifier of the third terminal device. Therefore, the second terminal device learns that the data receive end is the third terminal device.

Second implementation: Modify the 2^{nd} stage SCI, so that the 2^{nd} stage SCI does not include the identifier of the first terminal device. In addition, the first terminal device does not need to send the third information to the second terminal device. Therefore, the second terminal device does not need to learn of a receive end of the scheduling information. However, the first terminal device sends the fourth information to the second terminal device, where the fourth information indicates the identifier of the first terminal device. Therefore, the second terminal device learns that the use end of the data transmission resource is the first terminal device.

The 2^{nd} stage SCI further includes an identifier of the third terminal device, or the first terminal device sends the fifth information to the second terminal device, where the fifth information indicates the identifier of the third terminal device. Therefore, the second terminal device learns that the data receive end is the third terminal device.

Third implementation: The 2^{nd} stage SCI includes the identifier of the first terminal device and the identifier of the second terminal device. To be specific, the 2^{nd} stage SCI includes an identifier of a terminal device that sends the 2^{nd} stage SCI and an identifier of a terminal device that receives the 2^{nd} stage SCI. Alternatively, the first terminal device sends the third information to the second terminal device, where the third information indicates the identifier of the first terminal device (in this case, the third information and the fourth information are the same information). Therefore, the second terminal device learns that the use end of the data transmission resource is the first terminal device.

The 2^{nd} stage SCI further includes an identifier of the third terminal device, or the first terminal device sends the fifth information to the second terminal device, where the fifth information indicates the identifier of the third terminal device. Therefore, the second terminal device learns that the data receive end is the third terminal device.

In an example (referred to as "Example 2"), the first information is 1^{st} stage SCI. There is a preset indicator field in the 1^{st} stage SCI. When a value in the preset indicator field is a first value, it indicates to request the resource for data transmission. When a value in the preset indicator field is a second value, it indicates that the resource for data transmission does not need to be requested. In this case, the first information explicitly indicates to request the resource for data transmission. For example, the first terminal device sends the 1^{st} stage SCI to the second terminal device. There is a 1-bit indicator field in the 1^{st} stage SCI, and the 1-bit indicator field indicates whether to request the resource for data transmission. When a value in the 1-bit indicator field is 1, it indicates to request the resource for data transmission. When a value in the 1-bit indicator field is 0, it indicates that the resource for data transmission does not need to be requested.

The following implementations are further involved. First implementation: The first terminal device sends the third information to the second terminal device, where the third information indicates an identifier of the first terminal device (in this case, the third information and the fourth information are the same information). Therefore, the second terminal device learns that the receive end of the scheduling information is the first terminal device, and learns that the use end of the resource for data transmission is the first terminal device.

The first terminal device sends the fifth information to the second terminal device, where the fifth information indicates an identifier of the third terminal device. Therefore, the second terminal device learns that the data receive end is the third terminal device.

Second implementation: The first terminal device does not need to send the third information to the second terminal device. Therefore, the second terminal device does not need to learn of a receive end of the scheduling information. However, the first terminal device sends the fourth information to the second terminal device, where the fourth information indicates an identifier of the first terminal device. Therefore, the second terminal device learns that the use end of the data transmission resource is the first terminal device.

The first terminal device sends the fifth information to the second terminal device, where the fifth information indicates an identifier of the third terminal device. Therefore, the second terminal device learns that the data receive end is the third terminal device.

Third implementation: The first terminal device sends the third information to the second terminal device, where the third information indicates an identifier of the first terminal device (in this case, the third information and the fourth information are the same information). Therefore, the second terminal device learns that the use end of the data transmission resource is the first terminal device.

The first terminal device sends the fifth information to the second terminal device, where the fifth information indicates an identifier of the third terminal device. Therefore, the second terminal device learns that the data receive end is the third terminal device.

In an example (referred to as "Example 3"), the first information is 2^{nd} stage SCI. There is a preset bit in the 2^{nd} stage SCI. When the preset bit is a first bit sequence, it indicates to request the resource for data transmission, where the first bit sequence includes at least one bit. When the preset bit is a second bit sequence, it indicates that the resource for data transmission does not need to be requested, where the second bit sequence includes at least one bit. The first bit sequence and the second bit sequence are different bit sequences. In this case, the first information implicitly requests the resource for data transmission. For example, the first terminal device sends the 2^{nd} stage SCI to the second terminal device, where the 2^{nd} stage SCI includes an identifier of the first terminal device and an identifier of the second terminal device, and there is a CRC in the 2^{nd} stage SCI. In this case, the last bit of the CRC in the 2^{nd} stage SCI is scrambled by using one bit. When 1 is used for scrambling, it indicates to request the resource for data transmission. When 0 is used for scrambling, it indicates that the resource for data transmission does not need to be requested. For example, the CRC in the 2^{nd} stage SCI is a 24-bit bit sequence: 0101 1010 0101 1010 0101 1010, and a CRC scrambled by using 1 is 0101 1010 0101 1010 0101 1011. In this case, it indicates to request the resource for data transmission.

For other content, refer to the foregoing "Example 1". Details are not described again.

In an example (referred to as "Example 4"), the first information is 1^{st} stage SCI. There is a preset bit in the 1^{st} stage SCI. When the preset bit is a first bit sequence, it indicates to request the resource for data transmission, where the first bit sequence includes at least one bit. When the preset bit is a second bit sequence, it indicates that the resource for data transmission does not need to be requested, where the second bit sequence includes at least one bit. The first bit sequence and the second bit sequence are different bit sequences. In this case, the first information implicitly indicates to request the resource for data transmission. For example, the first terminal device sends the 1^{st} stage SCI to the second terminal device, and there is a CRC in the 1^{st} stage SCI. In this case, the last bit of the CRC in the 1^{st} stage SCI is scrambled by using one bit. When 1 is used for scrambling, it indicates to request the resource for data transmission. When 0 is used for scrambling, it indicates that the resource for data transmission does not need to be requested. For example, the CRC in the 1^{st} stage SCI is a 24-bit bit sequence: 0101 1010 0101 1010 0101 1010, and a CRC scrambled by using 1 is 0101 1010 0101 1010 0101 1011. In this case, it indicates to request the resource for data transmission.

For other content, refer to the foregoing "Example 2". Details are not described again.

In still another example, the first information is MAC layer sidelink control information. A preset indicator field in the MAC layer sidelink control information indicates to request the resource for data transmission, or a preset bit in the MAC layer sidelink control information indicates to request the resource for data transmission. The MAC layer sidelink control information may explicitly indicate to request the resource for data transmission, or the MAC layer sidelink control information may implicitly indicate to request the resource for data transmission. For example, the MAC layer sidelink control information may be SL MAC CE information.

In an example (referred to as "Example 5"), the first information is SL MAC CE information. There is a preset indicator field in the SL MAC CE information. When a value in the preset indicator field is a first value, it indicates to request the resource for data transmission. When a value in the preset indicator field is a second value, it indicates that the resource for data transmission does not need to be requested. The first value is different from the second value. In this case, the first information explicitly indicates to request the resource for data transmission. For example, the first terminal device sends the SL MAC CE information to the second terminal device. There is a preset indicator field in the SL MAC CE information, and the preset indicator field indicates whether to request the resource for data transmission. When a value in the preset indicator field is 1, it indicates to request the resource for data transmission. When a value in the preset indicator field is 0, it indicates that the resource for data transmission does not need to be requested.

The following implementations are further involved. First implementation: The first terminal device sends the third information to the second terminal device, where the third information indicates an identifier of the first terminal device (in this case, the third information and the fourth information are the same information). Therefore, the second terminal device learns that the receive end of the scheduling information is the first terminal device, and learns that the use end of the resource for data transmission is the first terminal device.

The first terminal device sends the fifth information to the second terminal device, where the fifth information indicates an identifier of the third terminal device. Therefore, the second terminal device learns that the data receive end is the third terminal device.

Second implementation: The first terminal device does not need to send the third information to the second terminal device. Therefore, the second terminal device does not need to learn of a receive end of the scheduling information. However, the first terminal device sends the fourth information to the second terminal device, where the fourth information indicates an identifier of the first terminal device. Therefore, the second terminal device learns that the use end of the data transmission resource is the first terminal device.

The first terminal device sends the fifth information to the second terminal device, where the fifth information indicates an identifier of the third terminal device. Therefore, the second terminal device learns that the data receive end is the third terminal device.

Third implementation: The first terminal device sends the third information to the second terminal device, where the third information indicates an identifier of the first terminal device (in this case, the third information and the fourth information are the same information). Therefore, the second terminal device learns that the use end of the data transmission resource is the first terminal device.

The first terminal device sends the fifth information to the second terminal device, where the fifth information indicates an identifier of the third terminal device. Therefore, the second terminal device learns that the data receive end is the third terminal device.

In yet another example, the first information is RRC layer sidelink control information. A preset indicator field in the RRC layer sidelink control information indicates to request the resource for data transmission, or a preset bit in the RRC layer sidelink control information indicates to request the resource for data transmission. The RRC layer sidelink control information may explicitly indicate to request the resource for data transmission, or the RRC layer sidelink control information may implicitly indicate to request the resource for data transmission. For example, the RRC layer sidelink control information may be PC5 RRC information.

In an example (referred to as "Example 6"), the first information is PC5 RRC information. There is a preset indicator field in the PC5 RRC information. When a value in the preset indicator field is a first value, it indicates to request the resource for data transmission. When a value in the preset indicator field is a second value, it indicates that the resource for data transmission does not need to be requested. The first value is different from the second value. In this case, the first information explicitly indicates to request the resource for data transmission. For example, the first terminal device sends the PC5 RRC information and the 2^{nd} stage SCI to the second terminal device. There is a preset indicator field in the PC5 RRC information, and the preset indicator field indicates whether to request the resource for data transmission. The preset indicator field may be indicated by using an integer. When a value in the preset indicator field is 1, it indicates to request the resource for data transmission. When a value in the preset indicator field is 0, it indicates that the resource for data transmission does not need to be requested. The 2^{nd} stage SCI indicates an identifier of the first terminal device and an identifier of the second terminal device. For another example, the first terminal device sends the PC5 RRC information to the second terminal device. There is a preset indicator field in the PC5 RRC information, and the preset indicator field indicates whether to request the resource for data transmission. The preset indicator field may be indicated by using an enumeration type, and members of the enumeration type include "activate" and "deactivate". When a value in the preset indicator field is "activate", it indicates to request the resource for data transmission. When a value in the preset indicator field is "deactivate", it indicates that the resource for data transmission does not need to be requested.

For other content, refer to the foregoing "Example 6". Details are not described again.

S253: The first terminal device sends a buffer status report message to the second terminal device, where the buffer status report message indicates a size of to-be-transmitted data.

In an example, a preset indicator field or a scrambled bit in the buffer status report message indicates the size of the to-be-transmitted data.

In an example, the buffer status report message is physical layer sidelink control information, MAC layer sidelink control information, or RRC layer sidelink control information.

For example, the first terminal device sends the BSR message to the second terminal device. To help the second terminal device determine an appropriate resource for the first terminal device, the BSR message needs to indicate the size of the to-be-transmitted data of the first terminal device. Different from step S243 in FIG. 24, the BSR message needs to indicate a size of data that needs to be sent by the first terminal device to the third terminal device.

For another description of the BSR message, refer to the description of step S243 shown in FIG. 24. Details are not described again.

There is no requirement on an execution sequence of the three steps: S251, S252, and S253.

S254: The second terminal device determines the resource for data transmission.

In an example, step S253 specifically includes: determining the resource for data transmission based on the buffer status report message.

For example, after receiving the first information and the BSR information, the second terminal device determines, based on the first information, the resource requested by the first terminal device for data transmission. Therefore, the second terminal device needs to return the scheduling information to the first terminal device. However, before returning the scheduling information, the second terminal device needs to first determine the resource for data transmission.

In an example, the second terminal device determines a resource size based on the obtained channel state information. The second terminal device performs sensing at a granularity of the resource size, to obtain a scheduling resource pool, where the scheduling resource pool includes one or more resource sets (or resources). Then, the second terminal device selects, from the scheduling resource pool based on the size of the to-be-transmitted data indicated by the BSR information, a resource set (or a resource) that can carry the to-be-transmitted data. In this case, "the resource for data transmission" is determined.

In another example, the second terminal device sends a resource set or resource request to a network device, and the network device configures a resource set or a resource for the second terminal device. Further, the second terminal device determines a scheduling resource pool, where the scheduling resource pool includes one or more resource sets (or resources). Then, the second terminal device selects, from the scheduling resource pool based on the size of the to-be-transmitted data indicated by the BSR information, a resource set (or a resource) that can carry the to-be-transmitted data. In this case, "the resource for data transmission" is determined.

In still another example, a network device configures a scheduling resource pool for the second terminal device, where the scheduling resource pool includes one or more resource sets (or resources). Then, the second terminal device selects, from the scheduling resource pool based on the size of the to-be-transmitted data indicated by the BSR information, a resource set (or a resource) that can carry the to-be-transmitted data. In this case, "the resource for data transmission" is determined.

In yet another example, the second terminal device preconfigures a scheduling resource pool, where the scheduling resource pool includes one or more resource sets (or resources). Then, the second terminal device selects, from the scheduling resource pool based on the size of the to-be-transmitted data indicated by the BSR information, a resource set (or a resource) that can carry the to-be-transmitted data. In this case, "the resource for data transmission" is determined.

S255: The second terminal device sends the scheduling information to the first terminal device, where the scheduling information indicates the resource used by the first terminal device to perform data transmission.

In an example, the scheduling information specifically indicates a size and a location anchor of the resource for data transmission.

In an example, the scheduling information is physical layer sidelink control information, media access control layer sidelink control information, or radio resource control layer sidelink control information.

For example, after determining "the resource for data transmission", the second terminal device generates the scheduling information. The second terminal device sends the scheduling information to the first terminal device.

Different from step S245 in FIG. 24, the scheduling information indicates a resource that needs to be used when the first terminal device transmits data to the third terminal device.

For another description of "the scheduling information", refer to the description of step S245 shown in FIG. 24. Details are not described again.

S256: The first terminal device sends sidelink control information to the third terminal device.

For example, the first terminal device sends the sidelink control information to the third terminal device, where the sidelink control information indicates information, such as an MCS, for data transmission. To be specific, before the first terminal device sends data to the third terminal device, the first terminal device needs to indicate necessary information, such as the MCS, used for data receiving. Then, the first terminal device notifies, by using the sidelink control information, the third terminal device of the necessary information used for data receiving.

In an example, the first terminal device sends the sidelink control information to the third terminal device by using the resource indicated by the scheduling information in step S255.

In an example, the sidelink control information is physical layer sidelink control information, MAC layer sidelink control information, or RRC layer sidelink control information. For example, the sidelink control information is 1^{st} stage SCI, 2^{nd} stage SCI, or SCI.

Step S256 is an optional step. If step S256 is not performed, it may be specified in the protocol that both the first terminal device and the third terminal device have learned of the necessary information used for data receiving.

An execution sequence between step S256 and the foregoing steps S251 to S255 is not limited, provided that step S256 is performed before step S257.

S257: The first terminal device sends data to the third terminal device based on the resource for data transmission.

For example, if the scheduling information indicates one resource set (or one resource), the second terminal device sends data to the third terminal device based on the resource set (or the resource). If the scheduling information indicates a plurality of resource sets (or resources), the second terminal device sends data to the third terminal device based on the plurality of resource sets (or resources).

It may be learned that the first terminal device does not need to sense a resource, and only needs to select a resource based on an indication of the scheduling information.

In this embodiment, the first terminal device is a data transmit end, the second terminal device is a data scheduling end, and the third terminal device is a data receive end. The second terminal device schedules a resource for the first terminal device. The first terminal device sends the first information to the second terminal device, where the first information indicates to request the resource for data transmission. The second terminal device may determine that the first terminal device needs to obtain a resource to send data to the third terminal device. The second terminal device determines the resource for data transmission, and then sends the scheduling information to the first terminal device, where the scheduling information indicates the resource used by the first terminal device for data transmission. Then, the first terminal device sends data to the third terminal device based on the resource indicated by the scheduling information. In the foregoing process, when the first terminal device needs to send data, the second terminal device schedules a resource for the first terminal device, instead of completely determining, by a terminal device that sends data, the resource for data transmission, and the resource indicated by the second terminal device may directly exclude a resource occupied by another hidden terminal. This may avoid a case in which different terminal devices send data by using a same resource, avoid signal collision and mutual interference in a data transmission process, and ensure successful data transmission of the different terminal devices. In addition, from a perspective of resource multiplexing, the resource may be appropriately used, and resource utilization efficiency may be improved. In addition, the first terminal device may further send the BSR information to the second terminal device. Therefore, when determining the scheduling information, the second terminal device may more appropriately calculate a sensing resource granularity based on the size of the to-be-transmitted data indicated by the BSR information, to determine a resource suitable for the first terminal device to perform data transmission, so that the resource is appropriately used.

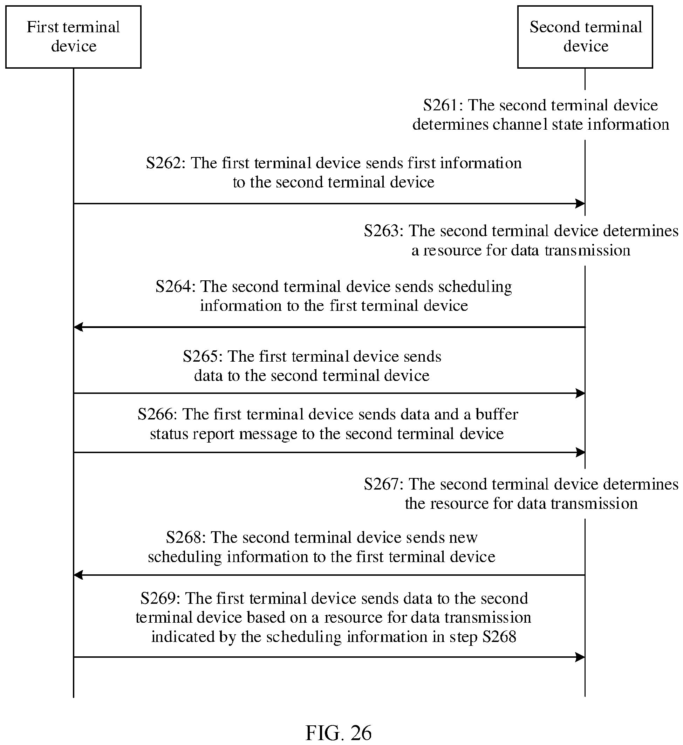

FIG. 26 is a signaling diagram of another device-to-device based resource determining method according to an embodiment of this application. As shown in FIG. 26, the method includes the following steps.

S261: A second terminal device determines channel state information.

For example, a first terminal device is a data transmit end, the second terminal device is a data receive end, and the second terminal device is a scheduling end. To be specific, the second terminal device has a capability of scheduling a resource for data transmission. In this embodiment, the second terminal device schedules a resource for the first terminal device.

The second terminal device needs to determine channel state information for communicating with the first terminal device.

For this step, refer to step S241 shown in FIG. 24. Details are not described again. Step S261 is an optional step.

S262: The first terminal device sends first information to the second terminal device, where the first information indicates to request the resource for data transmission.

In an example, a preset indicator field or a preset bit in the first information indicates to request the resource for data transmission.

In an example, the first information is physical layer sidelink control information, MAC layer sidelink control information, or RRC layer sidelink control information.

For example, before needing to send data to the second terminal device, the first terminal device first sends the first information to the second terminal device, where the first information indicates to request the resource for data transmission. In this embodiment, the first information may also be referred to as a "scheduling request".

For this step, refer to step S242 in FIG. 24. Details are not described again.

S263: The second terminal device determines the resource for data transmission.

For example, after receiving the first information, the second terminal device determines, based on the first information, the resource requested by the first terminal device for data transmission. Therefore, the second terminal device needs to return scheduling information to the first terminal device. However, before returning the scheduling information, the second terminal device needs to first determine the resource for data transmission.

In an example, in step S261, the second terminal device may obtain, through measurement, channel state information of a communication link between the first terminal device and the second terminal device, and the second terminal device may determine a resource size based on the channel state information. The second terminal device performs sensing at a granularity of the resource size, to obtain a scheduling resource pool, where the scheduling resource pool includes one or more resource sets (or resources). Then, the second terminal device determines that a resource in the scheduling resource pool is "the resource for data transmission". It may be learned that "the resource for data transmission" may be one or more resource sets (or resources).

In another example, the second terminal device has determined a scheduling resource pool by sending a resource set or resource request to a network device, or in a preconfiguration manner, where the scheduling resource pool includes one or more resource sets (or resources). The second terminal device may allocate a fixed-size resource set (or resource) from the scheduling resource pool, and use the fixed-size resource set (or resource) allocated in this case as "the resource for data transmission". For example, the second terminal device allocates Y physical resource blocks (physical resource blocks, PRBs) to the first terminal device, where Y is a positive integer greater than or equal to 1.

The granularity of the resource size may be a subchannel, a resource block group, a resource block, or the like. The granularity of the resource size is not limited.

S264: The second terminal device sends the scheduling information to the first terminal device, where the scheduling information indicates the resource used by the first terminal device to perform data transmission.

In an example, the scheduling information specifically indicates a size and a location anchor of the resource for data transmission.

In an example, the scheduling information is physical layer sidelink control information, media access control layer sidelink control information, or radio resource control layer sidelink control information.

For example, after determining "the resource for data transmission", the second terminal device generates the scheduling information. The second terminal device sends the scheduling information to the first terminal device.

For this step, refer to step S245 shown in FIG. 24. Details are not described again.

After step S264, step S265 or step S266 may be performed.

S265: The first terminal device sends data to the second terminal device based on the resource for data transmission.

For example, after step S264, the scheduling information indicates the resource for data transmission, but the resource may be insufficient to carry to-be-sent data of the first terminal device. This is because the scheduling information may indicate only one or a fixed quantity of resource sets (or resources). Therefore, in this step, if the resource indicated by the scheduling information is sufficient to carry the to-be-sent data of the first terminal device, the first terminal device sends the data to the second terminal device based on the resource indicated by the scheduling information.

In addition, the first terminal device does not need to sense a resource, and does not need to obtain the resource for data transmission based on the resource obtained through sensing and the resource indicated by the scheduling information. The first terminal device may directly send data to the second terminal device by using the resource indicated by the scheduling information. Therefore, signaling overheads of the first terminal device are reduced.

In an example, the scheduling information indicates one resource set (or one resource), so that the first terminal device sends data to the second terminal device by using the resource set (or the resource). In another example, the scheduling information indicates a plurality of resource sets (or a plurality of resources), so that the first terminal device sends data to the second terminal device by using the plurality of resource sets (or the plurality of resources).

In this step, because the resource for data transmission is scheduled by the second terminal device, when the second terminal device receives data on the resource of a channel, the second terminal device may learn that the data in this case is sent by the first terminal device.

In an example, before step S264 or step S266, the first terminal device sends sidelink control information to the second terminal device, where the sidelink control information indicates information, such as an MCS, used for data transmission. To be specific, before the first terminal device sends data to the second terminal device, the first terminal device needs to indicate necessary information, such as the MCS, used for data receiving. Then, the first terminal device notifies, by using the sidelink control information, the second terminal device of the necessary information used for data receiving.

In an example, the sidelink control information is physical layer sidelink control information, MAC layer sidelink control information, or RRC layer sidelink control information. For example, the sidelink control information is 1^{st} stage SCI, 2^{nd} stage SCI, or SCI.

S266: The first terminal device sends data and a buffer status report message to the second terminal device based on the resource for data transmission, where the buffer status report message indicates a size of to-be-transmitted data.

In an example, a preset indicator field or a scrambled bit in the buffer status report message indicates the size of the to-be-transmitted data.

In an example, the buffer status report message is physical layer sidelink control information, MAC layer sidelink control information, or RRC layer sidelink control information.

For example, after step S264, if the resource indicated by the scheduling information is insufficient to carry the to-be-sent data of the first terminal device, the first terminal device further needs to request a resource from the second terminal device again.

In this step, the first terminal device sends the BSR message to the second terminal device by using the resource indicated by the scheduling information, where the BSR information needs to indicate the size of the to-be-transmitted data of the first terminal device. Because the resource for data transmission is scheduled by the second terminal device, when the second terminal device receives the BSR information on the resource of the channel, the second terminal device may learn that the BSR information in this case is sent by the first terminal device.

In addition, to avoid wasting the resource indicated by the scheduling information, the first terminal device may further send some of the to-be-transmitted data to the second terminal device by using the resource indicated by the scheduling information. Further, there is remaining data in the to-be-transmitted data, and the remaining data is not sent out. Therefore, the BSR information indicates a size of the remaining data.

The BSR message includes an index of the size of the remaining data in a buffer, or the BSR message includes the size of the remaining data in the buffer. In other words, "the size of the remaining data" is the index of the size of the remaining data in the buffer, or is the size of the remaining data in the buffer.

In an example, the BSR information is a single piece of signaling. Alternatively, the buffer status report message is physical layer sidelink control information, MAC layer sidelink control information, or RRC layer sidelink control information. For descriptions of another structure of the "BSR information", refer to step S243 in FIG. 24. Details are not described again.

S267: The second terminal device determines the resource for data transmission.

For example, this step is performed after step S266. In step S261, the second terminal device has obtained the channel state information, and the BSR message indicates the size of the to-be-transmitted data ("the remaining data" in this case). The second terminal device may determine, based on the channel state information and the BSR information, a size of a resource that needs to be occupied by the first terminal device to perform data transmission. Then, the second terminal device performs sensing at a granularity of the size, determines an unoccupied resource set or resource, and further determines an available resource set or resource. The second terminal device generates new scheduling information, where the new scheduling information indicates the unoccupied resource set or resource, and the unoccupied resource set or resource is "the resource for data transmission" of the first terminal device.

In another example, after the second terminal device receives the BSR information, because the BSR message indicates the size of the to-be-transmitted data ("the remaining data" in this case), the second terminal device may determine, based on the BSR information, a size of a resource that needs to be occupied by the first terminal device to perform data transmission. Then, the second terminal device performs sensing at a granularity of the size, determines an unoccupied resource set or resource, and further determines an available resource set or resource. The second terminal device generates new scheduling information, where the new scheduling information indicates the unoccupied resource set or resource, and the unoccupied resource set or resource is "the resource for data transmission" of the first terminal device.

The granularity of the resource size may be a subchannel, a resource block group, a resource block, or the like. The granularity of the resource size is not limited.

S268: The second terminal device sends new scheduling information to the first terminal device, where the new scheduling information indicates the resource used by the first terminal device to perform data transmission.

For example, this step is performed after step S267. For the scheduling information in this step, refer to step S245 shown in FIG. 24.

In this step, the resource for data transmission indicated by "the new scheduling information" may carry "the remaining data" that is not sent by the first terminal device.

S269: The first terminal device sends data to the second terminal device based on the resource for data transmission indicated by the scheduling information in step S268.

For example, because the resource for data transmission indicated by the scheduling information in step S268 is determined by the first terminal device based on the BSR information, the resource may carry "the remaining data" that is not sent by the first terminal device. The first terminal device may send "the remaining data" to the second terminal device by using the resource for data transmission indicated by the scheduling information in step S268.

In addition, the first terminal device does not need to sense a resource, and does not need to obtain the resource for data transmission based on the resource obtained through sensing and the resource indicated by the scheduling information. The first terminal device may directly send data to the second terminal device by using the resource indicated by the scheduling information in step S268. Therefore, signaling overheads of the first terminal device are reduced.

In an example, before step S269, the first terminal device sends the sidelink control information to the second terminal device, where the sidelink control information indicates the information, such as the MCS, used for data transmission. To be specific, before the first terminal device sends data to the second terminal device, the first terminal device needs to indicate the necessary information, such as the MCS, used for data receiving. Then, the first terminal device notifies, by using the sidelink control information, the second terminal device of the necessary information used for data receiving. Alternatively, because the first terminal device has sent the sidelink control information to the second terminal device before step S265, before the sending data in step S269, the first terminal device does not need to send the sidelink control information to the second terminal device again.

In this embodiment, the first terminal device is a data transmit end, and the second terminal device is a data receive end. In addition, the second terminal device has a capability of scheduling the resource for data transmission, that is, the second terminal device is also a scheduling end. The second terminal device schedules a resource for the first terminal device. The first terminal device sends the first information to the second terminal device, and then receives the scheduling information sent by the second terminal device. If the resource indicated by the scheduling information is sufficient to carry the to-be-transmitted data, the first terminal device sends the data to the second terminal device by using the resource indicated by the scheduling information. If the resource indicated by the scheduling information is insufficient to carry the to-be-transmitted data, the first terminal device sends some data and the BSR information to the second terminal device by using the resource indicated by the scheduling information, to obtain a remaining resource. The first terminal device receives, again, the scheduling information sent by the first terminal device. The resource for data transmission indicated by the scheduling information is determined by the first terminal device based on the BSR information, so that the resource may carry "the remaining data" that is not sent by the first terminal device. The first terminal device may send "the remaining data" to the second terminal device by using the resource for data transmission indicated by the scheduling information. The following technical effects may also be achieved in the foregoing process: A resource indicated by the second terminal device may directly exclude a resource occupied by another hidden terminal. This may avoid a case in which different terminal devices send data by using a same resource, avoid signal collision and mutual interference in a data transmission process, and ensure successful data transmission of the different terminal devices. In addition, from a perspective of resource multiplexing, the resource may be appropriately used, and resource utilization efficiency may be improved.

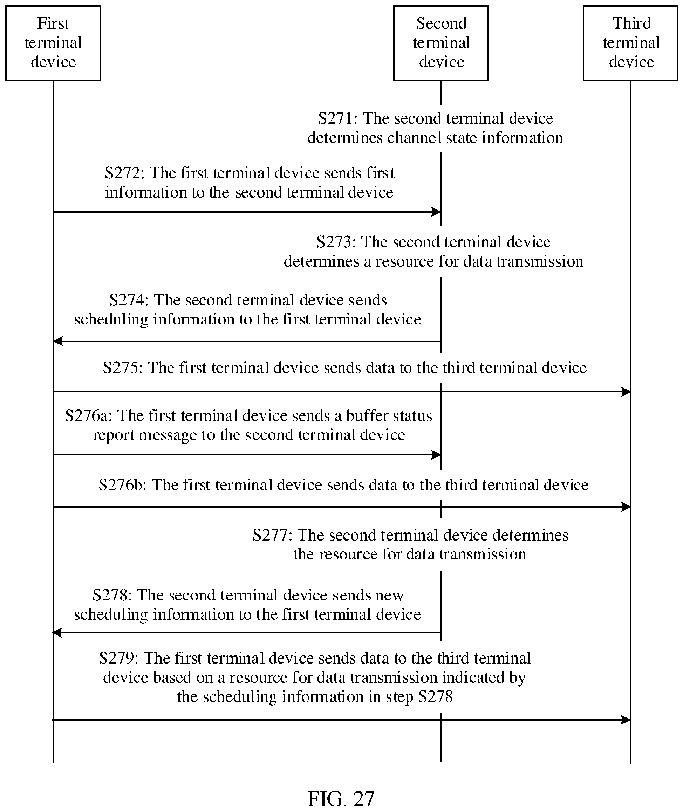

FIG. 27 is a signaling diagram of another device-to-device based resource determining method according to an embodiment of this application. As shown in FIG. 27, the method includes the following steps.

S271: A second terminal device determines channel state information.

For example, a first terminal device is a data transmit end, the second terminal device is a data scheduling end, and a third terminal device is a data receive end. To be specific, the second terminal device has a resource scheduling capability. In this embodiment, the second terminal device schedules a resource for the first terminal device.

The second terminal device needs to determine channel state information for communicating with the first terminal device.

For this step, refer to step S261 shown in FIG. 26. Details are not described again. Step S271 is an optional step.

S272: The first terminal device sends first information to the second terminal device, where the first information indicates to request a resource for data transmission.

In an example, a preset indicator field or a preset bit in the first information indicates to request the resource for data transmission.

In an example, the first information is physical layer sidelink control information, MAC layer sidelink control information, or RRC layer sidelink control information.

For example, before needing to send data to the second terminal device, the first terminal device first sends the first information to the second terminal device, where the first information indicates to request the resource for data transmission. In this embodiment, the first information may also be referred to as a "scheduling request".

For a detailed process of this step, refer to step S252 in FIG. 25. Details are not described again.

S273: The second terminal device determines the resource for data transmission.

For example, after receiving the first information, the second terminal device determines, based on the first information, the resource requested by the first terminal device for data transmission. Therefore, the second terminal device needs to return scheduling information to the first terminal device. However, before returning the scheduling information, the second terminal device needs to first determine the resource for data transmission.

In an example, the second terminal device may obtain, through measurement, channel state information of a communication link between the first terminal device and the third terminal device, and the second terminal device may determine a resource size based on the channel state information. The second terminal device performs sensing at a granularity of the resource size, to obtain a scheduling resource pool, where the scheduling resource pool includes one or more resource sets (or resources). Then, the second terminal device determines that a resource in the scheduling resource pool is "the resource for data transmission". It may be learned that "the resource for data transmission" may be one or more resource sets (or resources).

In another example, the second terminal device has determined a scheduling resource pool by sending a resource set or resource request to a network device, or in a preconfiguration manner, where the scheduling resource pool includes one or more resource sets (or resources). The second terminal device may allocate a fixed-size resource set (or resource) from the scheduling resource pool, and use the fixed-size resource set (or resource) allocated in this case as "the resource for data transmission". For example, the second terminal device allocates Y physical resource blocks to the first terminal device, where Y is a positive integer greater than or equal to 1.

The granularity of the resource size may be a subchannel, a resource block group, a resource block, or the like. The granularity of the resource size is not limited.

S274: The second terminal device sends the scheduling information to the first terminal device, where the scheduling information indicates the resource used by the first terminal device to perform data transmission.

In an example, the scheduling information specifically indicates a size and a location anchor of the resource for data transmission.

In an example, the scheduling information is physical layer sidelink control information, media access control layer sidelink control information, or radio resource control layer sidelink control information.

For example, after determining "the resource for data transmission", the second terminal device generates the scheduling information. The second terminal device sends the scheduling information to the first terminal device.

For this step, refer to step S245 shown in FIG. 24. Details are not described again.

After step S274, step S275 or step S276 may be performed.

S275: The first terminal device sends data to the third terminal device based on the resource for data transmission.

For example, the first terminal device needs to send data to the third terminal device. After step S274, the scheduling information indicates the resource for data transmission, but the resource may be insufficient to carry to-be-sent data of the first terminal device (in this case, data that needs to be sent by the first terminal device to the third terminal device). This is because the scheduling information may indicate only one or a fixed quantity of resource sets (or resources). Therefore, in this step, if the resource indicated by the scheduling information is sufficient to carry the to-be-sent data of the first terminal device, the first terminal device sends the data to the third terminal device based on the resource indicated by the scheduling information.

In addition, the first terminal device does not need to sense a resource, and does not need to obtain the resource for data transmission based on the resource obtained through sensing and the resource indicated by the scheduling information. The first terminal device may directly send data to the third terminal device by using the resource indicated by the scheduling information. Therefore, signaling overheads of the first terminal device are reduced.

In an example, the scheduling information indicates one resource set (or one resource), so that the first terminal device sends data to the third terminal device by using the resource set (or the resource). In another example, the scheduling information indicates a plurality of resource sets (or a plurality of resources), so that the first terminal device sends data to the third terminal device by using the plurality of resource sets (or the plurality of resources).

In an example, before step S275, the first terminal device sends sidelink control information to the third terminal device, where the sidelink control information indicates information, such as an MCS, used for data transmission. To be specific, before the first terminal device sends data to the third terminal device, the first terminal device needs to indicate necessary information, such as the MCS, used for data receiving. Then, the first terminal device notifies, by using the sidelink control information, the third terminal device of the necessary information used for data receiving.

The sidelink control information may further include an identifier of the first terminal device and an identifier of the third terminal device, so that the third terminal device can learn, by using the sidelink control information, that data in this case is sent by the first terminal device to the third terminal device.

In an example, the sidelink control information is physical layer sidelink control information, MAC layer sidelink control information, or RRC layer sidelink control information. For example, the sidelink control information is 1^{st} stage SCI, 2^{nd} stage SCI, or SCI.

S276a: The first terminal device sends a buffer status report message to the second terminal device based on the resource for data transmission, where the buffer status report message indicates a size of to-be-transmitted data.

S276b: The first terminal device sends data to the third terminal device based on the resource for data transmission.

In an example, a preset indicator field or a scrambled bit in the buffer status report message indicates the size of the to-be-transmitted data.

In an example, the buffer status report message is physical layer sidelink control information, MAC layer sidelink control information, or RRC layer sidelink control information.

For example, after step S264, if the resource indicated by the scheduling information is insufficient to carry the to-be-sent data of the first terminal device (in this case, the data that needs to be sent by the first terminal device to the third terminal device), the first terminal device further needs to request a resource from the second terminal device again.

In this embodiment, the first terminal device sends the BSR message to the second terminal device by using the resource indicated by the scheduling information, where the BSR information needs to indicate the size of the to-be-transmitted data of the first terminal device. Because the resource for data transmission is scheduled by the second terminal device, when the second terminal device receives the BSR information on the resource of a channel, the second terminal device may learn that the BSR information in this case is sent by the first terminal device.

In addition, to avoid wasting the resource indicated by the scheduling information, the first terminal device may further send some of the to-be-transmitted data to the second terminal device by using the resource indicated by the scheduling information. Further, there is remaining data in the to-be-transmitted data, and the remaining data is not sent to the third terminal device. Therefore, the BSR information indicates a size of the remaining data.

The BSR message includes an index of the size of the remaining data in a buffer, or the BSR message includes the size of the remaining data in the buffer. In other words, "the size of the remaining data" is the index of the size of the remaining data in the buffer, or is the size of the remaining data in the buffer.

In an example, the BSR information is a single piece of signaling. Alternatively, the buffer status report message is physical layer sidelink control information, MAC layer sidelink control information, or RRC layer sidelink control information. For descriptions of another structure of the "BSR information", refer to step S243 in FIG. 24. Details are not described again.

S277: The second terminal device determines the resource for data transmission.

For example, this step is performed after step S276a. In step S271, the second terminal device has obtained the channel state information, and the BSR message indicates the size of the to-be-transmitted data ("the remaining data" in this case). The second terminal device may determine, based on the channel state information and the BSR information, a size of a resource that needs to be occupied by the first terminal device to perform data transmission. Then, the second terminal device performs sensing at a granularity of the size, determines an unoccupied resource set or resource, and further determines an available resource set or resource. The second terminal device generates new scheduling information, where the new scheduling information indicates the unoccupied resource set or resource, and the unoccupied resource set or resource is "the resource for data transmission" of the first terminal device.

In another example, after the second terminal device receives the BSR information, because the BSR message indicates the size of the to-be-transmitted data ("the remaining data" in this case), the second terminal device may determine, based on the BSR information, a size of a resource that needs to be occupied by the first terminal device to perform data transmission. Then, the second terminal device performs sensing at a granularity of the size, determines an unoccupied resource set or resource, and further determines an available resource set or resource. The second terminal device generates new scheduling information, where the new scheduling information indicates the unoccupied resource set or resource, and the unoccupied resource set or resource is "the resource for data transmission" of the first terminal device.

The granularity of the resource size may be a subchannel, a resource block group, a resource block, or the like. The granularity of the resource size is not limited.

S278: The second terminal device sends new scheduling information to the first terminal device, where the new scheduling information indicates the resource used by the first terminal device to perform data transmission.

For example, this step is performed after step S277. For the scheduling information in this step, refer to step S245 shown in FIG. 24.

In this step, the resource for data transmission indicated by "the new scheduling information" may carry "the remaining data" that is not sent by the first terminal device.

S279: The first terminal device sends data to the third terminal device based on the resource for data transmission indicated by the scheduling information in step S278.

For example, because the resource for data transmission indicated by the scheduling information in step S278 is determined by the first terminal device based on the BSR information, the resource may carry "the remaining data" that is not sent by the first terminal device. The first terminal device may send "the remaining data" to the third terminal device by using the resource for data transmission indicated by the scheduling information in step S278.

In addition, the first terminal device does not need to sense a resource, and does not need to obtain the resource for data transmission based on the resource obtained through sensing and the resource indicated by the scheduling information. The first terminal device may directly send data to the third terminal device by using the resource indicated by the scheduling information in step S278. Therefore, signaling overheads of the first terminal device are reduced.

In an example, before step S279, the first terminal device sends the sidelink control information to the third terminal device, where the sidelink control information indicates the information, such as the MCS, used for data transmission. To be specific, before the first terminal device sends data to the third terminal device, the first terminal device needs to indicate the necessary information, such as the MCS, used for data receiving. Then, the first terminal device notifies, by using the sidelink control information, the third terminal device of the necessary information used for data receiving. The sidelink control information may further include an identifier of the first terminal device and an identifier of the third terminal device, so that the third terminal device can learn, by using the sidelink control information, that data in this case is sent by the first terminal device to the third terminal device.

Alternatively, because the first terminal device has sent the sidelink control information to the third terminal device before step S275, before the sending data in step S279, the first terminal device does not need to send the sidelink control information to the third terminal device again.

In this embodiment, the first terminal device is a data transmit end, the second terminal device is a data scheduling end, and the third terminal device is a data receive end. The second terminal device has a resource scheduling capability. In this embodiment, the second terminal device schedules a resource for the first terminal device. If the resource indicated by the scheduling information is sufficient to carry the to-be-transmitted data, the first terminal device sends the data to the second terminal device by using the resource indicated by the scheduling information. If the resource indicated by the scheduling information is insufficient to carry the to-be-transmitted data, the first terminal device sends the BSR information to the second terminal device by using the resource indicated by the scheduling information, to obtain a remaining resource. In addition, the first terminal device sends data to the third terminal device by using the resource indicated by the scheduling information. The first terminal device receives, again, the scheduling information sent by the first terminal device. The resource for data transmission indicated by the scheduling information is determined by the first terminal device based on the BSR information, so that the resource may carry "the remaining data" that is not sent by the first terminal device. The first terminal device may send "the remaining data" to the third terminal device by using the resource for data transmission indicated by the scheduling information. The following technical effects may also be achieved in the foregoing process: A resource indicated by the second terminal device may directly exclude a resource occupied by another hidden terminal. This may avoid a case in which different terminal devices send data by using a same resource, avoid signal collision and mutual interference in a data transmission process, and ensure successful data transmission of the different terminal devices. In addition, from a perspective of resource multiplexing, the resource may be appropriately used, and resource utilization efficiency may be improved.

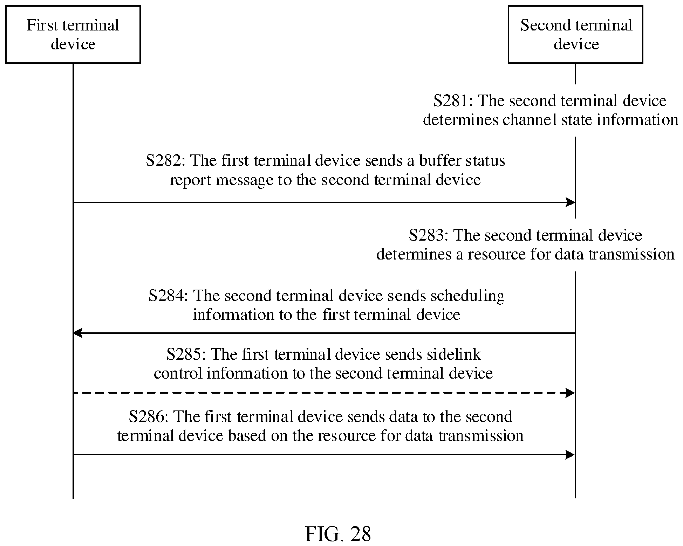

FIG. 28 is a signaling diagram of another device-to-device based resource determining method according to an embodiment of this application. As shown in FIG. 28, the method includes the following steps.

S281: A second terminal device determines channel state information.

For example, a first terminal device is a data transmit end, the second terminal device is a data receive end, and the second terminal device is a scheduling end. To be specific, the second terminal device has a capability of scheduling a resource for data transmission. In this embodiment, the second terminal device schedules a resource for the first terminal device.

For this step, refer to S241 shown in FIG. 24. Details are not described again.

S282: The first terminal device sends a buffer status report message to the second terminal device, where the buffer status report message indicates a size of to-be-transmitted data, and the buffer status report message further indicates to request the resource for data transmission.

For example, the BSR information indicates the size of the to-be-transmitted data, and indicates to request the resource for data transmission.

There are a plurality of indicator fields in the BSR information. One preset indicator field in the plurality of indicator fields may indicate to request the resource for data transmission, and another preset indicator field in the plurality of indicator fields may indicate the size of the to-be-transmitted data. A location of the preset indicator field in first information and a size of the preset indicator field are not limited. Alternatively, there are a plurality of bits in the BSR information. One preset bit in the plurality of bits may indicate to request the resource for data transmission, and another preset bit in the plurality of bits may indicate the size of the to-be-transmitted data. A location of the preset bit in the first information and a size of the preset indicator field are not limited.

In an example, the first terminal device sends the BSR information to the second terminal device, where the BSR information is a single piece of signaling.

In another example, the BSR information is physical layer sidelink control information. A preset indicator field or a preset bit in the physical layer sidelink control information indicates to request the resource for data transmission, and another preset indicator field or another preset bit in the physical layer sidelink control information indicates the size of the to-be-transmitted data. The physical layer sidelink control information may explicitly or implicitly perform indication. For example, the physical layer sidelink control information may be 1^{st} stage SCI, 2^{nd} stage SCI, or SCI.

In still another example, the BSR information is MAC layer sidelink control information. A preset indicator field or a preset bit in the MAC layer sidelink control information indicates to request the resource for data transmission, and another preset indicator field or another preset bit in the MAC layer sidelink control information indicates the size of the to-be-transmitted data. The MAC layer sidelink control information may explicitly or implicitly perform indication. For example, the MAC layer sidelink control information may be SL MAC CE information.

In yet another example, the BSR information is RRC layer sidelink control information. A preset indicator field or a preset bit in the RRC layer sidelink control information indicates to request the resource for data transmission, and another preset indicator field or another preset bit in the RRC layer sidelink control information indicates the size of the to-be-transmitted data. The RRC layer sidelink control information may explicitly or implicitly perform indication. For example, the RRC layer sidelink control information may be PC5 RRC information.

S283: The second terminal device determines the resource for data transmission.

For example, after receiving the BSR information, the second terminal device determines, based on an indication of the BSR information, the resource requested by the first terminal device for data transmission. Therefore, the second terminal device needs to return scheduling information to the first terminal device. However, before returning the scheduling information, the second terminal device needs to first determine the resource for data transmission.

For a manner of "determining the resource for data transmission", refer to step S244 in FIG. 24. Details are not described again.

S284: The second terminal device sends the scheduling information to the first terminal device, where the scheduling information indicates the resource used by the first terminal device to perform data transmission.

For example, for this step, refer to step S245 in FIG. 24. Details are not described again.

S285: The first terminal device sends sidelink control information to the second terminal device.

For example, for this step, refer to step S246 in FIG. 24. Details are not described again.

S286: The first terminal device sends data to the second terminal device based on the resource for data transmission.

For example, for this step, refer to step S247 in FIG. 24. Details are not described again.

In this embodiment, the first terminal device is a data transmit end, and the second terminal device is a data receive end. In addition, the second terminal device has a capability of scheduling the resource for data transmission, that is, the second terminal device is also a scheduling end.

In this embodiment, the first terminal device is a data transmit end, and the second terminal device is a data receive end. In addition, the second terminal device has a capability of scheduling the resource for data transmission, that is, the second terminal device is also a scheduling end. For a technical effect, refer to FIG. 24. Different from FIG. 24, the BSR message indicates the size of the to-be-transmitted data and indicates to request the resource for data transmission, so that signaling overheads of the first terminal device are reduced.

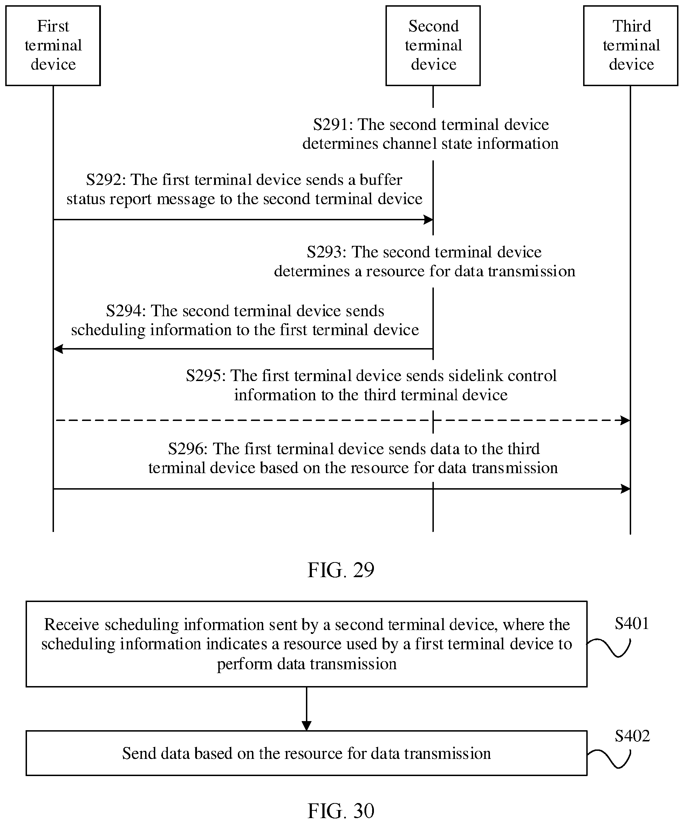

FIG. 29 is a signaling diagram of another device-to-device based resource determining method according to an embodiment of this application. As shown in FIG. 29, the method includes the following steps.

S291: A second terminal device determines channel state information.

For example, a first terminal device is a data transmit end, the second terminal device is a data scheduling end, and a third terminal device is a data receive end. To be specific, the second terminal device has a resource scheduling capability. In this embodiment, the second terminal device schedules a resource for the first terminal device.

For this step, refer to step S251 in FIG. 25. Details are not described again. Step S251 is an optional step.

S292: The first terminal device sends a buffer status report message to the second terminal device, where the buffer status report message indicates a size of to-be-transmitted data, and the buffer status report message further indicates to request a resource for data transmission.

For example, for this step, refer to step S282 shown in FIG. 28. Details are not described again.

S293: The second terminal device determines the resource for data transmission.

For example, for this step, refer to step S254 in FIG. 25. Details are not described again.

S294: The second terminal device sends scheduling information to the first terminal device, where the scheduling information indicates the resource used by the first terminal device to perform data transmission.

For example, for this step, refer to step S255 in FIG. 25. Details are not described again.

S295: The first terminal device sends sidelink control information to the third terminal device.

For example, for this step, refer to step S256 in FIG. 25. Details are not described again.

S296: The first terminal device sends data to the third terminal device based on the resource for data transmission.

For example, for this step, refer to step S257 in FIG. 25. Details are not described again.

In this embodiment, the first terminal device is a data transmit end, the second terminal device is a data scheduling end, and the third terminal device is a data receive end. The second terminal device has a resource scheduling capability. In this embodiment, the second terminal device schedules a resource for the first terminal device. For a technical effect, refer to FIG. 25. Different from FIG. 25, the BSR message indicates the size of the to-be-transmitted data and indicates to request the resource for data transmission, so that signaling overheads of the first terminal device are reduced.

FIG. 30 is a schematic flowchart of another device-to-device based resource determining method according to an embodiment of this application. As shown in FIG. 30, the method includes the following steps.

S401: Receive scheduling information sent by a second terminal device, where the scheduling information indicates a resource used by a first terminal device to perform data transmission.

For example, the method provided in this embodiment may be performed by the first terminal device. The second terminal device communicates with the first terminal device.

The first terminal device is a data transmit end, the second terminal device is a data receive end, and the second terminal device is a scheduling end. Alternatively, the first terminal device is a data transmit end, the second terminal device is not a data receive end, and the second terminal device is a scheduling end.

The "scheduling end" is a device that schedules (or referred to as "allocates") a resource or a resource set for another terminal device. The resource or the resource set scheduled for the another terminal device is used by the another terminal device to perform data transmission. It may be learned that the "scheduling end" has a resource scheduling capability.

In this embodiment, if the second terminal device is a scheduling end, the second terminal device schedules a resource or a resource set for the first terminal device, and the resource or the resource set scheduled for the first terminal device is used by the first terminal device to perform data transmission.

S402: Send data based on the resource for data transmission.

In an example, before step S401, the method may further include: sending a buffer status report message to the second terminal device, where the buffer status report message indicates a size of to-be-transmitted data.

In an example, the buffer status report message is physical layer sidelink control information, media access control layer sidelink control information, or radio resource control layer sidelink control information.

In an example, the buffer status report message further indicates to request the resource for data transmission.

In an example, before step S401, the method may further include: sending first information to the second terminal device, where the first information indicates to request the resource for data transmission.

In an example, the scheduling information specifically indicates a size and a location anchor of the resource for data transmission.

In an example, the scheduling information is physical layer sidelink control information, media access control layer sidelink control information, or radio resource control layer sidelink control information.

In an example, step S402 includes: sending data to the second terminal device or a third terminal device based on the resource for data transmission.

In this embodiment, for the steps in this embodiment, refer to processes in FIG. 22 to FIG. 29. Technical processes and technical effects are the same, and details are not described again.

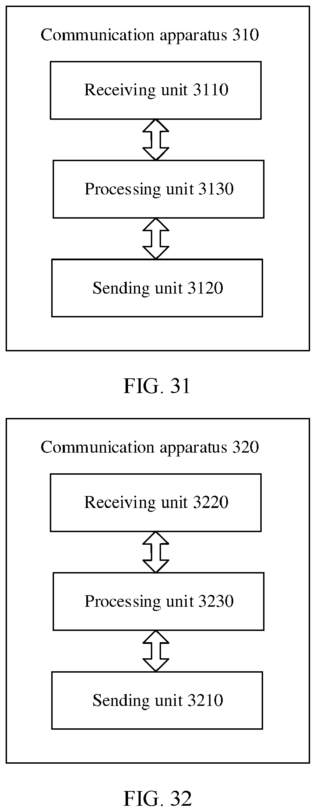

FIG. 31 is a schematic diagram of a structure of a communication apparatus according to an embodiment of this application. The communication apparatus may be a second terminal device, or may be a communication apparatus used inside the second terminal device, and may implement the related device-to-device based resource determining method shown in any one of FIG. 9, FIG. 12 to FIG. 16, and FIG. 17 to FIG. 20, and the foregoing optional embodiments. As shown in FIG. 31, the communication apparatus 310 includes a receiving unit 3110 and a sending unit 3120.

The receiving unit 3110 is configured to receive first information sent by a first terminal device, where the first information indicates the second terminal device to send assistance information. In this case, the receiving unit 3110 may perform step S101 shown in FIG. 9; the receiving unit 3110 may perform step S11 shown in FIG. 12; the receiving unit 3110 may perform step S23 shown in FIG. 13; the receiving unit 3110 may perform step S33 shown in FIG. 14; the receiving unit 3110 may perform step S43 shown in FIG. 15; or the receiving unit 3110 may perform step S53 shown in FIG. 16.

The sending unit 3120 is configured to send the assistance information to the first terminal device, where the assistance information is used to assist the first terminal device in selecting a resource for data transmission. In this case, the sending unit 3120 may perform step S102 shown in FIG. 9; the sending unit 3120 may perform step S12 shown in FIG. 12; the sending unit 3120 may perform step S26 shown in FIG. 13; the sending unit 3120 may perform step S36 shown in FIG. 14; the sending unit 3120 may perform step S46 shown in FIG. 15; the sending unit 3120 may perform step S56 shown in FIG. 16; the sending unit 3120 may perform step S65 shown in FIG. 17; the sending unit 3120 may perform step S75 shown in FIG. 18; the sending unit 3120 may perform step S85 shown in FIG. 19; or the sending unit 3120 may perform step S95 shown in FIG. 20.

In an example, a preset indicator field or a preset bit in the first information indicates the second terminal device to send the assistance information.

In an example, the first information specifically indicates the second terminal device to periodically send the assistance information.

In an example, a first indicator field or a first bit in the first information indicates a periodicity for sending the assistance information, and a second indicator field or a second bit in the first information indicates a time point for sending the assistance information.

In an example, the first information is physical layer sidelink control information, media access control layer sidelink control information, or radio resource control layer sidelink control information.

In an example, a first implementation of "a buffer status report message" is described below. The receiving unit 3110 is further configured to: before the sending unit 3120 sends the assistance information to the first terminal device, receive the buffer status report message sent by the first terminal device, where the buffer status report message indicates a size of to-be-transmitted data. In this case, the receiving unit 3110 may perform step S24 shown in FIG. 13; the receiving unit 3110 may perform step S34 shown in FIG. 14; the receiving unit 3110 may perform step S44 shown in FIG. 15; or the receiving unit 3110 may perform step S54 shown in FIG. 16.

A preset indicator field or a scrambled bit in the buffer status report message indicates the size of the to-be-transmitted data.

The buffer status report message is physical layer sidelink control information, media access control layer sidelink control information, or radio resource control layer sidelink control information.

In an example, a second implementation of "a buffer status report message" is described below. The first information further indicates the buffer status report message, and the buffer status report message indicates a size of to-be-transmitted data. Alternatively, the receiving unit 3110 may perform step S63 shown in FIG. 17; the receiving unit 3110 may perform step S73 shown in FIG. 18; the receiving unit 3110 may perform step S83 shown in FIG. 19; or the receiving unit 3110 may perform step S93 shown in FIG. 20.

In an example, the communication apparatus 310 further includes:
a processing unit 3130, configured to: before the sending unit 3120 sends the assistance information to the first terminal device, determine the assistance information based on the buffer status report message, where the assistance information indicates an unoccupied resource set (or resource). In this case, the processing unit 3130 may perform step S25 shown in FIG. 13; the processing unit 3130 may perform step S35 shown in FIG. 14; the processing unit 3130 may perform step S45 shown in FIG. 15; the processing unit 3130 may perform step S55 shown in FIG. 16; the processing unit 3130 may perform step S64 shown in FIG. 17; the processing unit 3130 may perform step S74 shown in FIG. 18; the processing unit 3130 may perform step S84 shown in FIG. 19; or the processing unit 3130 may perform step S94 shown in FIG. 20.

In an example, the processing unit 3130 is specifically configured to: determine a size of the resource for data transmission based on the buffer status report message; and determine the assistance information based on the size of the resource for data transmission.

In an example, the assistance information specifically indicates the size and a location anchor of the resource for data transmission.

In an example, the assistance information is physical layer sidelink control information, media access control layer sidelink control information, or radio resource control layer sidelink control information.

In an example, the receiving unit 3110 is further configured to: after the sending unit 3120 sends the assistance information to the first terminal device, receive data sent by the first terminal device. The receiving unit 3110 may perform step S29 shown in FIG. 13; the receiving unit 3110 may perform step S49 shown in FIG. 15; the receiving unit 3110 may perform step S68 shown in FIG. 17; or the receiving unit 3110 may perform step S88 shown in FIG. 19.

It should be understood that the communication apparatus in this embodiment of this application may be implemented by software, for example, a computer program or instructions having the foregoing functions, and the corresponding computer program or the corresponding instructions may be stored in a memory inside the terminal. A processor reads the corresponding computer program or the corresponding instructions in the memory to implement the foregoing functions. Alternatively, the communication apparatus in this embodiment of this application may be implemented by hardware. The receiving unit 3110 is a receiver, the processing unit 3130 is a processor, and the sending unit 3120 is a transmitter. The sending unit 3120 and the receiving unit 3110 of the terminal may be a same physical entity or different physical entities. When the units are a same physical entity, the units may be collectively referred to as a transceiver unit or a transceiver. Alternatively, the communication apparatus in this embodiment of this application may be implemented by a combination of a processor and a software module.

FIG. 32 is a schematic diagram of a structure of another communication apparatus according to an embodiment of this application. The communication apparatus may be a first terminal device, or may be a communication apparatus used inside the first terminal device, and may implement the related device-to-device based resource determining method shown in any one of FIG. 9, FIG. 12 to FIG. 16, and FIG. 17 to FIG. 21, and the foregoing optional embodiments. As shown in FIG. 32, the communication apparatus 320 includes a sending unit 3210, a receiving unit 3220, and a processing unit 3230.

The sending unit 3210 is configured to send first information to a second terminal device, where the first information indicates the second terminal device to send assistance information. In this case, the sending unit 3210 may perform step S101 shown in FIG. 9; the sending unit 3210 may perform step S11 shown in FIG. 12; the sending unit 3210 may perform step S23 shown in FIG. 13; the sending unit 3210 may perform step S33 shown in FIG. 14; the sending unit 3210 may perform step S43 shown in FIG. 15; the sending unit 3210 may perform step S53 shown in FIG. 16; or the sending unit 3210 may perform step S201 shown in FIG. 21.

The receiving unit 3220 is configured to receive the assistance information sent by the second terminal device, where the assistance information is used to assist the first terminal device in selecting a resource for data transmission. In this case, the receiving unit 3220 may perform step S102 shown in FIG. 9; the receiving unit 3220 may perform step S12 shown in FIG. 12; the receiving unit 3220 may perform step S26 shown in FIG. 13; the receiving unit 3220 may perform step S36 shown in FIG. 14; the receiving unit 3220 may perform step S46 shown in FIG. 15; the receiving unit 3220 may perform step S56 shown in FIG. 16; the receiving unit 3220 may perform step S65 shown in FIG. 17; the receiving unit 3220 may perform step S75 shown in FIG. 18; the receiving unit 3220 may perform step S85 shown in FIG. 19; the receiving unit 3220 may perform step S95 shown in FIG. 20; or the receiving unit 3220 may perform step S202 shown in FIG. 21.

The processing unit 3230 is configured to determine the resource for data transmission based on the assistance information. In this case, the processing unit 3230 may perform step S13 shown in FIG. 12; the processing unit 3230 may perform step S27 shown in FIG. 13; the processing unit 3230 may perform step S37 shown in FIG. 14; the processing unit 3230 may perform step S47 shown in FIG. 15; the processing unit 3230 may perform step S57 shown in FIG. 16; or the processing unit 3230 may perform step S203 shown in FIG. 21.

In an example, a preset indicator field or a preset bit in the first information indicates the second terminal device to send the assistance information.

In an example, the first information specifically indicates the second terminal device to periodically send the assistance information.

In an example, a first indicator field or a first bit in the first information indicates a periodicity for sending the assistance information, and a second indicator field or a second bit in the first information indicates a time point for sending the assistance information.

In an example, the first information is physical layer sidelink control information, media access control layer sidelink control information, or radio resource control layer sidelink control information.

In an example, a first implementation of "a buffer status report message" is described below. The sending unit 3210 is further configured to: before the receiving unit 3220 receives the assistance information sent by the second terminal device, send the buffer status report message to the second terminal device, where the buffer status report message indicates a size of to-be-transmitted data. In this case, the sending unit 3210 may perform step S24 shown in FIG. 13; the sending unit 3210 may perform step S34 shown in FIG. 14; the sending unit 3210 may perform step S44 shown in FIG. 15; or the sending unit 3210 may perform step S54 shown in FIG. 16.

A preset indicator field or a scrambled bit in the buffer status report message indicates the size of the to-be-transmitted data.

The buffer status report message is physical layer sidelink control information, media access control layer sidelink control information, or radio resource control layer sidelink control information.

In an example, a second implementation of "a buffer status report message" is described below. The first information further indicates the buffer status report message, and the buffer status report message indicates a size of to-be-transmitted data. In this case, the sending unit 3210 may perform step S63 shown in FIG. 17; the sending unit 3210 may perform step S73 shown in FIG. 18; the sending unit 3210 may perform step S83 shown in FIG. 19; or the sending unit 3210 may perform step S93 shown in FIG. 20.

In an example, the assistance information specifically indicates a size and a location anchor of the resource for data transmission.

In an example, the assistance information is physical layer sidelink control information, media access control layer sidelink control information, or radio resource control layer sidelink control information.

In an example, the processing unit 3230 is specifically configured to:
select, from a resource set indicated by the assistance information, a resource as the resource for data transmission, where the assistance information indicates an unoccupied resource set (or resource); or determine the resource for data transmission based on a resource set indicated by the assistance information and a resource set obtained through sensing. In this case, the processing unit 3230 may perform step S27 shown in FIG. 13; the processing unit 3230 may perform step S37 shown in FIG. 14; the processing unit 3230 may perform step S47 shown in FIG. 15; the processing unit 3230 may perform step S57 shown in FIG. 16; the processing unit 3230 may perform step S66 shown in FIG. 17; the processing unit 3230 may perform step S76 shown in FIG. 18; the processing unit 3230 may perform step S86 shown in FIG. 19; or the processing unit 3230 may perform step S96 shown in FIG. 20.

In an example, when being configured to select, from a resource set indicated by the assistance information, a resource as the resource for data transmission, the processing unit 3230 is specifically configured to:
randomly select, from the resource set indicated by the assistance information, a resource as the resource for data transmission; or select, based on a priority of a resource in the resource set indicated by the assistance information, a resource with a highest priority as the resource for data transmission. In this case, the processing unit 3230 may perform step S27 shown in FIG. 13; the processing unit 3230 may perform step S37 shown in FIG. 14; the processing unit 3230 may perform step S47 shown in FIG. 15; the processing unit 3230 may perform step S57 shown in FIG. 16; the processing unit 3230 may perform step S66 shown in FIG. 17; the processing unit 3230 may perform step S76 shown in FIG. 18; the processing unit 3230 may perform step S86 shown in FIG. 19; or the processing unit 3230 may perform step S96 shown in FIG. 20.

In an example, when being configured to determine the resource for data transmission based on a resource set indicated by the assistance information and a resource set obtained through sensing, the processing unit 3230 is specifically configured to: determine a shared resource between the resource set indicated by the assistance information and the resource set obtained through sensing; and select, from the shared resource, a resource as the resource for data transmission. In this case, the processing unit 3230 may perform step S27 shown in FIG. 13; the processing unit 3230 may perform step S37 shown in FIG. 14; the processing unit 3230 may perform step S47 shown in FIG. 15; the processing unit 3230 may perform step S57 shown in FIG. 16; the processing unit 3230 may perform step S66 shown in FIG. 17; the processing unit 3230 may perform step S76 shown in FIG. 18; the processing unit 3230 may perform step S86 shown in FIG. 19; or the processing unit 3230 may perform step S96 shown in FIG. 20.

In an example, the sending unit 3210 is further configured to: after the processing unit 3230 determines the resource for data transmission based on the assistance information, send data to the second terminal device or a third terminal device based on the resource for data transmission. In this case, the sending unit 3210 may perform step S29 shown in FIG. 13; the sending unit 3210 may perform step S39 shown in FIG. 14; the sending unit 3210 may perform step S49 shown in FIG. 15; the sending unit 3210 may perform step S59 shown in FIG. 16; the sending unit 3210 may perform step S68 shown in FIG. 17; the sending unit 3210 may perform step S78 shown in FIG. 18; the sending unit 3210 may perform step S88 shown in FIG. 19; or the sending unit 3210 may perform step S98 shown in FIG. 20.

It should be understood that the communication apparatus in this embodiment of this application may be implemented by software, for example, a computer program or instructions having the foregoing functions, and the corresponding computer program or the corresponding instructions may be stored in a memory inside the terminal. A processor reads the corresponding computer program or the corresponding instructions in the memory to implement the foregoing functions. Alternatively, the communication apparatus in this embodiment of this application may be implemented by hardware. The receiving unit 3220 is a receiver, the processing unit 3230 is a processor, and the sending unit 3210 is a transmitter. The sending unit 3210 and the receiving unit 3220 of the terminal may be a same physical entity or different physical entities. When the units are a same physical entity, the units may be collectively referred to as a transceiver unit or a transceiver. Alternatively, the communication apparatus in this embodiment of this application may be implemented by a combination of a processor and a software module.

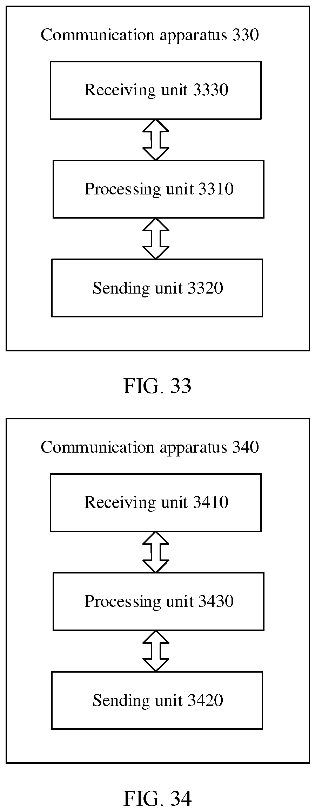

FIG. 33 is a schematic diagram of a structure of another communication apparatus according to an embodiment of this application. The communication apparatus may be a second terminal device, or may be a communication apparatus used inside the second terminal device, and may implement the related device-to-device based resource determining method shown in any one of FIG. 22 to FIG. 27, and the foregoing optional embodiments. As shown in FIG. 33, the communication apparatus 330 includes a processing unit 3310 and a sending unit 3320.

The processing unit 3310 is configured to determine a resource for data transmission. In this case, the processing unit 3310 may perform step S301 shown in FIG. 22; the processing unit 3310 may perform step S231 shown in FIG. 23; the processing unit 3310 may perform step S244 shown in FIG. 24; the processing unit 3310 may perform step S254 shown in FIG. 25; the processing unit 3310 may perform step S263 or step S267 shown in FIG. 26; the processing unit 3310 may perform step S273 or step S277 shown in FIG. 27; the processing unit 3310 may perform step S283 shown in FIG. 28; or the processing unit 3310 may perform step S293 shown in FIG. 29.

The sending unit 3320 is configured to send scheduling information to a first terminal device, where the scheduling information indicates the resource used by the first terminal device to perform data transmission. In this case, the sending unit 3320 may perform step S302 shown in FIG. 22; the sending unit 3320 may perform step S232 shown in FIG. 23; the sending unit 3320 may perform step S245 shown in FIG. 24; the sending unit 3320 may perform step S255 shown in FIG. 25; the sending unit 3320 may perform step S264 or step S268 shown in FIG. 26; the sending unit 3320 may perform step S274 or step S278 shown in FIG. 27; the sending unit 3320 may perform step S284 shown in FIG. 28; or the sending unit 3320 may perform step S294 shown in FIG. 29.

In an example, the communication apparatus 330 further includes:
a receiving unit 3330, configured to: before the processing unit 3310 determines the resource for data transmission, receive a buffer status report message sent by the first terminal device, where the buffer status report message indicates a size of to-be-transmitted data. In this case, the receiving unit 3330 may perform step S243 shown in FIG. 24; the receiving unit 3330 may perform step S253 shown in FIG. 25; the receiving unit 3330 may perform step S266 shown in FIG. 26; or the receiving unit 3330 may perform step S276a shown in FIG. 27.

In an example, the buffer status report message is physical layer sidelink control information, media access control layer sidelink control information, or radio resource control layer sidelink control information.

In an example, a first implementation of "requesting the resource for data transmission" is described below. The buffer status report message further indicates to request the resource for data transmission. In this case, the sending unit 3320 may perform step S282 shown in FIG. 28; or the sending unit 3320 may perform step S292 shown in FIG. 29.

In an example, a second implementation of "requesting the resource for data transmission" is described below. The receiving unit 3330 is configured to: before the processing unit 3310 determines the resource for data transmission, receive first information sent by the first terminal device, where the first information indicates to request the resource for data transmission. In this case, the receiving unit 3330 may perform step S242 shown in FIG. 24; the receiving unit 3330 may perform step S252 shown in FIG. 25; the receiving unit 3330 may perform step S262 shown in FIG. 26; or the receiving unit 3330 may perform step S272 shown in FIG. 27.

In an example, the processing unit 3310 is specifically configured to: determine the resource for data transmission based on the buffer status report message.

In an example, the scheduling information specifically indicates a size and a location anchor of the resource for data transmission.

In an example, the scheduling information is physical layer sidelink control information, media access control layer sidelink control information, or radio resource control layer sidelink control information.

In an example, the receiving unit 3330 is configured to: after the sending unit 3320 sends the scheduling information to the first terminal device, receive data sent by the first terminal device. In this case, the receiving unit 3330 may perform step S233 shown in FIG. 23; the receiving unit 3330 may perform step S247 shown in FIG. 24; the receiving unit 3330 may perform step S257 shown in FIG. 25; or the receiving unit 3330 may perform step S286 shown in FIG. 28.

It should be understood that the communication apparatus in this embodiment of this application may be implemented by software, for example, a computer program or instructions having the foregoing functions, and the corresponding computer program or the corresponding instructions may be stored in a memory inside the terminal. A processor reads the corresponding computer program or the corresponding instructions in the memory to implement the foregoing functions. Alternatively, the communication apparatus in this embodiment of this application may be implemented by hardware. The receiving unit 3330 is a receiver, the processing unit 3310 is a processor, and the sending unit 3320 is a transmitter. The sending unit 3320 and the receiving unit 3330 of the terminal may be a same physical entity or different physical entities. When the units are a same physical entity, the units may be collectively referred to as a transceiver unit or a transceiver. Alternatively, the communication apparatus in this embodiment of this application may be implemented by a combination of a processor and a software module.

FIG. 34 is a schematic diagram of a structure of still another communication apparatus according to an embodiment of this application. The communication apparatus may be a first terminal device, or may be a communication apparatus used inside the first terminal device, and may implement the related device-to-device based resource determining method shown in any one of FIG. 22 to FIG. 27, and the foregoing optional embodiments. As shown in FIG. 34, the communication apparatus 340 includes a receiving unit 3410 and a sending unit 3420.

The receiving unit 3410 is configured to receive scheduling information sent by a second terminal device, where the scheduling information indicates a resource used by the first terminal device to perform data transmission. In this case, the receiving unit 3410 may perform step S232 shown in FIG. 23; the receiving unit 3410 may perform step S245 shown in FIG. 24; the receiving unit 3410 may perform step S255 shown in FIG. 25; the receiving unit 3410 may perform step S264 or step S268 shown in FIG. 26; the receiving unit 3410 may perform step S274 or step S278 shown in FIG. 27; the receiving unit 3410 may perform step S284 shown in FIG. 28; the receiving unit 3410 may perform step S294 shown in FIG. 29; or the receiving unit 3410 may perform step S401 shown in FIG. 30.

The sending unit 3420 is configured to send data based on the resource for data transmission. In this case, the sending unit 3420 may perform step S233 shown in FIG. 23; the sending unit 3420 may perform step S247 shown in FIG. 24; the sending unit 3420 may perform step S257 shown in FIG. 25; the sending unit 3420 may perform step S265 or step S269 shown in FIG. 26; the sending unit 3420 may perform step S275, step S276b, or step S279 shown in FIG. 27; the sending unit 3420 may perform step S286 shown in FIG. 28; the sending unit 3420 may perform step S296 shown in FIG. 29; or the sending unit 3420 may perform step S402 shown in FIG. 30.

In an example, the communication apparatus 340 further includes a processing unit 3430. The processing unit 3430 is configured to execute code instructions.

In an example, the sending unit 3420 is further configured to: before the receiving unit receives the scheduling information sent by the second terminal device, send a buffer status report message to the second terminal device, where the buffer status report message indicates a size of to-be-transmitted data. In this case, the sending unit 3420 may perform step S243 shown in FIG. 24; the sending unit 3420 may perform step S253 shown in FIG. 25; the sending unit 3420 may perform step S266 shown in FIG. 26; or the sending unit 3420 may perform step S276a shown in FIG. 27.

In an example, the buffer status report message is physical layer sidelink control information, media access control layer sidelink control information, or radio resource control layer sidelink control information.

In an example, a first implementation of "requesting the resource for data transmission" is described below. The buffer status report message further indicates to request the resource for data transmission. In this case, the sending unit 3420 may perform step S282 shown in FIG. 28; or the sending unit 3420 may perform step S292 shown in FIG. 29.

In an example, a second implementation of "requesting the resource for data transmission" is described below. The sending unit 3420 is further configured to: before the receiving unit 3410 receives the scheduling information sent by the second terminal device, send first information to the second terminal device, where the first information indicates to request the resource for data transmission. In this case, the sending unit 3420 may perform step S242 shown in FIG. 24; the sending unit 3420 may perform step S252 shown in FIG. 25; the sending unit 3420 may perform step S262 shown in FIG. 26; or the sending unit 3420 may perform step S272 shown in FIG. 27.

In an example, the scheduling information specifically indicates a size and a location anchor of the resource for data transmission.

In an example, the scheduling information is physical layer sidelink control information, media access control layer sidelink control information, or radio resource control layer sidelink control information.

In an example, the sending unit 3420 is specifically configured to: send data to the second terminal device or a third terminal device based on the resource for data transmission. In this case, the sending unit 3420 may perform step S233 shown in FIG. 23; the sending unit 3420 may perform step S247 shown in FIG. 24; the sending unit 3420 may perform step S257 shown in FIG. 25; the sending unit 3420 may perform step S265 or step S269 shown in FIG. 26; the sending unit 3420 may perform step S275, step S276b, or step S279 shown in FIG. 27; the sending unit 3420 may perform step S286 shown in FIG. 28; or the sending unit 3420 may perform step S296 shown in FIG. 29.

It should be understood that the communication apparatus in this embodiment of this application may be implemented by software, for example, a computer program or instructions having the foregoing functions, and the corresponding computer program or the corresponding instructions may be stored in a memory inside the terminal. A processor reads the corresponding computer program or the corresponding instructions in the memory to implement the foregoing functions. Alternatively, the communication apparatus in this embodiment of this application may be implemented by hardware. The receiving unit 3410 is a receiver, the processing unit 3430 is a processor, and the sending unit 3420 is a transmitter. The sending unit 3420 and the receiving unit 3410 of the terminal may be a same physical entity or different physical entities. When the units are a same physical entity, the units may be collectively referred to as a transceiver unit or a transceiver. Alternatively, the communication apparatus in this embodiment of this application may be implemented by a combination of a processor and a software module.

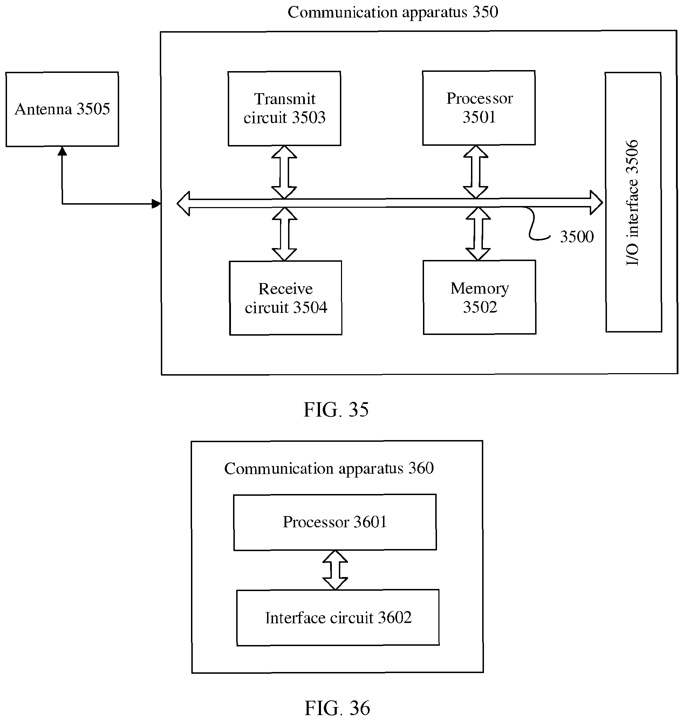

FIG. 35 is a schematic diagram of a structure of another communication apparatus according to an embodiment of this application. The communication apparatus may be the communication apparatus or the second terminal device in embodiments of this application, and may implement the device-to-device based resource determining methods shown in FIG. 9, FIG. 12 to FIG. 16, and FIG. 17 to FIG. 21, and the foregoing optional embodiments, or may implement the device-to-device based resource determining methods shown in FIG. 22 to FIG. 30, and the foregoing optional embodiments. As shown in FIG. 35, the communication apparatus 350 includes a processor 3501, and a memory 3502 coupled to the processor 3501. It should be understood that only one processor and one memory are shown in FIG. 35. The communication apparatus 3501 may include another quantity of processors and memories.

The memory 3502 is configured to store a computer program or computer instructions. The computer program or the instructions may be classified into two types based on functions. When one type of computer program or instruction is executed by the processor 3501, the communication apparatus 350 is enabled to implement the steps of the second terminal device in the device-to-device based resource determining method in embodiments of the present invention. This type of computer program or instruction may be denoted as a terminal function program. For example, the terminal function program may include program code for implementing the device-to-device based resource determining methods shown in FIG. 9, FIG. 12 to FIG. 16, and FIG. 17 to FIG. 20.

In addition, the communication apparatus 350 may further include a connection line 3500, a transmit circuit 3503, a receive circuit 3504, an antenna 3505, an input/output (input/output, I/O) interface 3506, and the like. The transmit circuit and the receive circuit may be coupled to the antenna, to connect to another communication device in a wireless manner. The transmit circuit and the receive circuit may alternatively be integrated into a transceiver, and the antenna may be a radio frequency antenna supporting a plurality of frequencies. The I/O interface allows a possibility of interacting with another communication device or a user. For example, for a terminal device, the I/O interface may be a screen, a keyboard, a microphone, a speaker, a universal serial bus (universal serial bus, USB) interface, or the like. Components in the communication apparatus 350 may be coupled together through various connection lines (for example, a bus system). In addition to a data bus, the bus system may further include a power bus, a control bus, a status signal bus, and the like. However, for clear description, various types of buses in this specification are marked as the bus system.

It may be understood that the processor 3501 and the memory 3502 may be implemented by using a processing unit and a storage unit instead, where the processing unit and the storage unit may be implemented by using code having a corresponding function. The storage unit is configured to store program instructions. The processing unit is configured to execute the program instructions in the storage unit, to implement the related device-to-device based resource determining method shown in any one of FIG. 9, FIG. 12 to FIG. 16, and FIG. 17 to FIG. 21, and the foregoing optional embodiments, or implement the related device-to-device based resource determining method shown in any one of FIG. 22 to FIG. 30, and the foregoing optional embodiments.

FIG. 36 is a schematic diagram of a structure of another communication apparatus according to an embodiment of this application. The communication apparatus may be the communication apparatus or the second terminal device in embodiments of this application, and may implement the device-to-device based resource determining methods shown in FIG. 9, FIG. 12 to FIG. 16, and FIG. 17 to FIG. 21, and the foregoing optional embodiments, or may implement the device-to-device based resource determining methods shown FIG. 22 to FIG. 30, and the foregoing optional embodiments. As shown in FIG. 36, the communication apparatus 360 includes a processor 3601, and an interface circuit 3602 coupled to the processor 3601. It should be understood that only one processor and one interface circuit are shown in FIG. 36. The communication apparatus 360 may include another quantity of processors and interface circuits.

The interface circuit 3602 is configured to communicate with another component of the second terminal device, for example, a memory or another processor. The processor 3601 is configured to perform signal interaction with another component through the interface circuit 3602. The interface circuit 3602 may be an input/output interface of the processor 3601. The interface circuit 3602 is configured to receive code instructions and transmit the code instructions to the processor 3601.

For example, the processor 3601 reads, through the interface circuit 3602, a computer program or instructions in a memory coupled to the processor 3601, and decodes and executes the computer program or the instructions. It should be understood that the computer program or the instructions may include the foregoing terminal function programs, or may include a function program of the communication apparatus used inside the second terminal device. When a corresponding function program is decoded and executed by the processor 3601, the second terminal device or the communication apparatus in the second terminal device may be enabled to implement the solution in the device-to-device based resource determining method provided in embodiments of this application.

Optionally, these terminal function programs are stored in a memory outside the communication apparatus 360. When the terminal function programs are decoded and executed by the processor 3601, the memory temporarily stores some or all content of the terminal function programs.

Optionally, these terminal function programs are stored in a memory in the communication apparatus 360. When the memory in the communication apparatus 360 stores the terminal function programs, the communication apparatus 360 may be disposed in the second terminal device in the device-to-device based resource determining method in embodiments of the present invention.

Optionally, some content of the terminal function programs is stored in the memory outside the communication apparatus 360, and other content of the terminal function programs is stored in the memory in the communication apparatus 360.

It should be understood that the communication apparatuses shown in any one of FIG. 30 to FIG. 36 may be combined with each other. For related design details of the communication apparatuses shown in any one of FIG. 30 to FIG. 36 and the optional embodiments, refer to each other. Alternatively, reference may be made to related design details of the device-to-device based resource determining method shown in any one of FIG. 9, FIG. 12 to FIG. 16, and FIG. 17 to FIG. 21 and the optional embodiments; or reference may be made to related design details of the device-to-device based resource determining method shown in any one of FIG. 22 to FIG. 30 and the optional embodiments. Details are not described herein again.

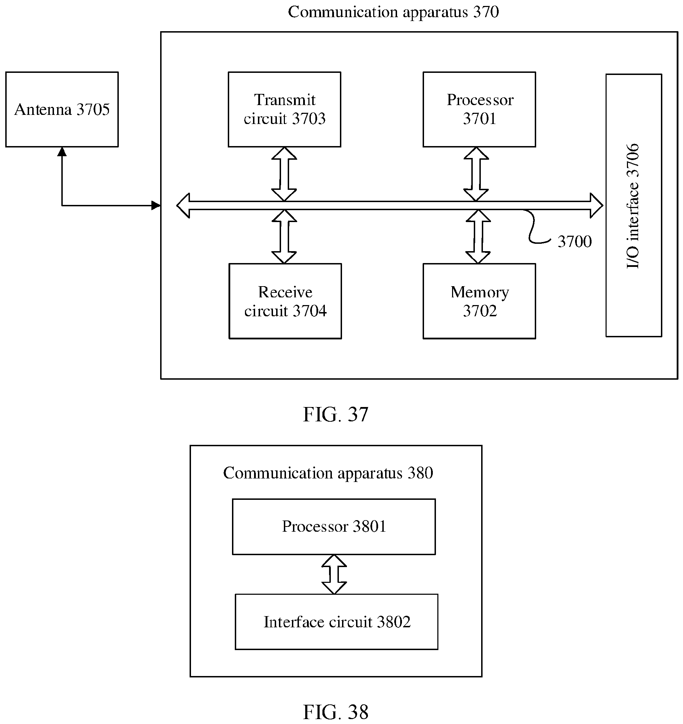

FIG. 37 is a schematic diagram of a structure of another communication apparatus according to an embodiment of this application. The communication apparatus may be the communication apparatus or the first terminal device in embodiments of this application, and may implement the device-to-device based resource determining methods shown in FIG. 9, FIG. 12 to FIG. 16, and FIG. 17 to FIG. 21, and the foregoing optional embodiments, or may implement the device-to-device based resource determining methods shown FIG. 22 to FIG. 30, and the foregoing optional embodiments. As shown in FIG. 37, the communication apparatus 370 includes a processor 3701, and a memory 3702 coupled to the processor 3701. It should be understood that only one processor and one memory are shown in FIG. 37. The communication apparatus 3701 may include another quantity of processors and memories.

The memory 3702 is configured to store a computer program or computer instructions. The computer program or the instructions may be classified into two types based on functions. When one type of computer program or instruction is executed by the processor 3701, the communication apparatus 370 is enabled to implement the steps of the first terminal device in the device-to-device based resource determining method in embodiments of the present invention. This type of computer program or instruction may be denoted as a terminal function program. For example, the terminal function program may include program code for implementing the device-to-device based resource determining methods shown in FIG. 9 and FIG. 12 to FIG. 30.

In addition, the communication apparatus 370 may further include a connection line 3700, a transmit circuit 3703, a receive circuit 3704, an antenna 3705, an input/output (input/output, I/O) interface 3706, and the like. The transmit circuit and the receive circuit may be coupled to the antenna, to connect to another communication device in a wireless manner. The transmit circuit and the receive circuit may alternatively be integrated into a transceiver, and the antenna may be a radio frequency antenna supporting a plurality of frequencies. The I/O interface allows a possibility of interacting with another communication device or a user. For example, for a terminal device, the I/O interface may be a screen, a keyboard, a microphone, a speaker, a universal serial bus (universal serial bus, USB) interface, or the like. Components in the communication apparatus 370 may be coupled together through various connection lines (for example, a bus system). In addition to a data bus, the bus system may further include a power bus, a control bus, a status signal bus, and the like. However, for clear description, various types of buses in this specification are marked as the bus system.

It may be understood that the processor 3701 and the memory 3702 may be implemented by using a processing unit and a storage unit instead, where the processing unit and the storage unit may be implemented by using code having a corresponding function. The storage unit is configured to store program instructions. The processing unit is configured to execute the program instructions in the storage unit, to implement the related device-to-device based resource determining method shown in any one of FIG. 9, FIG. 12 to FIG. 16, and FIG. 17 to FIG. 21, and the foregoing optional embodiments, or implement the related device-to-device based resource determining method shown in any one of FIG. 22 to FIG. 30, and the foregoing optional embodiments.

FIG. 38 is a schematic diagram of a structure of still another communication apparatus according to an embodiment of this application. The communication apparatus may be the communication apparatus or the first terminal device in embodiments of this application, and may implement the device-to-device based resource determining methods shown in FIG. 9, FIG. 12 to FIG. 16, and FIG. 17 to FIG. 21, and the foregoing optional embodiments, or may implement the device-to-device based resource determining methods shown in FIG. 22 to FIG. 30, and the foregoing optional embodiments. As shown in FIG. 38, the communication apparatus 380 includes a processor 3801, and an interface circuit 3802 coupled to the processor 3801. It should be understood that only one processor and one interface circuit are shown in FIG. 38. The communication apparatus 380 may include another quantity of processors and interface circuits.

The interface circuit 3802 is configured to communicate with another component of the first terminal device, for example, a memory or another processor. The processor 3801 is configured to perform signal interaction with another component through the interface circuit 3802. The interface circuit 3802 may be an input/output interface of the processor 3801. The interface circuit 3802 is configured to receive code instructions and transmit the code instructions to the processor 3801.

For example, the processor 3801 reads, through the interface circuit 3802, a computer program or instructions in a memory coupled to the processor 3801, and decodes and executes the computer program or the instructions. It should be understood that the computer program or the instructions may include the foregoing terminal function programs, or may include a function program of the communication apparatus used in the first terminal device. When a corresponding function program is decoded and executed by the processor 3801, the first terminal device or the communication apparatus in the first terminal device may be enabled to implement the solution in the device-to-device based resource determining method provided in embodiments of this application.

Optionally, these terminal function programs are stored in a memory outside the communication apparatus 380. When the terminal function programs are decoded and executed by the processor 3801, the memory temporarily stores some or all content of the terminal function programs.

Optionally, these terminal function programs are stored in a memory in the communication apparatus 380. When the memory in the communication apparatus 380 stores the terminal function programs, the communication apparatus 380 may be disposed in the first terminal device in the device-to-device based resource determining method in embodiments of the present invention.

Optionally, some content of the terminal function programs is stored in the memory outside the communication apparatus 380, and other content of the terminal function programs is stored in the memory in the communication apparatus 380.

It should be understood that the communication apparatuses shown in any one of FIG. 30 to FIG. 38 may be combined with each other. For related design details of the communication apparatuses shown in any one of FIG. 30 to FIG. 38 and the optional embodiments, refer to each other. Alternatively, reference may be made to related design details of the device-to-device based resource determining method shown in any one of FIG. 9, FIG. 12 to FIG. 16, and FIG. 17 to FIG. 21 and the optional embodiments; or reference may be made to related design details of the device-to-device based resource determining method shown in any one of FIG. 22 to FIG. 30 and the optional embodiments. Details are not described herein again.

An embodiment of this application provides a communication system. The communication system includes any communication apparatus provided in FIG. 31 and FIG. 32 and any communication apparatus provided in FIG. 33 and FIG. 34. Alternatively, the communication system includes any communication apparatus provided in FIG. 35 and FIG. 36 and any communication apparatus provided in FIG. 37 and FIG. 38.

An embodiment of this application provides a computer-readable storage medium. The computer-readable storage medium stores program code. When the program code is executed by a processor of a communication apparatus, the device-to-device based resource determining method provided in any one of FIG. 9 and FIG. 12 to FIG. 21 is implemented, or the device-to-device based resource determining method provided in any one of FIG. 22 to FIG. 30 is implemented.

An embodiment of this application provides a computer program product. When program code included in the computer program product is executed by a processor in a terminal, the device-to-device based resource determining method provided in any one of FIG. 9 and FIG. 12 to FIG. 21 is implemented, or the device-to-device based resource determining method provided in any one of FIG. 22 to FIG. 30 is implemented.

In embodiments and the accompanying drawings, the terms "first", "second", "third", "fourth", and the like are intended to distinguish between similar objects, but do not necessarily indicate a specific order or sequence. In addition, the terms "include", "have", and any other variants thereof are intended to indicate non-exclusive inclusions, for example, including a series of steps or units. The method, system, product, or device is not limited to the steps or units that are literally listed, but may include other steps or units that are not literally listed or that are inherent to these processes, methods, products, or devices.

It should be understood that in this application, "at least one" refers to one or more, and "a plurality of" refers to two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" usually indicates an "or" relationship between the associated objects. "At least item (piece) of the following" or a similar expression thereof means any combination of these items, including a single item (piece) or any combination of plural items (pieces). For example, at least one of a, b, or c may indicate a, b, c, "a and b", "a and c", "b and c", or "a, b, and c", where a, b, and c may be singular or plural.

It should be understood that sequence numbers of the foregoing processes do not mean execution sequences in this application. The execution sequences of the processes should be determined according to functions and internal logic of the processes, and should not be construed as any limitation on the implementation processes of embodiments of this application. The term "coupling" mentioned in this application is used for indicating interworking or interaction between different components, and may include a direct connection or an indirect connection performed by using another component.

All or some of the foregoing embodiments of this application may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, or an optical fiber) or wireless (for example, infrared, radio, or microwave) manner. The computer-readable storage medium may be any usable medium accessible by a computer, or a data storage device, such as a server or a data center, integrating one or more usable media. The usable medium may be a magnetic medium, for example, a floppy disk, a hard disk, or a magnetic tape; or may be an optical medium, for example, a DVD; or may be a semiconductor medium, for example, a solid-state drive (Solid-State Drive, SSD).

In embodiments of this application, the memory is a device or a circuit that has a data or information storage capability, and may provide instructions and data for the processor. The memory includes a read-only memory (ROM, Read-Only Memory), a random access memory (RAM, Random Access Memory), a non-volatile random access memory (NVRAM), a programmable read-only memory, an electrically erasable programmable memory, a register, or the like.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A device-to-device based resource determining method, wherein the method comprises:
receiving first information sent by a first terminal device, wherein the first information indicates a second terminal device to send assistance information; and
sending the assistance information to the first terminal device, wherein the assistance information is used to assist the first terminal device in selecting a resource for data transmission.

2. The method according to claim 1, wherein a preset indicator field or a preset bit in the first information indicates the second terminal device to send the assistance information.

3. The method according to claim 1, wherein the first information specifically indicates the second terminal device to periodically send the assistance information.

4. The method according to claim 3, wherein a first indicator field or a first bit in the first information indicates a periodicity for sending the assistance information, and a second indicator field or a second bit in the first information indicates a time point for sending the assistance information.

5. The method according to any one of claims 1 to 4, wherein the first information is physical layer sidelink control information, media access control layer sidelink control information, or radio resource control layer sidelink control information.

6. The method according to any one of claims 1 to 5, wherein before the sending the assistance information to the first terminal device, the method further comprises:
receiving a buffer status report message sent by the first terminal device, wherein the buffer status report message indicates a size of to-be-transmitted data.

7. The method according to claim 6, wherein a preset indicator field or a scrambled bit in the buffer status report message indicates the size of the to-be-transmitted data.

8. The method according to claim 6 or 7, wherein the buffer status report message is physical layer sidelink control information, media access control layer sidelink control information, or radio resource control layer sidelink control information.

9. The method according to any one of claims 1 to 5, wherein the first information further indicates a buffer status report message, and the buffer status report message indicates a size of to-be-transmitted data.

10. The method according to any one of claims 6 to 9, wherein before the sending the assistance information to the first terminal device, the method further comprises:
determining the assistance information based on the buffer status report message, wherein the assistance information indicates an unoccupied resource set.

11. The method according to claim 10, wherein the determining the assistance information based on the buffer status report message comprises:
determining a size of the resource for data transmission based on the buffer status report message; and
determining the assistance information based on the size of the resource for data transmission.

12. The method according to any one of claims 1 to 11, wherein the assistance information specifically indicates the size and a location anchor of the resource for data transmission.

13. The method according to any one of claims 1 to 12, wherein the assistance information is physical layer sidelink control information, media access control layer sidelink control information, or radio resource control layer sidelink control information.

14. The method according to any one of claims 1 to 13, wherein after the sending the assistance information to the first terminal device, the method further comprises:
receiving data sent by the first terminal device.

15. A device-to-device based resource determining method, wherein the method comprises:
sending first information to a second terminal device, wherein the first information indicates the second terminal device to send assistance information;
receiving the assistance information sent by the second terminal device, wherein the assistance information is used to assist a first terminal device in selecting a resource for data transmission; and
determining the resource for data transmission based on the assistance information.

16. The method according to claim 15, wherein a preset indicator field or a preset bit in the first information indicates the second terminal device to send the assistance information.

17. The method according to claim 15, wherein the first information specifically indicates the second terminal device to periodically send the assistance information.

18. The method according to claim 17, wherein a first indicator field or a first bit in the first information indicates a periodicity for sending the assistance information, and a second indicator field or a second bit in the first information indicates a time point for sending the assistance information.

19. The method according to any one of claims 15 to 18, wherein the first information is physical layer sidelink control information, media access control layer sidelink control information, or radio resource control layer sidelink control information.

20. The method according to any one of claims 15 to 19, wherein before the receiving the assistance information sent by the second terminal device, the method further comprises:
sending a buffer status report message to the second terminal device, wherein the buffer status report message indicates a size of to-be-transmitted data.

21. The method according to claim 20, wherein a preset indicator field or a scrambled bit in the buffer status report message indicates the size of the to-be-transmitted data.

22. The method according to claim 20 or 21, wherein the buffer status report message is physical layer sidelink control information, media access control layer sidelink control information, or radio resource control layer sidelink control information.

23. The method according to any one of claims 15 to 19, wherein the first information further indicates a buffer status report message, and the buffer status report message indicates a size of to-be-transmitted data.

24. The method according to any one of claims 15 to 23, wherein the assistance information specifically indicates a size and a location anchor of the resource for data transmission.

25. The method according to any one of claims 15 to 24, wherein the assistance information is physical layer sidelink control information, media access control layer sidelink control information, or radio resource control layer sidelink control information.

26. The method according to any one of claims 15 to 25, wherein the determining the resource for data transmission based on the assistance information comprises:
selecting, from a resource set indicated by the assistance information, a resource as the resource for data transmission, wherein the assistance information indicates an unoccupied resource set; or
determining the resource for data transmission based on a resource set indicated by the assistance information and a resource set obtained through sensing.

27. The method according to claim 26, wherein the selecting, from a resource set indicated by the assistance information, a resource as the resource for data transmission comprises:
randomly selecting, from the resource set indicated by the assistance information, a resource as the resource for data transmission; or
selecting, based on a priority of a resource in the resource set indicated by the assistance information, a resource with a highest priority as the resource for data transmission.

28. The method according to claim 26, wherein the determining the resource for data transmission based on a resource set indicated by the assistance information and a resource set obtained through sensing comprises:
determining a shared resource between the resource set indicated by the assistance information and the resource set obtained through sensing; and
selecting, from the shared resource, a resource as the resource for data transmission.

29. The method according to any one of claims 15 to 28, wherein after the determining the resource for data transmission based on the assistance information, the method further comprises:
sending data to the second terminal device or a third terminal device based on the resource for data transmission.

30. A device-to-device based resource determining method, wherein the method comprises:
determining a resource for data transmission; and
sending scheduling information to a first terminal device, wherein the scheduling information indicates the resource used by the first terminal device to perform data transmission.

31. The method according to claim 30, wherein before the determining a resource for data transmission, the method further comprises:
receiving a buffer status report message sent by the first terminal device, wherein the buffer status report message indicates a size of to-be-transmitted data.

32. The method according to claim 31, wherein the buffer status report message is physical layer sidelink control information, media access control layer sidelink control information, or radio resource control layer sidelink control information.

33. The method according to claim 31 or 32, wherein the buffer status report message further indicates to request the resource for data transmission.

34. The method according to any one of claims 30 to 33, wherein before the determining a resource for data transmission, the method further comprises:
receiving first information sent by the first terminal device, wherein the first information indicates to request the resource for data transmission.

35. The method according to any one of claims 31 to 33, wherein the determining a resource for data transmission comprises:
determining the resource for data transmission based on the buffer status report message.

36. The method according to any one of claims 30 to 35, wherein the scheduling information specifically indicates a size and a location anchor of the resource for data transmission.

37. The method according to any one of claims 30 to 36, wherein the scheduling information is physical layer sidelink control information, media access control layer sidelink control information, or radio resource control layer sidelink control information.

38. The method according to any one of claims 30 to 37, wherein after the sending scheduling information to a first terminal device, the method further comprises:
receiving data sent by the first terminal device.

39. A device-to-device based resource determining method, wherein the method comprises:
receiving scheduling information sent by a second terminal device, wherein the scheduling information indicates a resource used by a first terminal device to perform data transmission; and
sending data based on the resource for data transmission.

40. The method according to claim 39, wherein before the receiving scheduling information sent by a second terminal device, the method further comprises:
sending a buffer status report message to the second terminal device, wherein the buffer status report message indicates a size of to-be-transmitted data.

41. The method according to claim 40, wherein the buffer status report message is physical layer sidelink control information, media access control layer sidelink control information, or radio resource control layer sidelink control information.

42. The method according to claim 40 or 41, wherein the buffer status report message further indicates to request the resource for data transmission.

43. The method according to any one of claims 39 to 41, wherein before the receiving scheduling information sent by a second terminal device, the method further comprises:
sending first information to the second terminal device, wherein the first information indicates to request the resource for data transmission.

44. The method according to any one of claims 39 to 43, wherein the scheduling information specifically indicates a size and a location anchor of the resource for data transmission.

45. The method according to any one of claims 39 to 44, wherein the scheduling information is physical layer sidelink control information, media access control layer sidelink control information, or radio resource control layer sidelink control information.

46. The method according to any one of claims 39 to 45, wherein the sending data based on the resource for data transmission comprises:
sending the data to the second terminal device or a third terminal device based on the resource for data transmission.

47. A communication apparatus, wherein the communication apparatus comprises:
a receiving unit, configured to receive first information sent by a first terminal device, wherein the first information indicates a second terminal device to send assistance information; and
a sending unit, configured to send the assistance information to the first terminal device, wherein the assistance information is used to assist the first terminal device in selecting a resource for data transmission.

48. The communication apparatus according to claim 47, wherein a preset indicator field or a preset bit in the first information indicates the second terminal device to send the assistance information.

49. The communication apparatus according to claim 47, wherein the first information specifically indicates the second terminal device to periodically send the assistance information.

50. The communication apparatus according to claim 49, wherein a first indicator field or a first bit in the first information indicates a periodicity for sending the assistance information, and a second indicator field or a second bit in the first information indicates a time point for sending the assistance information.

51. The communication apparatus according to any one of claims 47 to 50, wherein the first information is physical layer sidelink control information, media access control layer sidelink control information, or radio resource control layer sidelink control information.

52. The communication apparatus according to any one of claims 47 to 51, wherein the receiving unit is further configured to:
before the sending unit sends the assistance information to the first terminal device, receive a buffer status report message sent by the first terminal device, wherein the buffer status report message indicates a size of to-be-transmitted data.

53. The communication apparatus according to claim 52, wherein a preset indicator field or a scrambled bit in the buffer status report message indicates the size of the to-be-transmitted data.

54. The communication apparatus according to claim 52 or 53, wherein the buffer status report message is physical layer sidelink control information, media access control layer sidelink control information, or radio resource control layer sidelink control information.

55. The communication apparatus according to any one of claims 47 to 51, wherein the first information further indicates a buffer status report message, and the buffer status report message indicates a size of to-be-transmitted data.

56. The communication apparatus according to any one of claims 52 to 55, wherein the communication apparatus further comprises:
a processing unit, configured to: before the sending unit sends the assistance information to the first terminal device, determine the assistance information based on the buffer status report message, wherein the assistance information indicates an unoccupied resource set.

57. The communication apparatus according to claim 56, wherein the processing unit is specifically configured to:
determine a size of the resource for data transmission based on the buffer status report message; and
determine the assistance information based on the size of the resource for data transmission.

58. The communication apparatus according to any one of claims 47 to 57, wherein the assistance information specifically indicates the size and a location anchor of the resource for data transmission.

59. The communication apparatus according to any one of claims 47 to 58, wherein the assistance information is physical layer sidelink control information, media access control layer sidelink control information, or radio resource control layer sidelink control information.

60. The communication apparatus according to any one of claims 47 to 59, wherein the receiving unit is further configured to: after the sending unit sends the assistance information to the first terminal device, receive data sent by the first terminal device.

61. A communication apparatus, wherein the communication apparatus comprises:
a sending unit, configured to send first information to a second terminal device, wherein the first information indicates the second terminal device to send assistance information;
a receiving unit, configured to receive the assistance information sent by the second terminal device, wherein the assistance information is used to assist a first terminal device in selecting a resource for data transmission; and
a processing unit, configured to determine the resource for data transmission based on the assistance information.

62. The communication apparatus according to claim 61, wherein a preset indicator field or a preset bit in the first information indicates the second terminal device to send the assistance information.

63. The communication apparatus according to claim 61, wherein the first information specifically indicates the second terminal device to periodically send the assistance information.

64. The communication apparatus according to claim 62, wherein a first indicator field or a first bit in the first information indicates a periodicity for sending the assistance information, and a second indicator field or a second bit in the first information indicates a time point for sending the assistance information.

65. The communication apparatus according to any one of claims 61 to 64, wherein the first information is physical layer sidelink control information, media access control layer sidelink control information, or radio resource control layer sidelink control information.

66. The communication apparatus according to any one of claims 61 to 65, wherein the sending unit is further configured to: before the receiving unit receives the assistance information sent by the second terminal device, send a buffer status report message to the second terminal device, wherein the buffer status report message indicates a size of to-be-transmitted data.

67. The communication apparatus according to claim 66, wherein a preset indicator field or a scrambled bit in the buffer status report message indicates the size of the to-be-transmitted data.

68. The communication apparatus according to claim 66 or 67, wherein the buffer status report message is physical layer sidelink control information, media access control layer sidelink control information, or radio resource control layer sidelink control information.

69. The communication apparatus according to any one of claims 61 to 65, wherein the first information further indicates a buffer status report message, and the buffer status report message indicates a size of to-be-transmitted data.

70. The communication apparatus according to any one of claims 61 to 69, wherein the assistance information specifically indicates a size and a location anchor of the resource for data transmission.

71. The communication apparatus according to any one of claims 61 to 70, wherein the assistance information is physical layer sidelink control information, media access control layer sidelink control information, or radio resource control layer sidelink control information.

72. The communication apparatus according to any one of claims 61 to 71, wherein the processing unit is specifically configured to:
select, from a resource set indicated by the assistance information, a resource as the resource for data transmission, wherein the assistance information indicates an unoccupied resource set; or
determine the resource for data transmission based on a resource set indicated by the assistance information and a resource set obtained through sensing.

73. The communication apparatus according to claim 72, wherein when being configured to select, from a resource set indicated by the assistance information, a resource as the resource for data transmission, the processing unit is specifically configured to:
randomly select, from the resource set indicated by the assistance information, a resource as the resource for data transmission; or
select, based on a priority of a resource in the resource set indicated by the assistance information, a resource with a highest priority as the resource for data transmission.

74. The communication apparatus according to claim 72, wherein when being configured to determine the resource for data transmission based on a resource set indicated by the assistance information and a resource set obtained through sensing, the processing unit is specifically configured to:
determine a shared resource between the resource set indicated by the assistance information and the resource set obtained through sensing; and
select, from the shared resource, a resource as the resource for data transmission.

75. The communication apparatus according to any one of claims 61 to 74, wherein the sending unit is further configured to: after the processing unit determines the resource for data transmission based on the assistance information, send data to the second terminal device or a third terminal device based on the resource for data transmission.

76. A communication apparatus, wherein the communication apparatus comprises:
a processing unit, configured to determine a resource for data transmission; and
a sending unit, configured to send scheduling information to a first terminal device, wherein the scheduling information indicates the resource used by the first terminal device to perform data transmission.

77. The communication apparatus according to claim 76, wherein the communication apparatus further comprises:
a receiving unit, configured to: before the processing unit determines the resource for data transmission, receive a buffer status report message sent by the first terminal device, wherein the buffer status report message indicates a size of to-be-transmitted data.

78. The communication apparatus according to claim 77, wherein the buffer status report message is physical layer sidelink control information, media access control layer sidelink control information, or radio resource control layer sidelink control information.

79. The communication apparatus according to claim 77 or 78, wherein the buffer status report message further indicates to request the resource for data transmission.

80. The communication apparatus according to any one of claims 76 to 79, wherein the communication apparatus further comprises:
the receiving unit, configured to: before the processing unit determines the resource for data transmission, receive first information sent by the first terminal device, wherein the first information indicates to request the resource for data transmission.

81. The communication apparatus according to any one of claims 77 to 79, wherein the processing unit is specifically configured to:
determine the resource for data transmission based on the buffer status report message.

82. The communication apparatus according to any one of claims 76 to 81, wherein the scheduling information specifically indicates a size and a location anchor of the resource for data transmission.

83. The communication apparatus according to any one of claims 76 to 82, wherein the scheduling information is physical layer sidelink control information, media access control layer sidelink control information, or radio resource control layer sidelink control information.

84. The communication apparatus according to any one of claims 76 to 83, wherein the communication apparatus further comprises:
the receiving unit, configured to: after the sending unit sends the scheduling information to the first terminal device, receive data sent by the first terminal device.

85. A communication apparatus, wherein the communication apparatus comprises:
a receiving unit, configured to receive scheduling information sent by a second terminal device, wherein the scheduling information indicates a resource used by a first terminal device to perform data transmission; and
a sending unit, configured to send data based on the resource for data transmission.

86. The communication apparatus according to claim 85, wherein the sending unit is further configured to: before the receiving unit receives the scheduling information sent by the second terminal device, send a buffer status report message to the second terminal device, wherein the buffer status report message indicates a size of to-be-transmitted data.

87. The communication apparatus according to claim 86, wherein the buffer status report message is physical layer sidelink control information, media access control layer sidelink control information, or radio resource control layer sidelink control information.

88. The communication apparatus according to claim 86 or 87, wherein the buffer status report message further indicates to request the resource for data transmission.

89. The communication apparatus according to any one of claims 85 to 87, wherein the sending unit is further configured to: before the receiving unit receives the scheduling information sent by the second terminal device, send first information to the second terminal device, wherein the first information indicates to request the resource for data transmission.

90. The communication apparatus according to any one of claims 85 to 89, wherein the scheduling information specifically indicates a size and a location anchor of the resource for data transmission.

91. The communication apparatus according to any one of claims 85 to 90, wherein the scheduling information is physical layer sidelink control information, media access control layer sidelink control information, or radio resource control layer sidelink control information.

92. The communication apparatus according to any one of claims 85 to 91, wherein the sending unit is specifically configured to:
send data to the second terminal device or a third terminal device based on the resource for data transmission.

93. A communication apparatus, wherein the apparatus comprises a processor and a memory, the memory stores a computer program, and the processor executes the computer program stored in the memory, to enable the apparatus to perform the method according to any one of claims 1 to 14, perform the method according to any one of claims 15 to 29, perform the method according to any one of claims 30 to 38, or perform the method according to any one of claims 39 to 46.

94. A communication apparatus, comprising a processor and an interface circuit, wherein
the interface circuit is configured to: receive code instructions and transmit the code instructions to the processor; and
the processor is configured to run the code instructions, to perform the method according to any one of claims 1 to 14, perform the method according to any one of claims 15 to 29, perform the method according to any one of claims 30 to 38, or perform the method according to any one of claims 39 to 46.

95. A computer-readable storage medium, configured to store instructions, wherein when the instructions are executed, the method according to any one of claims 1 to 14, the method according to any one of claims 15 to 29, the method according to any one of claims 30 to 38, or the method according to any one of claims 39 to 46 is implemented.
